(19) **Europäisches Patentamt / European Patent Office / Office européen des brevets**

(11) **EP 4 580 001 A1**

(12) **EUROPEAN PATENT APPLICATION**
published in accordance with Art. 153(4) EPC

(43) Date of publication:
**02.07.2025 Bulletin 2025/27**

(21) Application number: 23857171.5

(22) Date of filing: 07.08.2023

(51) International Patent Classification (IPC):
*H02J 50/80* (2016.01)    *H02J 7/00* (2006.01)
*H02J 50/12* (2016.01)    *H02J 50/60* (2016.01)

(52) Cooperative Patent Classification (CPC):
H02J 7/00; H02J 50/12; H02J 50/60; H02J 50/80

(86) International application number:
**PCT/JP2023/028744**

(87) International publication number:
**WO 2024/043057 (29.02.2024 Gazette 2024/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.08.2022   JP 2022132613**

(71) Applicant: **CANON KABUSHIKI KAISHA
Tokyo 146-8501 (JP)**

(72) Inventor: **IKEDA, Nobuhiro
Tokyo 146-8501 (JP)**

(74) Representative: **Canon Europe Limited
European Intellectual Property Group
4 Roundwood Avenue
Stockley Park
Uxbridge UB11 1AF (GB)**

(54) **ELECTRIC POWER RECEPTION DEVICE, ELECTRIC POWER TRANSMISSION DEVICE, WIRELESS ELECTRIC POWER TRANSFER SYSTEM, COMMUNICATION METHOD, WIRELESS ELECTRIC POWER TRANSFER METHOD, AND COMPUTER PROGRAM**

(57)    An power reception device 200 in a wireless power transfer system transmits a request for change of an power transfer output to an power transmission device 100 in a case where a target electric power is set (S1403). The request for change of an power transfer output includes difference information indicating a difference between a current operating point and a target operating point of the power reception device 200. The power reception device 200 determines whether a request for change including the difference information greater than a predetermined threshold value is transmitted to the power transmission device 100 a predetermined number of times or more or continuously for a predetermined time or longer (S1407, S1408). The power reception device 200 transmits a request for change in power transfer control (control such as stopping or limiting power transfer) to the power transmission device 100 according to the result of determination.

FIG. 14

**Description**

[Technical Field]

The present disclosure relates to a power reception device, a power transmission device, a wireless power transfer system, a communication method, a wireless power transfer method, and a computer program.

[Background Art]

In a wireless power transfer system, it is necessary to detect whether there is an object (hereinafter also referred to as a foreign object), which is other than a power reception device, between a power transmission device and the power reception device. In the wireless power transfer system, an error process in a case other than placement of a foreign object may have to be performed. For example, countermeasures against breakdown of the power transmission device or the power reception device, misalignment between the power transmission device and the power reception device, and the like may be necessary.

[Summary of Invention]

[Technical Problem]

In the wireless power transfer system according to the related art, it is difficult to determine whether a system error during power transfer is based on placement of a foreign object, device breakdown, or erroneous detection in a foreign object detecting process. Accordingly, when electric power is actually being safely transmitted from the power transmission device to the power reception device but power transfer stops due to occurrence of a system error, appropriate power transfer control may not be able to be performed.
An objective of the present disclosure is to provide a technique that can enable power transfer control adapting to a state of a wireless power transfer system.

[Solution to Problem]

According to an embodiment of the present disclosure, there is provided an power reception device including: power receiving means configured to wirelessly receive electric power from an power transmission device; communication means configured to communicate with the power transmission device; and control means configured to perform control for transmitting a first request for change or maintenance of an power transfer output for the power transmission device via the communication means, wherein the control means performs control for transmitting a second request for change in power transfer control to the power transmission device via the communication means when the first request for increase of the power transfer output of the power transmission device has been transmitted to the power transmission device a predetermined number of times or more or continuously for a predetermined time or longer.

[Advantageous Effects of Invention]

According to the present disclosure, it is possible to provide a technique that can enable power transfer control adapting to a state of a wireless power transfer system.

[Brief Description of Drawings]

FIG. 1 is a diagram illustrating an example of a configuration of a wireless power transfer system.
FIG. 2 is a diagram illustrating an example of a configuration of an power transmission device.
FIG. 3 is a diagram illustrating an example of a configuration of an power reception device.
FIG. 4 is a diagram illustrating a threshold value setting method in state detection based on a power loss.
FIG. 5 is a block diagram illustrating an example of a functional configuration of a control unit of the power transmission device.
FIG. 6 is a block diagram illustrating an example of a functional configuration of a control unit of the power reception device.
FIG. 7 is a sequence diagram illustrating an example of processes in wireless power transfer.
FIG. 8 is a diagram illustrating state detection using a waveform decay method.

FIG. 9 is a diagram illustrating a threshold value setting method in state detection using a waveform decay method.

FIGS. 10(A) and 10(B) are diagrams illustrating a coupling state measuring method in a transmission antenna and a reception antenna.

FIG. 11 is a diagram illustrating a threshold value setting method in state detection using the coupling state measuring method.

FIGS. 12(A) and 12(B) are diagrams illustrating a Q-factor measuring method.

FIG. 13 is a sequence diagram illustrating an example of operations according to a first embodiment.

FIG. 14 is a flowchart illustrating operations that are performed by an power reception device according to the first embodiment.

FIG. 15 is a sequence diagram illustrating another example of operations according to a first embodiment.

FIG. 16 is a flowchart illustrating another example of operations that are performed by the power reception device according to the first embodiment.

FIG. 17 is a sequence diagram illustrating an example of operations according to a modified example.

FIG. 18 is a flowchart illustrating an example of operations that are performed by an power reception device according to the modified example.

FIG. 19 is a sequence diagram illustrating another example of operations according to the modified example.

FIG. 20 is a flowchart illustrating another example of operations that are performed by the power reception device according to the modified example.

FIG. 21 is a sequence diagram illustrating a first example of operations according to a second embodiment.

FIG. 22 is a sequence diagram illustrating a second example of operations according to the second embodiment.

FIG. 23 is a sequence diagram illustrating a third example of operations according to the second embodiment.

FIG. 24 is a sequence diagram illustrating a fourth example of operations according to the second embodiment.

FIG. 25 is a sequence diagram illustrating a fifth example of operations according to the second embodiment.

FIG. 26 is a sequence diagram illustrating a sixth example of operations according to the second embodiment.

FIG. 27 is a sequence diagram illustrating a seventh example of operations according to the second embodiment.

FIG. 28 is a sequence diagram illustrating an eighth example of operations according to the second embodiment.

FIG. 29 is a flowchart illustrating operations that are performed by an power reception device according to the second embodiment.

FIG. 30 is a flowchart illustrating processes subsequent to FIG. 29.

FIG. 31 is a flowchart illustrating operations that are performed by an power transmission device according to the second embodiment.

FIG. 32 is a flowchart illustrating processes subsequent to FIG. 31.

[Description of Embodiments]

Hereinafter, embodiments of the present disclosure will be described in detail with reference to the accompanying drawings. In the embodiments, a wireless charging system to which a wireless power transfer system is applied is described. For example, wireless power transfer based on a standard (hereinafter referred to as a WPC standard) defined by the Wireless Power Consortium which is a wireless charging standardization institute will be described.

[First embodiment]

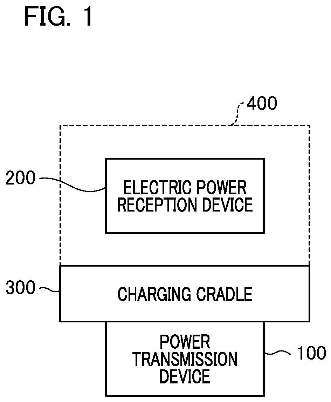

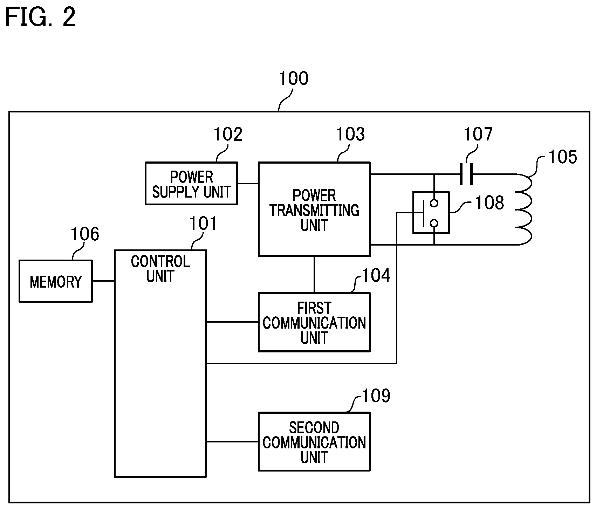

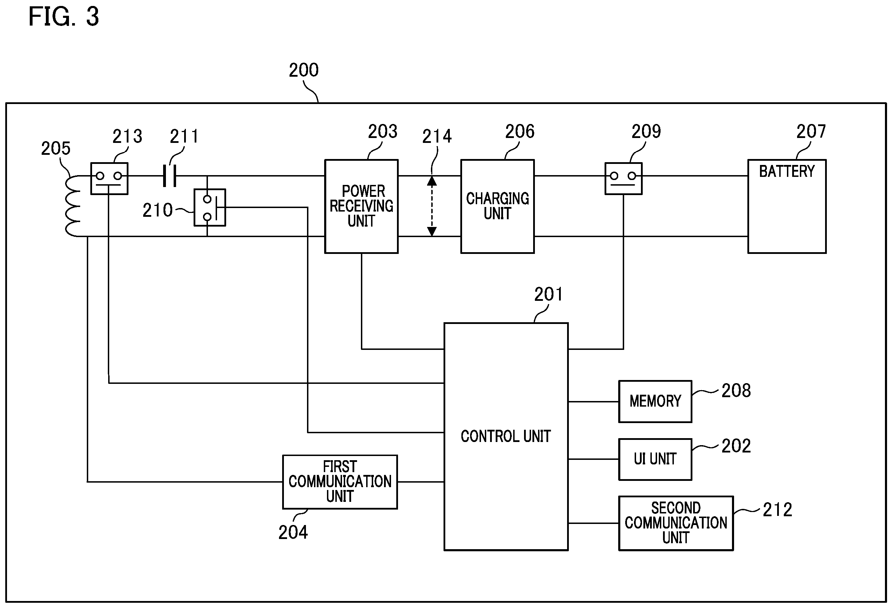

A first embodiment will be described below with reference to FIGS. 1 to 17. FIG. 1 is a diagram illustrating an example of a configuration of a wireless charging system. This system includes an power transmission device 100, an power reception device 200, and a charging cradle 300. In the following description, for the purpose of simplification of explanation, the power reception device 200 may be referred to as an RX, and the power transmission device 100 may be referred to as a TX. Detailed configurations of the TX and the RX will be described later with reference to FIGS. 2 and 3.

The RX is an electronic device that receives electric power from the TX in a state in which it is placed on the charging cradle 300 and charges a built-in battery. The TX is an electronic device that wirelessly transmits electric power to the RX placed on the charging cradle 300. Since the charging cradle 300 constitutes a part of the TX, the RX "being placed on the charging cradle 300" may be referred to as "being placed on the TX" in the following description. A spatial range in which the RX can receive electric power from the TX is schematically illustrated by a range of a dotted frame 400 in FIG. 1.

The RX and the TX can have a function of executing an application in addition to a wireless charging function. For example, the RX is a smartphone, and the TX is an accessory device for charging a battery of the RX.

The RX and the TX are not limited to this example and may be a tablet device, a storage device such as a hard disk device or a memory device, or an information processing device such as a personal computer (PC). The RX and the TX may be an imaging device such as a still camera or a video camera, an automobile, a robot, a medical device, a printer, or the like.

An example of a configuration of the power transmission device 100 will be described below with reference to FIG. 2. FIG. 2 is a functional block diagram illustrating an example of the configuration of the power transmission device 100 (TX). The TX includes a control unit 101, a power supply unit 102, a power transmitting unit 103, a first communication unit 104, a transmission antenna 105, a memory 106, a resonance capacitor 107, a switch unit 108, and a second communication unit 109. In FIG. 2, the functional blocks are illustrated as separate units, but a plurality of functional blocks may be mounted in a single chip.

The control unit 101 controls the TX as a whole by executing a control program stored in the memory 106. The control unit 101 performs power transfer control including communication for device authentication in the TX. The control unit 101 can perform control for executing an application in addition to wireless power transfer.

The control unit 101 includes one or more processors such as a central processing unit (CPU) or a micro-processor unit (MPU). Alternatively, the control unit 101 may be constituted by hardware such as an application-specific integrated circuit (ASIC).

The control unit 101 may include an array circuit such as a field-programmable gate array (FPGA) configured to perform a predetermined process. The control unit 101 can perform a process of storing information to be stored during execution of various processes in the memory 106 or a clocking process using a timer (not illustrated).

The power supply unit 102 supplies electric power to the functional block elements. The power supply unit 102 includes, for example, a power supply connection circuit for a commercial power supply or a battery. The battery is charged with electric power supplied from the commercial power supply.

The power transmitting unit 103 generates electromagnetic waves for allowing the RX to receive electric power by converting DC electric power or AC electric power input from the power supply unit 102 to AC electric power in a frequency band used for wireless power transfer and inputting the AC electric power to the transmission antenna 105.

For example, the power transmitting unit 103 includes an inverter and converts a DC voltage supplied by the power supply unit 102 to an AC voltage using a switching circuit with a half bridge structure or a full-bridge structure. The power transmitting unit 103 includes a plurality of field-effect transistors (FETs) forming a bridge and a gate driver for controlling ON/OFF of the plurality of FETs.

The power transmitting unit 103 controls an intensity of electromagnetic waves to be output by adjusting a voltage (a transmission voltage) or a current (a transmission current) input to the transmission antenna 105 or both thereof. The intensity of electromagnetic waves is controlled on the basis of the magnitude of the transmission voltage or the transmission current.

In the power transmitting unit 103, output control of electric power with an AC frequency is performed such that start or stop of power transfer from the transmission antenna 105 or an intensity of electromagnetic waves to be output is controlled on the basis of an instruction signal from the control unit 101. It is assumed that the power transmitting unit 103 has power supply serviceability capable of outputting electric power of 15 watt (W) to a charging unit (FIG. 3: 206) of the power reception device 200 corresponding to the WPC standard.

The first communication unit 104 is connected to the control unit 101 and the power transmitting unit 103 and performs communication for power transfer control based on the WPC standard with respect to the RX. The first communication unit 104 performs frequency shift modulation of electromagnetic waves output from the transmission antenna 105 and transmits information to the RX to perform communication therewith.

The first communication unit 104 demodulates electromagnetic waves transmitted from the transmission antenna 105 and modulated by the RX and acquires information transmitted from the RX. Communication using the first communication unit 104 is performed by superimposing a communication signal on electromagnetic waves transmitted from the transmission antenna 105.

The memory 106 can store information on states of the TX and the RX in addition to the control program. The information on states of the TX and the RX include a transmitted power value and a received power value. The information on the state of the TX is acquired by the control unit 101. The information on the state of the RX is acquired by a control unit (FIG. 3: 201) of the RX and can be received by the first communication unit 104.

The switch unit 108 is connected in parallel to a series circuit of the resonance capacitor 107 and the transmission antenna 105. The control unit 101 transmits a control signal to the switch unit 108 and controls ON/OFF thereof. The transmission antenna 105 is connected to the resonance capacitor 107.

When the switch unit 108 is turned on by the control signal from the control unit 101 and a circuit thereof is shorted, the transmission antenna 105 and the resonance capacitor 107 form a series resonance circuit and resonate at a specific frequency f1. At this time, a current flows in a closed circuit formed by the transmission antenna 105, the resonance capacitor 107, and the switch unit 108.

On the other hand, when the switch unit 108 is turned off by the control signal from the control unit 101 and a circuit thereof is open, electric power is supplied to the transmission antenna 105 and the resonance capacitor 107 from the power transmitting unit 103.

The second communication unit 109 is connected to the control unit 101 and performs communication with the RX based on a standard different from the WPC standard. For example, the second communication unit 109 communicates with the RX (a second communication unit 212 in FIG. 3) using an antenna different from the transmission antenna 105.

Examples of a communication network include a wireless local area network (LAN), a Bluetooth (registered trademark) lower energy (BLE), and a near-field communication (NFC).

Regarding communication between the TX and the RX, the TX may communicate with the RX selectively using one of a plurality of communication standards. Communication modes selectively using a plurality of types of communication which will be described below are possible.

- Communication based on a first standard (the WPC standard) which is performed between the first communication unit 104 of the TX and a first communication unit 204 (FIG. 3) of the RX
- Communication based on a second standard (a standard other than the WPC standard) which is performed between the second communication unit 109 of the TX and a second communication unit 212 (FIG. 3) of the RX

An example of a configuration of the power reception device 200 will be described below with reference to FIG. 3. FIG. 3 is a block diagram illustrating an example of a configuration of the power reception device 200 (RX). The RX includes a control unit 201, a user interface (hereinafter referred to as UI) unit 202, a power receiving unit 203, a first communication unit 204, a reception antenna 205, a charging unit 206, a battery 207, and a memory 208.

The RX additionally includes a first switch unit 209, a second switch unit 210, a resonance capacitor 211, a second communication unit 212, and a third switch unit 213. In the present embodiment, it is assumed that the functional blocks illustrated in FIG. 3 are individual elements, but a plurality of functional blocks may be realized as a single hardware module.

A voltage (see a dotted arrow 214) between the power receiving unit 203 and the charging unit 206 represents a voltage value that is output from a rectification unit (a rectifier) provided in the power receiving unit 203. In the following description, this voltage value is referred to as "Vrect."

The control unit 201 controls the functional blocks of the RX by executing a control program stored in the memory 208. The control unit 201 can perform control for executing an application other than wireless power transfer.

The control unit 201 includes one or more processors such as a CPU or an MPU. The whole RX (for example, a whole smartphone) can be controlled by cooperation with an operating system (OS) which is executed by the control unit 201.

Alternatively, the control unit 201 is constituted by hardware such as an ASIC or is constituted by an array circuit such as an FPGA which has been configured to perform a predetermined process. The control unit 201 can store information to be stored during execution of various processes in the memory 208 and perform a clocking process using a timer (not illustrated).

The UI unit 202 is connected to the control unit 201 and outputs various types of information to a user. Outputting of various types of information includes operations such as screen display, blinking or change in color of a light emitting diode (LED), outputting of speech from a speaker, and body vibration of the RX. The UI unit 202 is realized by a liquid crystal panel, a speaker, a vibration motor, and the like.

The power receiving unit 203 acquires AC electric power (an AC voltage and an AC current) which is generated through electromagnetic induction based on electromagnetic waves emitted from the transmission antenna 105 of the TX via the reception antenna 205. The power receiving unit 203 coverts the AC electric power to DC or AC electric power of a predetermined frequency and supplies the electric power to the charging unit 206.

The charging unit 206 charges the battery 207. The power receiving unit 203 includes a rectification unit (a rectifier) and a voltage control unit which are required for supply of electric power to a load in the RX. The power receiving unit 203 supplies charging electric power from the charging unit 206 to the battery 207. It is assumed that the power receiving unit 203 has electric power supply serviceability capable of outputting electric power of 15 watts to the charging unit 206.

The first communication unit 204 performs communication for electric power reception control based on the WPC standard with respect to the first communication unit 104 of the TX. The first communication unit 204 is connected to the reception antenna 205 and the control unit 201.

The first communication unit 204 demodulates electromagnetic waves input from the reception antenna 205 and acquires information transmitted from the TX. The first communication unit 204 performs communication with the TX by performing load modulation or amplitude modulation of the input electromagnetic waves and superimposing a signal associated with information to bet transmitted to the TX on the electromagnetic waves.

The memory 208 stores information on states of the TX and the RX in addition to the control program. The information on the state of the RX is acquired by the control unit 201. The information on the state of the TX can be acquired by the control unit 101 of the TX and can be received by the first communication unit 204 or the second communication unit 212.

The first switch unit 209 is provided between the charging unit 206 and the battery 207 and is controlled by the control unit 201. The first switch unit 209 has a function of controlling whether to supply electric power received by the power receiving unit 203 to the battery 207 and a function of controlling an amount of load.

When the first switch unit 209 is turned off by the control unit 201 and a circuit thereof is open, the electric power received by the power receiving unit 203 is not supplied to the battery 207. When the first switch unit 209 is turned on by the control unit 201 and a circuit thereof is short-circuited, the electric power received by the power receiving unit 203 is supplied to the battery 207.

In the example illustrated in FIG. 3, the first switch unit 209 is provided between the charging unit 206 and the battery 207, but the first switch unit 209 may be provided between the power receiving unit 203 and the charging unit 206.

Alternatively, the first switch unit 209 may be provided between a closed circuit formed by the reception antenna 205, the resonance capacitor 211, and the second switch unit 210 and the power receiving unit 203. In this case, the first switch unit 209 has a function of controlling whether to supply the electric power received by the reception antenna 205 to the power receiving unit 203.

In the example illustrated in FIG. 3, the first switch unit 209 is illustrated as a single functional block, but the first switch unit 209 may be realized as a part of the charging unit 206 or the power receiving unit 203.

The present embodiment is not limited to a configuration in which the first switch unit 209 is inserted in series between the charging unit 206 and the battery 207, and the first switch unit 209 may be inserted in parallel between the charging unit 206 and the battery 207.

In this case, when the first switch unit 209 is turned off by the control unit 201 and a circuit thereof is open, the electric power received by the power receiving unit 203 is supplied to the battery 207. When the first switch unit 209 is turned on by the control unit 201 and a circuit thereof is short-circuited, the electric power received by the power receiving unit 203 is not supplied to the battery 207.

On an input side of the power receiving unit 203, the second switch unit 210 is connected in parallel to the resonance capacitor 211. The resonance capacitor 211 is connected to the reception antenna 205 via the third switch unit 213. The second switch unit 210 and the third switch unit 213 are controlled by the control unit 201.

The third switch unit 213 has a function of controlling whether to open a terminal of the reception antenna 205. When the third switch unit 213 is turned off by the control unit 201, the terminal of the reception antenna 205 is open. When the third switch unit 213 is turned on by the control unit 201, the reception antenna 205 is connected to the power receiving unit 203 via the resonance capacitor 211.

When the third switch unit 213 is turned on and the second switch unit 210 is turned on by the control unit 201 and circuits thereof are short-circuited, the reception antenna 205 and the resonance capacitor 211 form a series resonance circuit and resonate at a specific frequency f2. A current flows in a closed circuit formed by the reception antenna 205, the resonance capacitor 211, and the second switch unit 210, and a current does not flow in the power receiving unit 203.

When the second switch unit 210 is turned off and the circuit thereof is open, electric power received by the reception antenna 205 and the resonance capacitor 211 is supplied to the power receiving unit 203. The present embodiment is not limited to the example illustrated in FIG. 3, and the second switch unit 210 may be provided between the reception antenna 205 and the resonance capacitor 211.

When the third switch unit 213 is turned on and the second switch unit 210 is turned on, the terminal of the reception antenna 205 is short-circuited. The third switch unit 213 may be provided between the resonance capacitor 211 and the power receiving unit 203.

In this system, the TX and the RX perform wireless power transfer based on the WPC standard between the transmission antenna 105 and the reception antenna 205. In the WPC standard, a magnitude of electric power which is guaranteed when the power reception device 200 receives electric power from the power transmission device 100 is defined by a value called guaranteed power (hereinafter referred to as "GP").

For example, GP represents an electric power value with which an output to a load of the power reception device 200 is guaranteed even when power transfer efficiency between the reception antenna 205 and the transmission antenna 105 decreases due to change in a positional relationship between the power reception device 200 and the power transmission device 100. The load of the power reception device 200 includes the charging unit 206 and the battery 207 in FIG. 3, and the value of GP corresponds to an amount of electric power which is guaranteed to be output from the power receiving unit 203.

For example, it is assumed that the value of GP is 5 (watts) and the positional relationship between the reception antenna 205 and the transmission antenna 105 changes. In this case, even when the power transfer efficiency decreases, the power transmission device 100 performs power transfer control such that 5 watts can be output to the load of the power reception device 200.

The value of GP is determined through negotiation performed between the power transmission device 100 and the power reception device 200. The present embodiment can be applied to a configuration in which power transmission/reception is performed with electric power which is determined through negotiation performed between the power transmission device and the power reception device in addition to the GP.

When electric power is transmitted from the power transmission device 100 to the power reception device 200, it is assumed that an object is present in the vicinity of the power transmission device 100. An object in this case is an object that can affect power transfer from the power transmission device 100 to the power reception device 200 and is an object (a foreign object) different from the power reception device 200. Electromagnetic waves for power transfer can affect the foreign object and there is a likelihood that an increase in temperature or destruction of the foreign object will be caused.

An object in the present disclosure is, for example, a clip or an IC card. Out of objects which are essential to an power reception device and a product into which the power reception device is assembled or an power transmission device and a product into which the power transmission device is assembled, an object which is likely to unintentionally generate heat when it is exposed to wireless electric power transmitted from the transmission antenna does not correspond to the foreign object.

In the WPC standard, a method of curbing occurrence of an increase in temperature or destruction of a foreign object by stopping power transfer when there is the foreign object is defined. Specifically, the power transmission device 100 can detect that there is a foreign object on the charging cradle 300. A power loss method is a method of detecting a foreign object on the basis of a difference between a transmitted power in the power transmission device 100 and a received power in the power reception device 200.

A Q-factor measuring method is a method of detecting a foreign object on the basis of a change in quality factor (Q-factor) of the transmission antenna 105 (a transmission coil) in the power transmission device 100. A foreign object detected by the power transmission device 100 is not limited to an object present on the charging cradle 300. The power transmission device 100 can detect a foreign object located in the vicinity of the power transmission device 100. For example, the power transmission device 100 can detect a foreign object located in an electric power transmittable range.

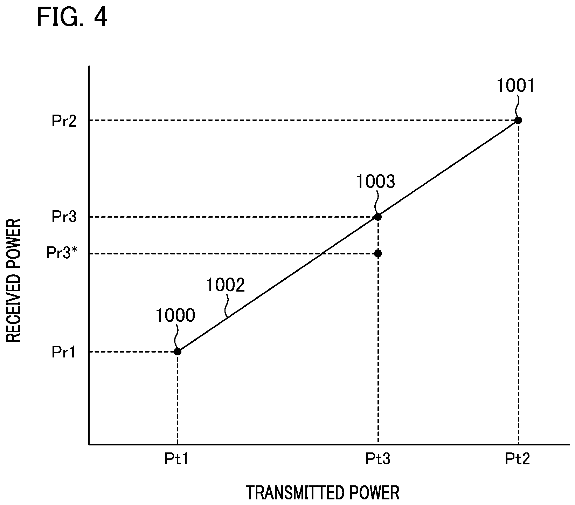

Foreign object detection based on the power loss method defined in the WPC standard will be described below with reference to FIG. 4. In FIG. 4, the horizontal axis represents a transmitted power of the power transmission device 100, and the vertical axis represents a received power of the power reception device 200.

On a graph line indicated by a linear segment 1002, a point 1000 corresponds to a first transmitted power value Pt1 and a first received power value Pr1, and a point 1001 corresponds to a second transmitted power value Pt2 and a second received power value Pr2. On the graph line, a point 1003 corresponds to a third transmitted power value Pt3 and a third received power value Pr3. A foreign object to be detected is a metal piece or the like having conductivity.

First, the power transmission device 100 transmits electric power to the power reception device 200 with the first transmitted power value Pt1, and the power reception device 200 receives electric power with the first received power value Pr1. In the following description, this state is referred to as a light load state. Then, the power transmission device 100 stores the first transmitted power value Pt1.

Here, the first transmitted power value Pt1 and the first received power value Pr1 are a minimum transmitted power value and a minimum received power value which are determined in advance. At this time, the power reception device 200 performs load control such that electric power to be received is minimized. For example, the power reception device 200 may cut off a load from the reception antenna 205 such that the received electric power is not supplied to the load (such as the charging unit 206 and the battery 207 in FIG. 3).

This can be realized by controlling the first switch unit 209. Then, the power reception device 200 notifies the power transmission device 100 of the first received power value Pr1. The power transmission device 100 having received a signal associated with the first received power value Pr1 from the power reception device 200 calculates a power loss between the power transmission device 100 and the power reception device 200.

The power loss at this time is Pt1-Pr1 (=Ploss1). A calibration point (hereinafter abbreviated to CP) 1000 indicating correspondence between Pt1 and Pr1 can be generated.

Subsequently, the power transmission device 100 changes the transmitted power value to the second transmitted power value Pt2 and transmits electric power to the power reception device 200, and the power reception device 200 receives electric power with the second received power value Pr2. In the following description, this state is referred to as a connected load state (a load connected state).

Then, the power transmission device 100 stores the second received power value Pr2. Here, the second transmitted power value Pt2 and the second received power value Pr2 are a maximum transmitted power value and a maximum received power value which are determined in advance. At this time, the power reception device 200 performs load control such that electric power to be received is maximized.

For example, the power reception device 200 connects the load to the reception antenna 205 such that the received electric power is supplied to the load. This can be realized by controlling the first switch unit 209. Subsequently, the power reception device 200 notifies the power transmission device 100 of the second received power value Pr2.

The power transmission device 100 having received a signal associated with the second received power value Pr2 from the power reception device 200 calculates a power loss between the power transmission device 100 and the power reception device 200. The power loss at this time is Pt2-Pr2 (=Ploss2). A CP 1001 indicating correspondence between Pt2 and Pr2 can be generated.

The power transmission device 100 performs a linear interpolation process between the CP 1000 and the CP 1001 and generates a segment 1002. The segment 1002 represents a relationship between the transmitted power and the received power in a state in which it is detected that there is no foreign object in the vicinity of the power transmission device 100 and the power reception device 200 (hereinafter referred to as a first detection state).

The power transmission device 100 can estimate an electric power value which is received by the power reception device 200 when electric power is transmitted with a predetermined transmitted power in the first detection state on the basis of the segment 1002. For example, it is assumed that the power transmission device 100 transmits electric power with the third transmitted power value Pt3. In this case, the power transmission device 100 can estimate the third transmitted power value Pt3 which is received by the power reception device 200 from the point 1003 corresponding to Pt3 on the segment 1002.

As described above, it is possible to calculate a power loss between the power transmission device 100 and the power reception device 200 for each load on the basis of a plurality of combinations of a transmitted power value of the power transmission device 100 and a received power value of the power reception device 200 which are measured while changing the load. It is possible to estimate the power loss between the power transmission device 100 and the power reception device 200 for all the loads through an interpolation process based on a plurality of combinations of the transmitted power value and the received power value.

In this way, a calibration process that is performed by the power transmission device 100 and the power reception device 200 such that power transmission device 100 acquires a combination of the transmitted power value and the received power value is referred to as a "calibration process using a power loss method." The calibration process is abbreviated to a CAL process.

After the CAL process using the power loss method has been performed, it is assumed that the power transmission device 100 actually transmits electric power to the power reception device 200 with the third transmitted power value Pt3 and the power transmission device 100 receives a signal associated with the received power value Pr3* from the power reception device 200. The power transmission device 100 calculates Pr3-Pr3* (=Ploss_FO) by subtracting the received power value Pr3* actually received from the power reception device 200 from the received power value Pr3 in the first detection state.

Ploss_FO can be estimated to be electric power consumed in a foreign object, that is, a power loss, when there is the foreign object in the vicinity of the power transmission device 100 and the power reception device 200. In the following description, the state in which it is detected that there is a foreign object in the vicinity of the power transmission device 100 and the power reception device 200 is referred to as a second detection state.

In the second detection state, the power transmission device 100 compares the power loss Ploss_FO consumed in the foreign object with a predetermined threshold value. When the value of the power loss Ploss_FO is greater than the threshold value, the power transmission device 100 can determine that there is a foreign object.

Alternatively, the power transmission device 100 acquires the third received power value Pr3 in the first detection state from the power reception device 200 and calculates a power loss Pt3-Pr3 (=Ploss3) between the power transmission device 100 and the power reception device 200 in advance.

Then, the power transmission device 100 acquires the received power value Pr3* from the power reception device 200 in the second detection state and calculates a power loss Pt3-Pr3* (=Ploss3*) between the power transmission device 100 and the power reception device 200 in the second detection state. Then, the power transmission device 100 can estimate the power loss Ploss_FO using Ploss3*-Ploss3.

As described above, there two methods of calculating Ploss_FO in the second detection state.

- A first method of calculating Ploss_FO from Pr3-Pr3*
- A second method of calculating Ploss_FO from Ploss3*-Ploss3

The second method will be basically described in the present embodiment, but details of the present embodiment can be applied to the first method.

The RX and the TX in the present embodiment performs communication for power transfer and reception control based on the WPC standard. In the WPC standard, a plurality of phases including a power transfer phase in which power transfer is performed and one or more phases before power transfer is actually performed are defined. Necessary communication for power transfer/reception control is performed in each phase.

For example, foreign object detection using the power loss method is performed in the power transfer phase on the basis of data acquired in the calibration phase. Foreign object detection using the Q-factor measuring method is performed in a phase before power transfer (before a digital ping is transmitted and in a negotiation phase or a renegotiation phase).

The phase before power transfer in the WPC standard includes a selection phase, a ping phase, and an identification and configuration phase (a configuration phase).

It includes a negotiation phase and a calibration phase. In the following description, the identification and configuration phase is referred to as an I&C phase. Processes in each phase will be described below.

In the selection phase, the TX intermittently transmits an analog ping and detects that an object is placed on the charging cradle of the TX. For example, it is detected that the RX, a conductor piece, or the like is placed on the charging cradle.

The TX detects one or both of a voltage value and a current value of the transmission antenna 105 when the analog ping is transmitted. The TX determines that there is an object and transitions to the ping phase when the voltage value is less than a threshold value or when the current value is greater than a threshold value.

In the ping phase, the TX transmits a digital ping with a higher electric power than that of the analog ping. The magnitude of the electric power of the digital ping is a magnitude of electric power enough to start the control unit of the RX placed on the TX.

The RX notifies the TX of a reception voltage value. In this way, the TX recognizes that the object detected in the selection phase is the RX by receiving a response from the RX having received the digital ping. The TX transitions to the I&C phase when the reception voltage value is notified of.

Before transmitting the digital ping, the TX measures a Q-factor of the transmission antenna 105, for example, using an analog ping. This measurement result is used to perform a foreign object detecting process using the Q-factor measuring method.

In the I&C phase, the TX identifies the RX and acquires device configuration information (capacity information) from the RX. The RX transmits signals of an ID data packet and a configuration data packet.

The ID data packet includes identifier information of the RX, and the configuration data packet includes device configuration information (capacity information) of the RX. The TX having received the signals of the ID data packet and the configuration data packet returns an acknowledgement (a positive response ACK). Then, the I&C phase ends.

In the negotiation phase, the value of GP is determined on the basis of a GP value requested by the RX, electric power supply serviceability of the TX, or the like. The TX receives an FOD status data packet including a reference quality factor value and a reference resonance frequency value from the RX.

The reference quality factor value is a Q-factor that can be measured by a terminal of a transmission antenna of the test TX when an RX is placed on the test TX and there is no foreign object in the vicinity thereof.

The reference resonance frequency value is a resonance frequency that can be measured by the terminal of the transmission antenna of the test TX when an RX is placed on the test TX and there is no foreign object in the vicinity thereof.

In the Q-factor measuring method, whether there is a foreign object is determined on the basis of a threshold value based on the reference quality factor value and the reference resonance frequency value.

The TX performs a foreign object detecting process using the Q-factor measuring method in response to a request from the RX. In the WPC standard, a method of performing the same processes as in the negotiation phase again in response to a request from an RX after transition to the power transfer phase has been once performed is defined. The phase to which the power transfer phase transitions and in which these processes are performed is referred to as a renegotiation phase.

In the calibration phase, the CAL process is performed on the basis of the WPC standard. The RX notifies the TX of a predetermined received power value, and the TX performs adjustment for efficiently transmitting electric power.

The predetermined received power value is, for example, a received power value in a light load state or a maximum load state (a connected load state). The received power value notified to the TX is used to perform a foreign object detecting process using the power loss method.

In the power transfer phase, control for start and continuation of power transfer, stop of power transfer due to an error process or full charging, or the like is performed by the TX and the RX. The TX and the RX perform a communication process for the power transfer/reception control.

For example, communication is performed by superimposing signals on electromagnetic waves transmitted from the transmission antenna 105 or the reception antenna 205 using the transmission antenna 105 and the reception antenna 205 used to perform wireless power transfer on the basis of the WPC standard. A range in which communication based on the WPC standard is possible between the TX and the RX is the same range as the electric power transmittable range of the TX.

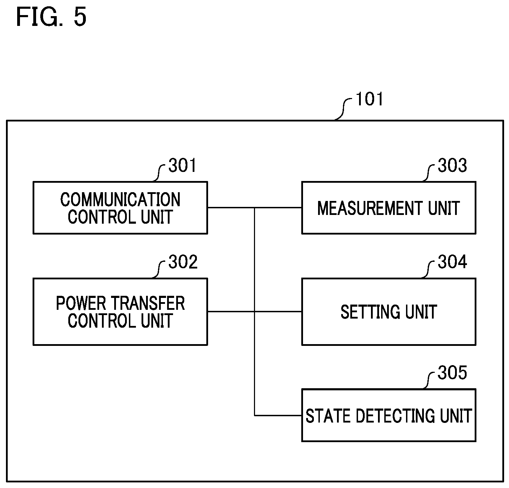

The functions of the control unit 101 of the TX will be described below with reference to FIG. 5. FIG. 5 is a block diagram illustrating an example of a functional configuration of the control unit 101 of the power transmission device 100 (TX). The control unit 101 includes a communication control unit 301, an power transfer control unit 302, a measurement unit 303, a setting unit 304, and a state detecting unit 305. The communication control unit 301 performs communication control with respect to the RX on the basis of the WPC standard via the first communication unit 104 or performs communication control with respect to the RX via the second communication unit 109.

The power transfer control unit 302 controls power transfer to the RX by controlling the power transmitting unit 103. The measurement unit 303 measures a waveform decay index which will be described later. The measurement unit 303 measures an electric power transmitted to the RX via the power transmitting unit 103 and measures an average transmitted power per unit time. The measurement unit 303 measures a Q-factor of the transmission antenna 105.

The setting unit 304 calculates and sets a threshold value for foreign object detection on the basis of the waveform decay index measured by the measurement unit 303. The setting unit 304 calculates and sets a threshold value for foreign object detection or a threshold value for misalignment detection between the TX and the RX, for example, on the basis of a coupling coefficient between the transmission antenna 105 and the reception antenna 205 measured by the measurement unit 303.

The state detecting unit 305 detects states of the TX and the RX. For example the state detecting unit 305 acquires a quantity (such as a coupling coefficient) indicating an electromagnetic coupling state between the transmission antenna 105 and the reception antenna 205. The state detecting unit 305 detects a foreign object present between the TX and the RX and detects misalignment between the transmission antenna 105 and the reception antenna 205.

More specifically, the state detecting process based on the power loss method, the Q-factor measuring method, the waveform decay method, and the electromagnetic coupling state between the transmission antenna 105 and the reception antenna 205 can be performed. The state detecting unit 305 can perform foreign object detection or a process of detecting misalignment between the transmission antenna 105 and the reception antenna 205 using other methods.

For example, in the TX having an NFC communication function, the state detecting unit 305 performs a state detecting process using a partner detecting function based on the NFC standard. The state detecting unit 305 can detect change in state on the TX in addition to detection of whether there is a foreign object or detection of an electromagnetic coupling state between the transmission antenna and the reception antenna. For example, the state detecting unit 305 can detect an increase or a decrease in the number of power reception devices 200 on the TX.

The setting unit 304 sets a threshold value serving as a reference for determining whether there is a foreign object when the TX detects a state. The detection of a state is, for example, detection of a state based on the power loss method, the Q-factor measuring method, or the waveform decay method or detection of a state based on the coupling coefficient between the transmission antenna 105 and the reception antenna 205 or the like.

The setting unit 304 can set a determination threshold value required for the state detecting process using other methods. The state detecting unit 305 can perform a foreign object detecting process or a process of detecting misalignment between the transmission antenna 105 and the reception antenna 205 on the basis of the threshold value set by the setting unit 304 and the measurement result from the measurement unit 303.

For example, the state detecting unit 305 can acquire data such as the waveform decay index, the transmitted power, the Q-factor, and the coupling coefficient between the transmission antenna 105 and the reception antenna 205 as the measurement result from the measurement unit 303.

The processes performed by the communication control unit 301, the power transfer control unit 302, the measurement unit 303, the setting unit 304, and the state detecting unit 305 illustrated in FIG. 5 can be realized using a program which is executed by the CPU or the like of the control unit 101.

The processes are performed in parallel by synchronizing independent programs through an event process or the like. Two or more of these processes may be incorporated into a process using a single program.

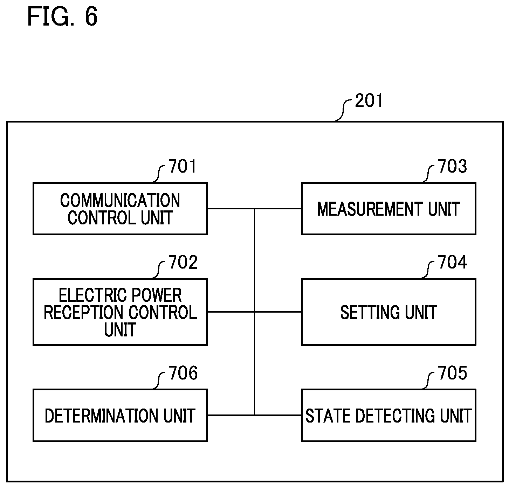

Functions of the control unit 201 of the RX will be described below with reference to FIG. 6. FIG. 6 is a block diagram illustrating an example of a functional configuration of the control unit 201 of the power reception device 200 (RX). The control unit 201 includes a communication control unit 701, an electric power reception control unit 702, a measurement unit 703, a setting unit 704, a state detecting unit 705, and a determination unit 706.

The communication control unit 701 performs communication control with respect to the TX on the basis of the WPC standard via the first communication unit 204 or performs communication control with respect to the TX via the second communication unit 212.

The electric power reception control unit 702 controls reception of electric power from the TX by controlling the power receiving unit 203. The measurement unit 703 measures an electric power received from the TX via the power receiving unit 203 and measures an average received power per unit time.

The setting unit 704 sets a received power measured by the measurement unit 703 or a GP value based on negotiation with the TX as a maximum power consumption value. The maximum power consumption value is a maximum value of electric power which can be permitted by the RX and is a variable electric power value which can be increased or decreased by the RX. An power transfer output change request transmitted from the RX to the TX is used for the TX to increase a transmitted power value, a transmission voltage, or a transmission current.

There is a control error data packet (hereinafter abbreviated to CE) used for the RX to request an increase or decrease of the reception voltage (or the reception current or the received power value) from the TX in the WPC standard as the power transfer output change request.

A control error value (hereinafter abbreviated to CEV) is stored in the CE. The CEV is a criterion (difference information) indicating a difference between an actual operating point and a target operating point (a target operating point) of the RX and is expressed as an integer with a sign of 8 bits. Here, an operating point indicates a combination of a frequency, a duty cycle, and amplitude of a voltage which is applied to the power transmitting unit.

When the CEV is a positive value, it means that the actual operating point is below the target operating point and the RX requests the TX to increase an intensity of an electric power signal. Specifically, the RX requests the TX to increase the transmission voltage or the transmission current. On the other hand, when the CEV is a negative value, it means that the actual operating point is above the target operating point and the RX requests the TX to decrease the intensity of the electric power signal.

Specifically, the RX requests the TX to decrease the transmission voltage or the transmission current. When the CEV is zero, it means that the RX requests the TX to maintain the current operating point.

The TX rapidly performs power transfer control on the basis of the sign and the integer stored in the CE. Difference information included in the power transfer output change request in the present embodiment will be specifically described. When the CEV value of an integer with a + (plus) sign is stored in the CE, the TX performs control for rapidly increasing the transmission voltage.

The CEV in this case is referred to as CEV(+). When the CEV value of an integer with a - (minus) sign is stored in the CE, the TX performs control for rapidly decreasing the transmission voltage.

The CEV in this case is referred to as CEV(-). When "0" is stored as the CEV value in the CE, the TX performs control for maintaining the current transmission voltage. The CEV in this case is referred to as CEV(0).

The state detecting unit 705 detects states of the TX and the RX. For example, the state detecting unit 705 detects a foreign object present between the TX and the RX and detects misalignment between the transmission antenna 105 and the reception antenna 205.

More specifically, the state detecting process based on the power loss method, the Q-factor measuring method, the waveform decay method, and the electromagnetic coupling state (for example, a coupling coefficient) between the transmission antenna 105 and the reception antenna 205 can be performed. The state detecting unit 705 can perform foreign object detection or a process of detecting misalignment between the transmission antenna 105 and the reception antenna 205 using other methods.

For example, in the RX having an NFC communication function, the state detecting unit 705 performs the state detecting process using the partner detecting function based on the NFC standard. The state detecting unit 705 can detect change in state below the RX in addition to detection of whether there is a foreign object or detection of an electromagnetic coupling state between the transmission antenna and the reception antenna.

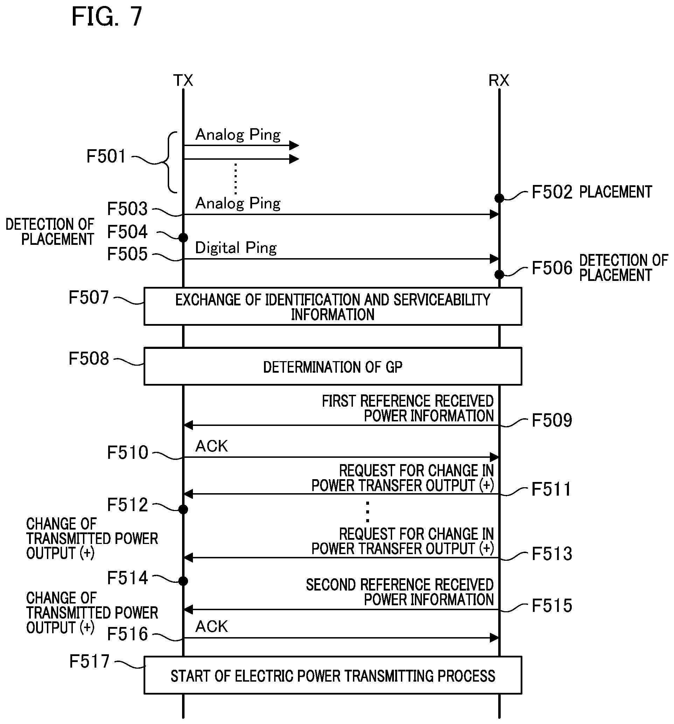

For example, the state detecting unit 705 can detect an increase or decrease in the number of coils or the like of the TX located below the RX. The determination unit 706 determines a numerical value included in the power transfer output change request used for the RX to request an increase or decrease the reception voltage (or the reception current or the received power) from the TX. Details of the power transfer output change request will be described later with reference to FIG. 7.

The processes which are performed by the communication control unit 701, the electric power reception control unit 702, the measurement unit 703, the setting unit 704, the state detecting unit 705, and the determination unit 706 illustrated in FIG. 6 can be realized using a program which is executed by a CPU or the like of the control unit 201.

The processes are performed in parallel by synchronizing independent programs through an event process or the like. Two or more of these processes may be incorporated into a process using a single program.

In the WPC standard, the selection phase, the pin phase, the I&C phase, the negotiation phase, the calibration phase, and the power transfer phase are defined. An example of operations of the TX and the RX in these phases will be described below with reference to FIG. 7.

FIG. 7 is a sequence diagram illustrating wireless power transfer based on the WPC standard, where the operation of the TX is illustrated in the left part and the operation of the RX is illustrated in the right part. F501 to F517 represent signs and numerals for distinguishing the operations in steps in a time series.

In F501, the TX repeatedly intermittently transmits an analog ping to detect an object present in the electric power transmittable range. The TX performs the processes defined in the selection phase and the ping phase and waits until an RX is placed thereon.

In F502, a user of the RX (for example, a smartphone) causes the RX to approach the TX for charging. For example, the user causes the RX to approach the TX by placing the RX on the TX.

After an analog ping has been transmitted in F503, the TX detects that there is an object in the electric power transmittable range in F504. In F505, the TX transmits a digital ping. When the RX receives a digital ping, it is possible to ascertain that the TX has detected the RX in F506.

When a predetermined response to a digital ping is returned from the RX, the TX determines that the detected object is the RX and the RX is placed on the charging cradle 300.

When placement of the RX on the TX is detected, exchange of identification information and capacity information are performed in F507. The TX acquires identification information and capacity information from the RX through communication in the I&C phase. The identification information of the RX can include a manufacturer code and a basic device ID.

The capacity information of the RX may include information elements capable of identifying a corresponding version of the WPC standard or information indicating whether the RX has a maximum power value which is a value for identifying the maximum electric power which can be supplied to the load and a negotiation function.

The TX may acquire the identification information and the capacity information of the RX using a method other than communication in the I&C phase in the WPC standard. The identification information may be arbitrary other identification information for identifying the entity of the RX such as a wireless power ID. Information other than described above may be included in the capacity information.

Subsequently, in F508, the TX determines the GP value with respect to the RX through communication in the negotiation phase. Here, in F508, a process of determining the GP value other than the communication in the negotiation phase in the WPC standard may be performed.

When the TX acquires information indicating that the RX does not cope with negotiation, for example, in F507, communication in the negotiation phase is not performed, and the GP value may be set to a small value prescribed in the WPC standard. In the present embodiment, GP=5 (watts) is set.

After the GP value has been determined, the TX performs calibration on the basis of the GP value. In the CAL process, first, the RX transmits information (hereinafter referred to as "first reference received power information") including a received power in a light load state to the TX in F509. For example, the light load state is a load cutoff state or a load state in which a transmitted power value is equal to or less than a first threshold value.

The first reference received power information in the present embodiment is defined as received power information of the RX when the transmitted power of the TX is 250 milli-watts. The first reference received power information is information of a received power packet (mode1) defined in the WPC standard, and another message may be used.

The TX determines whether to receive the first reference received power information on the basis of an power transfer state of the TX. The TX transmits a positive response (ACK) to the RX when the first reference received power information is to be received and transmits a negative response (NAK) to the RX when the first reference received power information is not to be received. In the example illustrated in FIG. 7, the TX transmits an ACK to the RX in F510.

Then, the RX performs a process of transmitting information (hereinafter referred to as "second reference received power information") including the received power in a connected load state to the TX. For example, the connected load state is a maximum load state or a load state in which the transmitted power value is equal to or greater than a second threshold value.

In the present embodiment, since the GP value is 5, the second reference received power information is defined as received power information of the RX when the transmitted power of the TX is 5 watts. Here, the second reference received power information is information of a received power packet (mode2) defined in the WPC standard, and another message may be used.

In F511, the RX transmits an power transfer output change request (the CE in which CEV(+) is stored) including a positive value to the TX in order to increase the transmitted power from the TX to 5 watts. In F512, the TX increases the transmitted power in response to the power transfer output change request. Then, transmission of the power transfer output change request in the RX in F513 and change of the transmitted power output (an increase of the transmitted power) in the TX in F514 are repeatedly performed.

In F515, when it is determined that the transmitted power output has reached 5 watts which is a predetermined electric power, the RX transmits information including a received power value in the connected load state as the second reference received power information to the TX. In F516, the TX transmits an ACK in response to the second reference received power information received from the RX and ends the CAL process.

The TX having determined that a charging process can start starts a process of transmitting electric power to the RX in F517, and charging of the RX starts. In this way, the power transfer phase starts. In the power transfer phase in which the TX transmits electric power to the RX, the RX and the TX appropriately perform transmission of the power transfer output change request and change of the power transfer output.

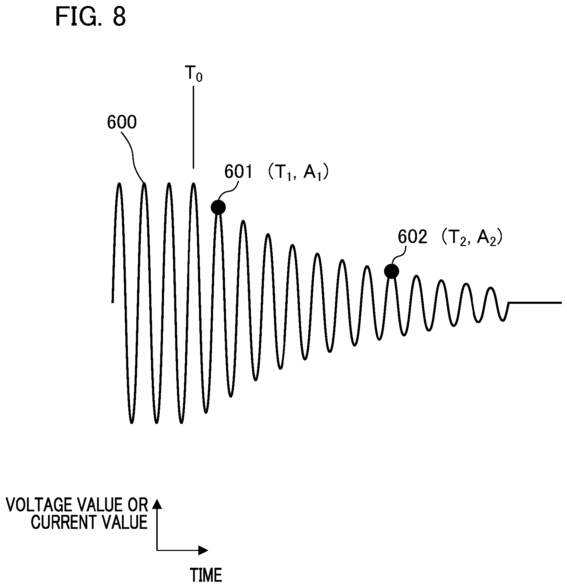

FIG. 8 is a diagram illustrating the principle in which a foreign object is detected using the waveform decay method. In the example illustrated in FIG. 8, a foreign object is detected using a transmission waveform associated with power transfer from the power transmission device 100 (TX) to the power reception device 200 (RX). In FIG. 8, the horizontal axis represents time, and the vertical axis represents a voltage value or a current value.

For example, a waveform 600 illustrated in FIG. 8 shows change with the elapse of time of a voltage value of a high-frequency voltage which is applied to the transmission antenna 105 of the TX. The TX which is transmitting electric power to the RX via the transmission antenna 105 stops the power transfer at time $T_0$.

At time $T_0$, supply of transmitted power from the power supply unit 102 is stopped. A frequency f of the transmission waveform is, for example, a fixed frequency between 85 kHz and 205 kHz which is used in the WPC standard.

A point 601 on the waveform 600 is a point on an envelope of a high-frequency voltage and corresponds to a voltage value $A_1$ at time $T_1$. $(T_1, A_1)$ of the point 601 indicates that the voltage value at time $T_1$ is $A_1$.

A point 602 on the waveform 600 is a point on an envelope of a high-frequency voltage and corresponds to a voltage value $A_2$ at time $T_2$. $(T_2, A_2)$ of the point 602 indicates that the voltage value at time $T_2$ is $A_2$.

A quality factor (Q-factor) of the transmission antenna 105 can be calculated on the basis of a temporal change of the voltage value after time $T_0$. For example, the TX calculates the Q-factor on the basis of the time, the voltage values, and the frequency f of the high-frequency voltage at the points 601 and 602 on the envelope of the high-frequency voltage using

Expression 1.

$$Q = \pi \cdot f \cdot (T_2 - T_1)/\ln(A_1/A_2) \qquad \ldots (\text{Expression } 1)$$

In Expression 1, ln denotes a natural logarithmic function.

The value of the Q-factor decreases when there is a foreign object in the vicinity of the TX and the RX, and the reason is that an energy loss occurs due to the foreign object. Accordingly, with attention on a decay slope of the voltage value, the slope of a straight line connecting the point 601 and the point 602 increases when there is a foreign object more than when there is no foreign object.

When an energy loss due to a foreign object occurs, a decay rate of the amplitude of the waveform 600 increases. For example, in the waveform decay method, whether there is a foreign object can be determined on the basis of a decay state of a voltage value between the point 601 and the point 602.

In actually determining whether there is a foreign object, the determination can be performed through comparison certain numerical values indicating the decay state. For example, in determination using the Q-factor, when the value of the Q-factor is less than a reference value, it means that a waveform decay rate (a degree of decrease in amplitude of the waveform per unit time) increases.

For example, the determination may be performed using a slope of a straight line connecting the point 601 and the point 602 which is calculated by $(A_1-A_2)/(T_2-T_1)$. When the times ($T_1$ and $T_2$) at which the decay state of the voltage value is measured are fixed, whether there is a foreign object can be determined using a difference between the voltages ($A_1-A_2$) or a ratio of the voltage values ($A_1/A_2$).

Alternatively, when the voltage value $A_1$ immediately after power transfer has stopped is constant, whether there is a foreign object can be determined using the voltage value $A_2$ after a predetermined time elapses. Alternatively, whether there is a foreign object can be determined using the elapsed time ($T_2-T_1$) until the voltage value $A_1$ reaches a predetermined voltage value $A_2$.

In the waveform decay method, whether there is a foreign object can be determined on the basis of a decay state of a waveform in an power transfer stop period. Indices such as a Q-factor indicating a decay state are collectively referred to as a "waveform decay index" in the present embodiment.

The vertical axis in FIG. 8 is described as an axis of a voltage value of the high-frequency voltage applied to the transmission antenna 105 of the TX, but the vertical axis in FIG. 8 may be set to a current value flowing in the transmission antenna 105. Similarly to the voltage value, the decay state of the current value in the power transfer stop period varies according to whether there is a foreign object. When there is a foreign object, the waveform decay rate is higher than when there is no foreign object.

Accordingly, by applying the same method as described above to a temporal change of the current value flowing in the transmission antenna 105, a foreign object can be detected. That is, it is possible to determine whether there is a foreign object and to detect the foreign object using the Q-factor calculated from the current waveforms, the decay slope of the current values, the difference between the current values, the ratio of the current values, the absolute values of the current values, the time until the current value reaches a predetermined value, or the like as the waveform decay index.

A method based on both a decay state of a voltage value and a decay state of a current value can be used. In this method, it is possible to determine whether there is a foreign object using an evaluation value which is calculated from a waveform decay index of the voltage value and a waveform decay index of the current value.

The present disclosure is not limited to an example in which the waveform decay index in a period in which the TX temporarily stops power transfer is measured. A waveform decay index in a period in which the TX temporarily lowers electric power supplied from the power supply unit 102 from a predetermined electric power level to a lower electric power level may be measured.

A specific example of the method of detecting a foreign object on the basis of a transmission waveform (a voltage waveform applied to the transmission antenna or a current waveform flowing in the transmission antenna) using the waveform decay method will be described below with reference to FIG. 8.

In a transient response period immediately after power transfer from the TX has started, the transmission waveform is not stable. Accordingly, control is performed such that the RX does not communicate with the TX based on load modulation or amplitude modulation in the transient response period. Control is performed such that the TX does not communicate with the RX based on frequency shift modulation.

The TX temporarily stops power transfer to the RX at a timing (time $T_0$) at which detection of a foreign object is performed. In a foreign object detection period in which power transfer is temporarily stopped, the amplitude of the transmission waveform is damped. The TX calculates a waveform decay rate of the transmission waveform at that time.

When the calculated waveform decay rate is greater than a predetermined threshold value, the TX determines that there is a foreign object. When the TX determines that a foreign object is not detected after a predetermined foreign object detection period has expired, the TX restarts power transfer to the RX. After power transfer has been restarted, the TX repeatedly performs waiting in the transient response period, determination of the foreign object detection timing, stopping of power transfer, and a foreign object detecting process.

When elements such as the power receiving unit 203, the charging unit 206, and the battery 207 are connected to the reception antenna 205 and the resonance capacitor 211 of the power reception device 200 at the time of measurement of the waveform decay index, the waveform decay index is affected by an influence of the elements on a load.

That is, the value of the waveform decay index changes according to the states of the power receiving unit 203, the charging unit 206, and the battery 207. As a result, for example, even when the value of the waveform decay index is large, it is difficult to distinguish the reason between an influence of a foreign object and change of the states of the power receiving unit 203, the charging unit 206, and the battery 207.

Therefore, when the waveform decay index is measured and detection of a foreign object is performed, the control unit 201 of the RX turns off the first switch unit 209. Accordingly, it is possible to curb an influence of the battery 207.

Alternatively, the control unit 201 turns on and short-circuits the second switch unit 210 such that a current flows in a closed loop circuit formed by the reception antenna 205, the resonance capacitor 211, and the second switch unit 210. Accordingly, it is possible to curb an influence of the power receiving unit 203, the charging unit 206, and the battery 207.

As described above, by performing detection of a foreign object in a state in which the first switch unit 209 is cut off or in a state in which the second switch unit 210 is turned on and short-circuited (connected), it is possible to detect a foreign object with higher accuracy.

Alternatively, by performing both of cutoff of the first switch unit 209 and short-circuiting (connection) of the second switch unit 210, it is possible to detect a foreign object with much higher accuracy. The same advantageous effects are obtained by detecting a foreign object in a light load state instead of the state in which the first switch unit 209 is cut off.

When elements such as the power transmitting unit 103, the first communication unit 104, and the power supply unit 102 are connected to the transmission antenna 105 and the resonance capacitor 107 of the power transmission device 100 at the time of measurement of the waveform decay index, the waveform decay rate is affected by the elements.

That is, the value of the waveform decay index changes according to the states of the power transmitting unit 103, the first communication unit 104, and the power supply unit 102. As a result, for example, when the value of the waveform decay index is large, it is difficult to distinguish the reason between an influence of a foreign object and change of the states of the power transmitting unit 103, the first communication unit 104, and the power supply unit 102.

Therefore, at the time of measurement of the waveform decay index, the control unit 101 of the TX turns on the switch unit 108 such that a current flows in a closed loop circuit formed by the transmission antenna 105, the resonance capacitor 107, and the switch unit 108.

Accordingly, it is possible to curb an influence of the power transmitting unit 103, the first communication unit 104, and the power supply unit 102. Alternatively, a switch may be provided between the closed loop circuit formed by the transmission antenna 105, the resonance capacitor 107, and the switch unit 108 and the power transmitting unit 103. The TX cuts off the closed loop circuit from the power transmitting unit to curb the influence by controlling the switch at the time of measurement of the waveform decay index and detection of a foreign object.

As described above, by performing detection of a foreign object in a short-circuited (connected) state in which the switch unit 108 is turned on or a cutoff state in which the closed loop circuit and the power transmitting unit 103 are cut off by the switch, it is possible to detect a foreign object with higher accuracy. Alternatively, by performing both of short-circuiting of the switch unit 108 and short-cutoff of the switch, it is possible to detect a foreign object with much higher accuracy.

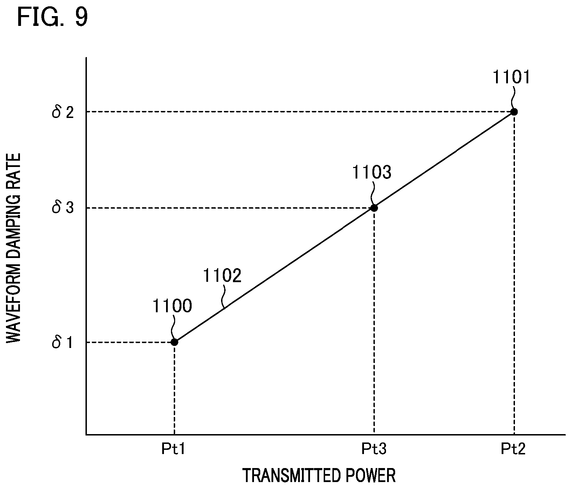

A method of setting a threshold value for a waveform decay index when detection of a state or detection of a foreign object is performed using a waveform decay method will be described below with reference to FIG. 9. In FIG. 9, the horizontal axis represents a transmitted power of the power transmission device 100, and the vertical axis represents a waveform decay index (a waveform decay rate) of a voltage waveform or a current waveform.

On a graph line indicated by a linear segment 1102, a point 1100 corresponds to a transmitted power value Pt1 and a waveform decay index $\delta1$, and a point 1101 corresponds to a transmitted power value Pt2 and a waveform decay index $\delta2$. On the graph line, a point 1103 corresponds to a transmitted power value Pt3 and a waveform decay index $\delta3$.

First, the RX performs control such that the RX is in the light load state when electric power is transmitted from the TX. In the light load state, electric power is not supplied to a load of the RX or only electric power less than a threshold value is supplied thereto.

In this state, the transmitted power value of the TX is defined as Pt1. Then, the TX stops power transfer in the light load state or decreases the transmitted power and measures the waveform decay index $\delta1$. At this time, the TX recognizes the transmitted power value Pt1 and stores the CP 1100 which is a calibration point at which the transmitted power value Pt1 is correlated with the waveform decay index $\delta1$ in a memory.

Then, the RX controls a connected load state. The connected load state is a state in which a load of the RX is supplied with maximum electric power or supplied with electric power equal to or greater than a predetermined threshold value when electric power is transmitted from the TX.

The transmitted power value of the TX in this state is defined as Pt2. Then, the TX stops power transfer or decreases the transmitted power in the connected load state and measures a waveform decay index $\delta2$. At this time, the TX stores the CP 1101 at which the transmitted power value Pt2 is correlated with the waveform decay index $\delta 2$ in the memory.

Subsequently, the TX generates a segment 1102 by performing linear interpolation between the CP 1100 and the CP 1101. The segment 1102 indicates a relationship between the transmitted power in the first detection state in which there is no foreign object in the vicinity of the TX and the RX and the waveform decay index (the waveform decay rate) of the transmission waveform.

Accordingly, the TX can estimate the waveform decay index of a transmission waveform for each transmitted power value in the first detection state on the basis of the segment 1102. For example, the waveform decay index of the transmitted power value Pt3 is estimated as $\delta 3$ from a point 1103 on the segment 1102 corresponding to Pt3.

The TX can calculate a threshold value used to determine whether there is a foreign object for each transmitted power value on the basis of the estimation result. For example, a waveform decay index which is greater by a predetermined value (a value corresponding to a measurement error) in the estimation result of the waveform decay index in the first detection state at a certain transmitted power value can be set as a threshold value for determining whether there is a foreign object.

The CAL process which is performed by the power transmission device 100 and the power reception device 200 in order for the power transmission device 100 to acquire a combination of a transmitted power value and a waveform decay index is referred to as a "CAL process using a waveform decay method" in the following description. The RX may perform control of the light load state and control of the connected load state after notification of the TX. One of the two types of control may be first performed.

The process of calculating the threshold value used to determine whether there is a foreign object for each load (or for each transmitted power value) mentioned in the present embodiment may be performed in the calibration phase. As described above, the TX acquires data required for detecting a foreign object using the power loss method in the calibration phase.

At that time, the TX acquires data on a power loss when the load state of the RX is a light load state and when the load state of the RX is a connected load state. Thereafter, in the calibtation phase, measurement of the CP 1100 and the CP 1101 in FIG. 9 may be performed along with measurement of the power loss when the RX is in the light load state and when the RX is in the connected load state.

For example, when a signal including the first reference received power information is received from the RX, the TX performs measurement of the CP 1100 in addition to a predetermined process to be performed in the calibration phase. The first reference received power information is information of a received power data packet (mode1) defined in the WPC standard, and another message may be used.

When a signal including the second reference received power information is received from the RX, the TX performs measurement of the CP 1101 in addition to a predetermined process to be performed in the calibration phase. The second reference received power information is information of a received power data packet (mode2) defined in the WPC standard, and another message may be used.

Since a period in which measurement of the CP 1100 and the CP 1101 is performed does not need to be separately provided, it is possible to measure the CP 1100 and the CP 1101 for a shorter time.

When the Q-factor calculated, for example, using Expression 1 is used as the waveform decay index, a method of setting a threshold value on the basis of a reference quality factor value is used.

The reference quality factor value is added to the FOD status data packet and transmitted to the TX by the RX. The reference quality factor value is a Q-factor which can be measured by a terminal of a transmission antenna of a test TX when an RX is placed on the test TX and there is no foreign object in the vicinity thereof.

The reference quality factor value is physically synonymous with the Q-factor calculated using Expression 1, and thus the threshold value can be set using the reference quality factor value. A value of the waveform decay index obtained by adding a predetermined value (a value corresponding to a measurement error) to the reference quality factor value may be set as the threshold value for determining whether there is a foreign object.

The TX may perform the waveform decay method in a state in which there is no foreign object (a state in which there is no state abnormality) and set this measurement result of the waveform decay index as the threshold value. A timing at which the waveform decay index in the state in which there is no foreign object is measured in advance will be described below.

When detection of a foreign object is performed using the Q-factor measuring method in the negotiation phase in the WPC standard and it is determined that there is no foreign object, the phase proceeds to the calibration phase and the power transfer phase.

That is, when the phase proceeds to a phase subsequent to the negotiation phase, it means that it is determined that there is no foreign object as the result of detection of a foreign object using the Q-factor measuring method. In one of the negotiation phase, the calibration phase, and the power transfer phase, there is a high likelihood that the waveform decay index in the state in which there is no foreign object will be able to be measured.

Accordingly, the timing at which the waveform decay index in the state in which there is no foreign object is measured may be one of the negotiation phase, the calibration phase, and the power transfer phase.

For example, it is assumed that the waveform decay index in the power transfer phase is measured. The timing at which the waveform decay index in the state in which there is no foreign object is measured is set to a first step of the power transfer phase.

This is because the probability that there is a foreign object in the vicinity of the TX and the RX increases as time elapses more from a time point at which it is determined that there is no foreign object using the Q-factor measuring method. The timing is designated by the RX or the TX, and the TX measures the waveform decay index at that time and sets a value of the waveform decay index as a threshold value. A value obtained by adding a predetermined value (a value corresponding to the measurement error) to the waveform decay index may be set as the threshold value for determining whether there is a foreign object.

The number of threshold values for determination set using the aforementioned method is not limited to one. A plurality of threshold values can be stepwise set. For example, a first threshold value is set as the threshold value for determining whether there is a state abnormality, and a second threshold value is set as a threshold value for determining whether the likelihood of a state abnormality is high. A third threshold value is set as a threshold value for determining whether the likelihood of a state abnormality is low, and a fourth threshold value is set as a threshold value for determining whether there is no state abnormality.

A first measurement method will be described below as a method of measuring a coupling state between the transmission antenna and the reception antenna. In wireless power transfer, the transmission antenna 105 and the reception antenna 205 are electromagnetically coupled, and power transfer is performed.

A voltage is induced in the reception antenna 205 by causing an AC current to flow in the transmission antenna 105 and changing magnetic flux penetrating the reception antenna 205. As a coupling coefficient (hereinafter referred to as k) which is an index indicating a coupling state between the transmission antenna and the reception antenna, for example, "k=1" is set when the whole magnetic flux (100%) generated in the transmission antenna penetrates the reception antenna.

"k=0.7" is set when 70% of the magnetic flux generated in the transmission antenna penetrates the reception antenna. In this case, the remaining magnetic flux (30%) generated in the transmission antenna is flux leakage (magnetic flux leakage).

This is magnetic flux not penetrating the reception antenna out of the magnetic flux generated in the transmission antenna. Accordingly, when the coupling state between the transmission antenna and the reception antenna is good and the k value is large, transfer efficiency of electric power transmitted from the TX to the RX is high. On the other hand, when the coupling state is not good and the k value is small, the transfer efficiency of electric power transmitted from the TX to the RX is low.

The reasons for decreasing the value of the coupling coefficient include presence of a foreign object (such as a metallic piece) between the transmission antenna and the reception antenna and misalignment between the transmission antenna and the reception antenna. When a foreign object is present between the transmission antenna and the reception antenna, there is a likelihood that the foreign object will be heated.

When misalignment between the transmission antenna and the reception antenna occurs, the flux leakage (magnetic flux leakage) increases, and thus there is a likelihood that large noise will be generated in the vicinity. When the k value is small, appropriate control for realizing wireless power transfer with higher safety and higher quality needs to be performed. In the present embodiment, a process of detecting the coupling state (which includes the coupling coefficient) between the transmission antenna and the reception antenna is performed to improve detection accuracy of a foreign object or detection accuracy of misalignment.

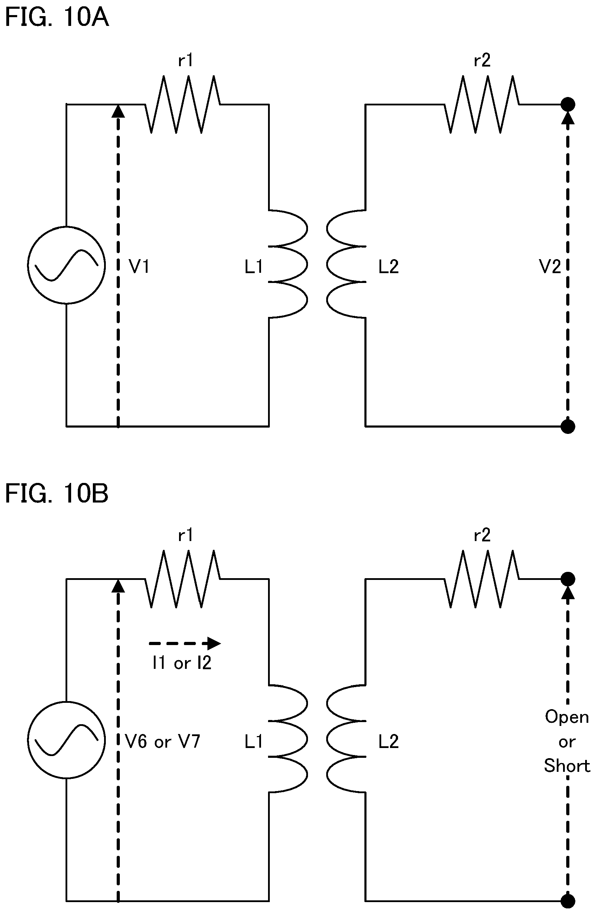

A method of measuring the coupling state between the transmission antenna and the reception antenna will be described below with reference to FIGS. 10(A) and 10(B). FIG. 10(A) is an equivalent circuit diagram illustrating a first measurement method. Definition of physical quantities associated with a transmission antenna (a transmission coil) on the primary side (TX) is as follows.

- r1: coil resistance of a transmission coil
- L1: self-inductance of a transmission coil
- V1: transmission voltage (input voltage) measured by the TX and applied to the transmission coil

Definition of physical quantities associated with a reception antenna (a reception coil) on the secondary side (RX) is as follows.

- r2: coil resistance of a reception coil
- L2: self-inductance of a reception coil
- V2: reception voltage (output voltage) measured by the RX and applied to the reception coil

A coupling coefficient k between the transmission coil and the reception coil can be calculated using Expression 2.

$$k=(V2/V1)\cdot\sqrt{(L1/L2)} \qquad\qquad \ldots(\text{Expression 2})$$

When the TX calculates the coupling coefficient k, the RX notifies the TX of a measured reception voltage V2 and a value of the self-inductance L2 of the reception coil stored in advance in the RX. The TX calculates the k value using a measured transmission voltage V1, a value of the self-inductance L1 of the transmission coil stored in advance therein, and the reception voltage V2 and the value of the self-inductance L2 received from the RX.

Alternatively, the RX notifies the TX of a constant calculated using both or one of L1 and L2 and the reception voltage V2, and the TX can calculate the k value using the constant and the reception voltage V2 received from the RX and the transmission voltage V1 measured by the TX.

On the other hand, when the RX calculate the coupling coefficient k, the TX notifies the RX of the measured transmission voltage V1 and the value of the self-inductance L1 of the transmission coil stored in advance therein. The RX calculates the k value using the measured reception voltage V2, the value of the self-inductance L2 of the reception coil stored in advance therein, and the transmission voltage V1 and the value of the self-inductance L1 received from the TX.

Alternatively, the TX notifies the RX of a constant calculated using both or one of L1 and L2 and the transmission voltage V1, and the RX can calculate the k value using the constant and the transmission voltage V1 received from the TX and the reception voltage V2 measured by the RX.

The transmission voltage V1 is acquired by causing the TX to actually measure a voltage applied to the transmission coil or by causing the TX to calculate the transmission voltage from a set value of transmitted power. Alternatively, the transmission voltage V1 may be used as the set value of the transmission voltage at the time of power transfer.

The transmission voltage V1 applied to the transmission coil can be calculated using a transmission voltage (referred to as V3) applied to a circuit (for example, an inverter) included in the power transmitting unit 103 of the TX and a voltage applied across both ends of the resonance capacitor 107.

In this case, the TX may calculate the transmission voltage V3 from the set value of the transmitted power. Alternatively, the TX may actually measure the transmission voltage V3 and the voltage applied across both ends of the resonance capacitor 107 and calculate the transmission voltage V1 using the measured voltages.

When the TX or the RX performs first measurement, the RX may perform control such that the third switch unit 213 is turned off and the terminal of the reception antenna 205 is in the open state. Accordingly, as illustrated in FIG. 10(A), both ends of the reception coil can be switched to the open state. Since the first measurement is not affected by the resonance capacitor 211, the power receiving unit 203, the charging unit 206, and the battery 207, it is possible to measure the coupling coefficient k with higher accuracy.

The reception voltage V2 applied to the reception coil can be calculated using a reception voltage (referred to as V4) applied to a circuit (for example, a rectifier) included in the power receiving unit 203 of the RX and a voltage applied across both ends of the resonance capacitor 211. In this case, the RX may actually measure the reception voltage V4 and the voltage applied across both ends of the resonance capacitor 211 and calculate the reception voltage V2 using the measured voltages.

Alternatively, when the TX or the RX performs the first measurement, the RX may perform control such that the RX is in the light load state or the connected load state. By making the load state of the RX constant, it is possible to measure the coupling coefficient k with higher accuracy.

A plurality of quantities in addition to the coupling coefficient can be used as an index indicating the electromagnetic coupling state between the transmission antenna and the reception antenna, and these quantities are collectively referred to as "coupling state indices" in the present embodiment. All the coupling state indices have values corresponding to the electromagnetic coupling state between the transmission antenna and the reception antenna. Details of the present embodiment can be similarly applied to a case in which other coupling state indices other than the coupling coefficient are used.

For example, a process of calculating the coupling state between the transmission antenna and the reception antenna can be performed using the transmission voltages V3 and V4. Alternatively, the coupling state between the transmission antenna and the reception antenna can be calculated using an output voltage (referred to as V5) of a circuit (for example, a rectifier) included in the power receiving unit 203 of the RX.

The output voltage V5 is a voltage applied to a load (the charging unit and the battery). The TX can notify the RX of the transmission voltage V3, and the RX can calculate the coupling state index. At this time, the TX notifies the RX of a constant which is calculated using electrical characteristics (for example, L1) of the transmission antenna, and the RX can calculate the coupling state index using the constant.

Alternatively, the RX notifies the TX of the reception voltage V4 or the output voltage V5, and the TX calculates a value of the coupling state index. At this time, the RX can notify the TX of a constant which is calculated using electrical characteristics (for example, L2) of the reception antenna, and the TX can calculate the coupling state index using the constant.

The TX and the RX transmit and receive information such as the voltage values V1 to V5, the values of the self-inductance L1 and L2, or the constant indicating electrical characteristics of the transmission antenna or the reception antenna to and from each other. Timings at which the voltage values are measured and timings at which various types of information are transmitted and received will be described below.

Measurement of the voltage values is performed, for example, in the ping phase. In the ping phase, the TX transmits a digital ping to the RX. Accordingly, one voltage value of the voltage values V1, V2, V3, V4, and V5 generated at the time of transmission of the digital ping can be used. In the ping phase, the TX and the RX measure one value of the voltage values V1 to V5 and stores the measured value in the memory 106 or the memory 208.

The TX receives a predetermined packet including information of one voltage value of the voltages values V2, V4, and V5 notified from the RX and stores the information in the memory 106. The information included in the predetermined packet may include information such as a value of the received power or the self-inductance L2 and the constant calculated using electrical characteristics of the reception antenna in addition to the reception voltage of the RX.

The TX can be notified of information of the RX using a signal strength data packet as the predetermined packet. Alternatively, the predetermined packet may be an identification data packet or an extended identification data packet in the I&C phase.

Alternatively, the predetermined packet may be a configuration data packet. Alternatively, the predetermined packet may be a packet in the calibration phase or the power transfer phase.

That is, the predetermined packet may be a received power data packet (mode1), a received power data packet (mode2), or a received power data packet (mode0).

The present embodiment is not limited to an example in which a voltage value generated when the TX transmits a digital ping is used. In the selection phase, one voltage value of the voltage values V1 to V5 generated when the TX transmits an analog ping may be used.

When the RX performs the first measurement method, control may be performed such that the third switch unit 213 between the resonance capacitor 211 and the power receiving unit 203 is turned off and a terminal of a circuit constituted by the reception antenna 205 and the resonance capacitor 211 is in the open state. Accordingly, since execution of the first measurement method is not affected by the power receiving unit 203, the charging unit 206, and the battery 207, it is possible to measure the coupling state index with higher accuracy.

A second measurement method will be described below as another example of the method of measuring the coupling state between the transmission antenna and the reception antenna. FIG. 10(B) is an equivalent circuit diagram illustrating the second measurement method. Here, r1, r2, L1, and L2 are the same as illustrated in FIG. 10(A). Definition of physical quantities associated with the transmission antenna (coil) on the primary side (TX) is as follows.

- V6: An input voltage of the transmission antenna when the reception antenna is in the short-circuited state
- V7: An input voltage of the transmission antenna when the reception antenna is in the open state
- I1: A current flowing in the transmission antenna when the reception antenna is in the short-circuited state
- I2: A current flowing in the transmission antenna when the reception antenna is in the open state

The coupling coefficient k can be calculated using Expression 3.

$$k=\sqrt{(1-Lsc/Lopen)} \qquad \ldots \text{(Expression 3)}$$

In Expression 3, Lsc denotes inductance of the transmission coil when both ends of the reception coil are short-circuited. For example, the control unit 201 switches the third switch unit 213 and the second switch unit 210 to the ON state (the short-circuited state). The value of Lsc can be acquired by measuring the inductance value of the transmission coil in this state. The inductance value of the transmission coil can be calculated from the input voltage V6 and the current I1 of the transmission coil.

In Expression 3, Lopen denotes inductance of the transmission coil when both ends of the reception coil are open. For example, the control unit 201 switches the third switch unit 213 to the OFF state (the open state).

The value of Lopen can be acquired by measuring the inductance value of the transmission coil in this state. The inductance value of the transmission coil can be calculated from the input voltage V7 and the current I2 of the transmission antenna. In the second measurement method, the coupling state index (the coupling coefficient) can be calculated from the input voltage and the current of the transmission antenna when both ends of the reception antenna are short-circuited and when both ends of the reception antenna are open.

The TX can calculate the coupling state index on the basis of the transmission voltage and the current applied to a circuit (for example, an inverter) included in the power transmitting unit 103. In this case, the input voltages V6 and V7 are the transmission voltages applied to a circuit (for example, an inverter) included in the power transmitting unit 103.

The input voltages V6 and V7 may be voltages applied across both terminals of a series resonance circuit formed by the transmission antenna and the resonance capacitor. Alternatively, the transmission voltage applied to the circuit (for example, an inverter) included in the power transmitting unit 103 and the voltage applied across both ends of the resonance capacitor 107 may be measured, and the voltage applied to the transmission antenna may be calculated on the basis of the result of measurement.

That is, the coupling state index can be calculated on the basis of the transmission voltage applied to the circuit (for example, an inverter) included in the power transmitting unit 103 and the voltage applied across both ends of the resonance capacitor 107. In this case, the transmission voltage applied to the circuit (for example, an inverter) included in the power transmitting unit 103 may be calculated from a set value of the transmitted power by the TX.

In FIG. 10(B), the current I1 or I2 is not limited to a current flowing in the transmission antenna, but may be a current flowing in the circuit (for example, an inverter) included in the power transmitting unit 103. As described above in the example, the open state and the short-circuited state of the reception antenna are realized by causing the control unit 201 to control the second switch unit 210 and the third switch unit 213.

These states may be realized by the power receiving unit 203. The light load state may be used instead of the short-circuited state.

In the second measurement method, the TX can calculate the coupling state index by measuring the input voltage V6 and V7 and the currents I1 and I2. Accordingly, since information such as the voltage value measured by the RX or the inductance value of the reception antenna is not necessary, notification of the information from the RX to the TX is not necessary.

Here, when the TX measures the input voltage V6 and the current I1, the RX needs to short-circuit both terminals of a circuit including the reception antenna. When the TX measures the input voltage V7 and the current I2, the RX needs to open both terminals of a circuit including the reception antenna.

That is, the RX needs to control both terminals of the circuit including the reception antenna into a SHORT (short-circuited) or OPEN (open) state according to timings at which the TX measures the input voltage and the current.

The timing of measurement is determined and notified to the RX by the TX, or is determined and notified to the TX by the RX. This notification is performed by communication based on the WPC standard performed between the first communication unit 104 of the TX and the first communication unit 204 of the RX or communication based on a standard other than the WPC standard performed between the second communication unit 109 of the TX and the second communication unit 212 of the RX

Measurement of the input voltages V6 and V7 and the currents I1 and I2 is performed, for example, in the ping phase. In the ping phase, the TX transmits a digital ping to the RX. Accordingly, values of the input voltages V6 and V7 or the currents I1 and I2 which are generated at the time of transmission of the digital ping can be used.

In the ping phase, the TX acquires the values of V6, V7, I1, and I2, stores the acquired values in the memory 106, and calculates the coupling state index. The present embodiment is not limited to the example in which the voltage values and the current values generated when the TX transmits a digital ping are used. For example, values of V6, V7, I1, and I2 generated when the TX transmits an analog ping in the selection phase may be used.

In the present disclosure, both the first measurement method and the second measurement method can be applied as the method of measuring the coupling state between the transmission antenna and the reception antenna. A method of setting a state determination threshold value for the coupling state index acquired using the first or second measurement method will be described below.

Determination of a state is determination associated with detection of a foreign object between the transmission antenna and the reception antenna, determination associated with detection of misalignment between the transmission antenna and the reception antenna, or the like. It is possible to determine whether there is a state abnormality using a state determination threshold value by performing the first or second measurement method. First to fourth threshold value setting methods will be described below.

The first threshold value setting method is a method of setting a value of the coupling state index in a state in which there is no state abnormality as a threshold value for the coupling state index used to detect a state between the transmission antenna and the reception antenna.

In detection of a state, for example, determination results such as "there is a state abnormality," "there is a high likelihood of a state abnormality," "there is a low likelihood of a state abnormality," and "there is no state abnormality" can be obtained. It is assumed that an RX is placed on a test TX and there is no state abnormality between the transmission antenna and the reception antenna.

In this case, a value of a coupling state index between the test TX including the transmission antenna and the RX including the reception antenna can be set as the threshold value. The value (threshold value) of the coupling state index measured in advance is stored in the memory of the RX, and the RX notifies the TX of the threshold value. The TX performs a determination process associated with detection of a state using the threshold value. The RX may transmit the threshold value added to an FOD status data packet defined in the WPC standard and transmitted to the TX.

The second threshold value setting method is a method of setting a coupling state index measured using the first or second measurement method by the TX and the RX in a "state in which there is no state abnormality between the transmission antenna and the reception antenna" as the threshold value.

As a method of checking the "state in which there is no state abnormality between the transmission antenna and the reception antenna," a foreign object detection means using the power loss method or a state detection means of the TX and the RX using the Q-factor measuring method can be used.

When it is determined that there is no state abnormality, it can be checked as the "state in which there is no state abnormality between the transmission antenna and the reception antenna" with a high probability. That is, this check is performed by a method and means other than the first or second measurement method. When it is determined that "there is no state abnormality" (or "there is no foreign object"), the coupling state index is measured using the first or second measurement method, and an appropriate threshold value is set on the basis of the result of measurement.

For example, in the WPC standard, a foreign object detecting process using the Q-factor measuring method is performed in the negotiation phase or the renegotiation phase. When it is determined as the result of the foreign object detecting process that "there is no state abnormality" (or "there is no foreign object"), the coupling state index is measured using the first or second measurement method after the negotiation phase or the renegotiation phase.

A more appropriate threshold value can be set on the basis of the result of measurement. The foreign object detecting process using the power loss method is performed in the power transfer phase. After the foreign object detecting process has been performed, the coupling state index can be measured using the first or second measurement method, and a more appropriate threshold value can be set on the basis of the result of measurement.

Alternatively, the foreign object detecting process can be performed using the Q-factor or the like in the selection phase or the ping phase. In this case, after the phase in which the foreign object detecting process has been performed, the coupling state index can be measured using the first or second measurement method, and an appropriate threshold value can be set on the basis of the result of measurement.

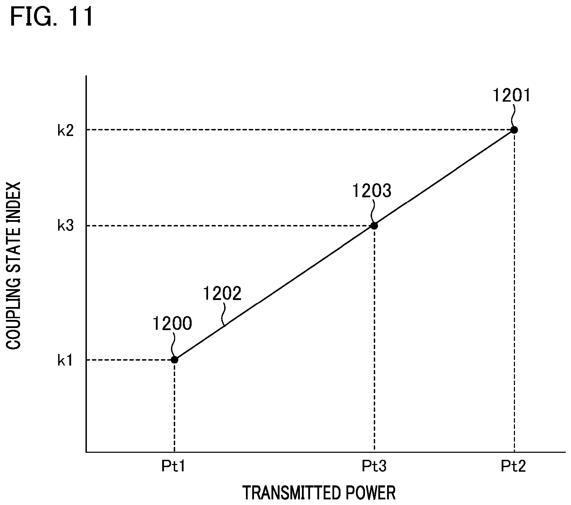

The third threshold value setting method will be described below with reference to FIG. 11. FIG. 11 is a diagram illustrating a threshold value setting method in detection of a state using a coupling state index. In FIG. 11, the horizontal axis represents a transmitted power, and the vertical axis represents a coupling state index.

On a graph line indicated by a linear segment 1202, a point 1200 corresponds to a transmitted power value Pt1 and a coupling state index value k1, and a point 1201 corresponds to a transmitted power value Pt2 and a coupling state index value k2.

On the graph line, a point 1203 corresponds to a transmitted power value Pt3 and a coupling state index value k3. In the following description, it is assumed that the reception voltage V4 or the output voltage V5 applied to a circuit (for example, a rectifier) included in the power receiving unit 203 of the RX is used to calculate a coupling state index value using the first measurement method.

When the charging unit 206 and the battery 207 are connected as a load to the power receiving unit 203 of the RX (see FIG. 3), the coupling state index value to be calculated varies according to a load state. A threshold value for the coupling state index needs to be set to determine whether there is a state abnormality according to the load state.

When electric power is transmitted from the TX, the RX first performs control such that the load is in the light load state. The light load state is a state in which the load of the RX is not supplied with electric power to or is supplied with only electric power equal to or less than the threshold value.

The transmitted power value in this state is defined as Pt1. The TX and the RX measure an input voltage on the TX side and the reception voltage on the RX side in that state. The TX and the RX exchange information on the input voltage and the reception voltage, and the TX or the RX calculates a coupling state index value k1.

At this time, the TX recognizes the transmitted power value Pt1 and stores the CP 1200 at which Pt1 and k1 are correlated in the memory. Then, the RX performs control such that the load of the RX is in the connected load state when electric power is transmitted from the TX.

In this state, the load of the RX is supplied with maximum electric power or is supplied with electric power equal to or greater than the threshold value. The transmitted power value of the TX in this state is defined as Pt2. The TX and the RX measure the input voltage on the TX side and the reception voltage on the RX side in that state.

The TX and the RX exchange information on the input voltage and the reception voltage, and the TX or the RX calculates a coupling state index value k2. The TX stores the CP 1201 at which Pt2 and k2 are correlated in the memory.

Subsequently, the TX performs linear interpolation between the CP 1200 and the CP 1201 and generates a segment 1202. The segment 1202 indicates a relationship between the transmitted power and the coupling state index in a state in which there is no state abnormality in the vicinity of the TX and the RX.

The TX can estimate the coupling state index value for each transmitted power value in the state in which there is no state abnormality in the vicinity of the TX and the RX using the segment 1202. For example, it is assumed that the transmitted power value is Pt3.

In this case, the coupling state index value k3 can be estimated from a point 1203 on the segment 1202 corresponding to the transmitted power value Pt3. On the basis of the estimation result, the TX can calculate the threshold value used to determine whether there is a state abnormality for each transmitted power value.

For example, the coupling state index value obtained by adding a predetermined value (a value corresponding to a measurement error) to the estimation result of the coupling state index value when there is no state abnormality at a certain transmitted power value can be set as the determination threshold value.

The CAL process which is performed in this way by the power transmission device 100 and the power reception device 200 in order for the power transmission device 100 to acquire a combination of a transmitted power value and a coupling state index value is referred to as a "CAL process using a coupling state measuring method." The RX may perform control for switching the load to the light load state and control for switching the load to the connected load state after the TX has been notified of the control. One of the two types of control may be first performed.

In the present embodiment, the operation of calculating the determination threshold value for detection of a state for each load (or for each transmitted power value) is performed, for example, in the calibration phase. In the calibration phase, the TX acquires data required for detecting a foreign object using the power loss method.

At that time, the TX acquires data on a power loss when the load state of the RX is the light load state and when the load state of the RX is the connected load state. Thereafter, measurement of the CP 1200 and the CP 1201 in FIG. 11 may be performed along with measurement of the power loss when the RX is in the light load state and when the RX is in the connected load state in the calibration phase.

That is, when a signal including the first reference received power information is received from the RX, the TX performs measurement of the CP 1200 in addition to a predetermined process to be performed in the calibration phase. The first reference received power information is information of a received power data packet (mode1) defined in the WPC standard, and another message may be used.

When a signal including the second reference received power information is received from the RX, the TX performs measurement of the CP 1201 in addition to a predetermined process to be performed in the calibration phase. The second reference received power information is information of a received power data packet (mode2) defined in the WPC standard, and another message may be used.

Since a period in which measurement of the CP 1200 and the CP 1201 is performed does not need to be separately provided, it is possible to measure the CP 1200 and the CP 1201 for a shorter time.

The fourth threshold value setting method is a method of causing the TX or the RX to set a threshold value in advance for the coupling state index having a value in a predetermined range. For example, when the coupling state index is the coupling coefficient k, the range of the k value is "$0 \leq k \leq 1$." For example, the TX or RX determines that "there is a state abnormality" when the range is "$0 \leq k < 0.2$" and determines that "there is a high likelihood of a state abnormality" when the range is "$0.2 \leq k < 0.5$."

The TX or RX determines that "there is a low likelihood of a state abnormality" when the range is "$0.5 \leq k < 0.8$" and determines that "there is no state abnormality" when the range is "$0.8 \leq k \leq 1$." Data on conditions for the k value is stored in advance in the memory, and the determination process is performed on the basis of the conditions.

In setting the determination threshold value for detection of a state using the coupling state index, the value obtained by adding a predetermined value (a value corresponding to a measurement error) to the coupling state index value which is calculated on the basis of the measurement result or the received information can be set as the determination threshold value. The number of threshold values is not limited to one, and a plurality of threshold values can be stepwise set as described above.

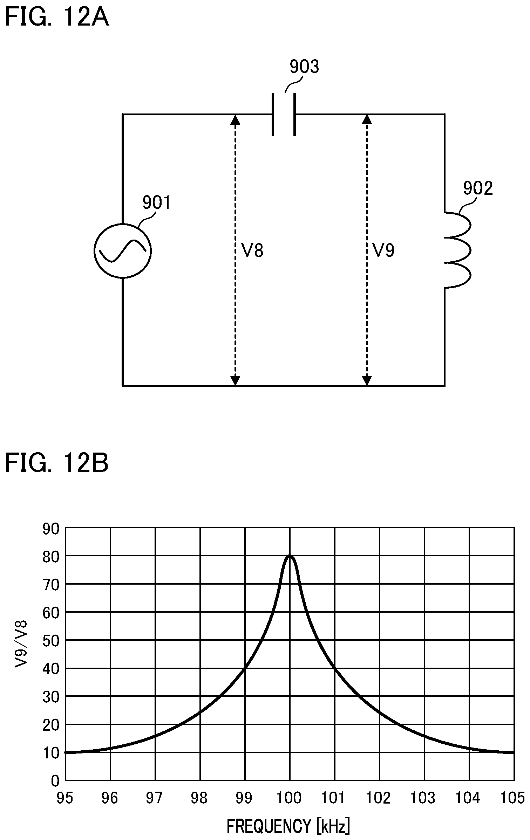

A state detecting process using the Q-factor measuring method and the method of measuring a coupling state between the transmission antenna and the reception antenna will be described below. By using the Q-factor measuring method and the first or second measurement method together, it is possible to detect a state with higher accuracy. The Q-factor measuring method will be more specifically described below with reference to FIG. 12.

FIG. 12(A) is a schematic circuit diagram illustrating a method of measuring a Q-factor using the Q-factor measuring method. An AC power supply 901 is a power supply that outputs an AC electric power which is generated by the power transmitting unit 103 of the TX. A transmission coil 902 corresponds to the transmission antenna 105, and a capacitor 903 corresponds to the resonance capacitor 107.

The transmission coil 902 and the capacitor 903 are connected in series. A voltage value V8 is a voltage value of a predetermined frequency which is generated by the power transmitting unit 103 and which is to operate the wireless power transfer system. A voltage value V9 is a voltage value which is applied to the transmission coil 902. Here, it is assumed that the TX can change the frequency of the voltage value.

The voltage values V8 and V9 are voltage values which are measured by the TX when the TX transmits an analog ping or a digital ping to the RX. Since the voltage values V8 and V9 are AC voltage values, a root-mean-square value (RMS) thereof may be used.

FIG. 12(B) illustrates characteristics with a peak at 100 kHz as an example of a measurement result of V9/V8 with respect to a frequency. The horizontal axis is a frequency axis, and the vertical axis represents a voltage ratio "V9/V8."

V9/V8 indicates the Q-factor associated with the transmission coil 902, and thus a value thereof changes when an object is placed in the vicinity of the transmission coil 902.

The change of the Q-factor varies among when no object is placed on the TX, when an RX is placed on the TX, when a foreign object (such as a metal piece) is placed on the TX, and when an RX and a foreign object are placed on the TX.

In the negotiation phase, the TX receives an FOD status data packet from the RX. The FOD status data packet includes a reference quality factor value and a reference resonance frequency value.

The reference quality factor value is a Q-factor which can be measured using a terminal of the transmission antenna of a test TX when an RX is placed on the test TX and there is no foreign object in the vicinity thereof.

The reference resonance frequency value is a resonance frequency that can be measured by the terminal of the transmission antenna of the test TX when an RX is placed on the test TX and there is no foreign object in the vicinity thereof.

In the Q-factor measuring method, a threshold value is set on the basis of the reference quality factor value. Detection of a foreign object is performed by comparing the threshold value with the Q-factor calculated from the actually measured V9/V8.

Alternatively, a threshold value is set on the basis of the reference resonance frequency value. Detection of a foreign object is performed by comparing the threshold value with the resonance frequency calculated from the actually measured V9/V8.

The Q-factor measuring method can be used to detect a foreign object mainly when a foreign object (such as a metal piece) is placed between the TX and the RX, but the detection accuracy of misalignment between the transmission antenna of the TX and the reception antenna of the RX is low.

On the other hand, the coupling state measuring method can detect misalignment between the transmission antenna of the TX and the reception antenna of the RX and can also detect a foreign object when the foreign object (such as a metal piece) is placed between the TX and the RX. Control is performed on the TX and the RX using the measured values using the methods as follows.

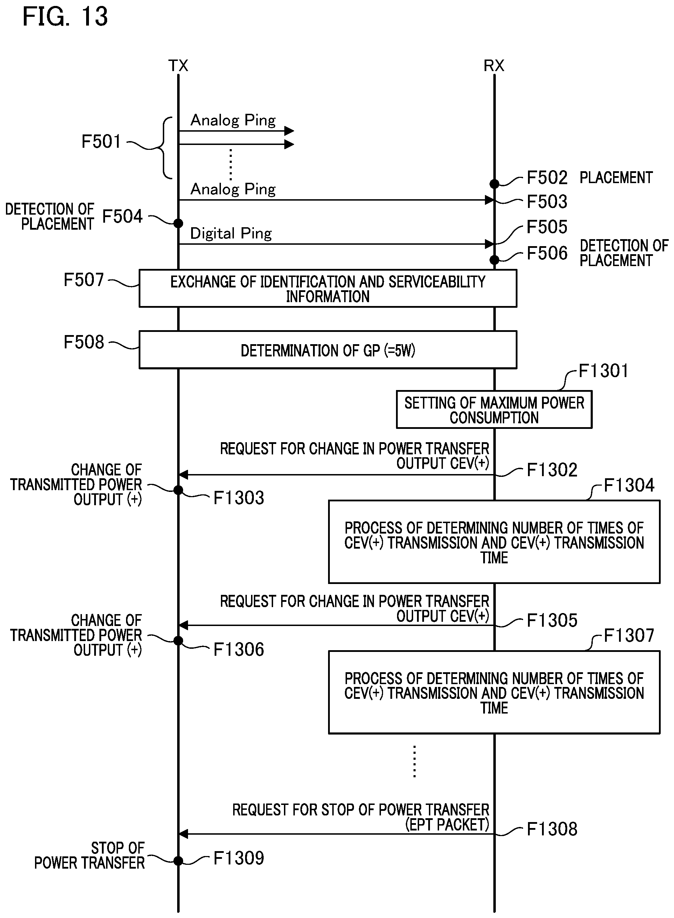

FIG. 13 is a sequence diagram illustrating an example of basic operations and control between the RX and the TX according to the present embodiment. F501 to F508 have been described above with reference to FIG. 7, thus description thereof will be omitted, and the sequence will be described from F1301.

A message for an power transfer output change request will be described using a CE and a CEV in the WPC standard, and a message for another power transfer output change request or instruction may be used. Since the GP value in F508 is 5, reference (target) received power information is received power information of the RX when the transmitted power of the TX is 5 watts.

The RX sets maximum power consumption in F1301, and then the TX transmits an power transfer output change request including CEV(+) to the TX in F1302. In F1303, the TX performs change of transmitted power (an increase of electric power) in response to the power transfer output change request from the RX.

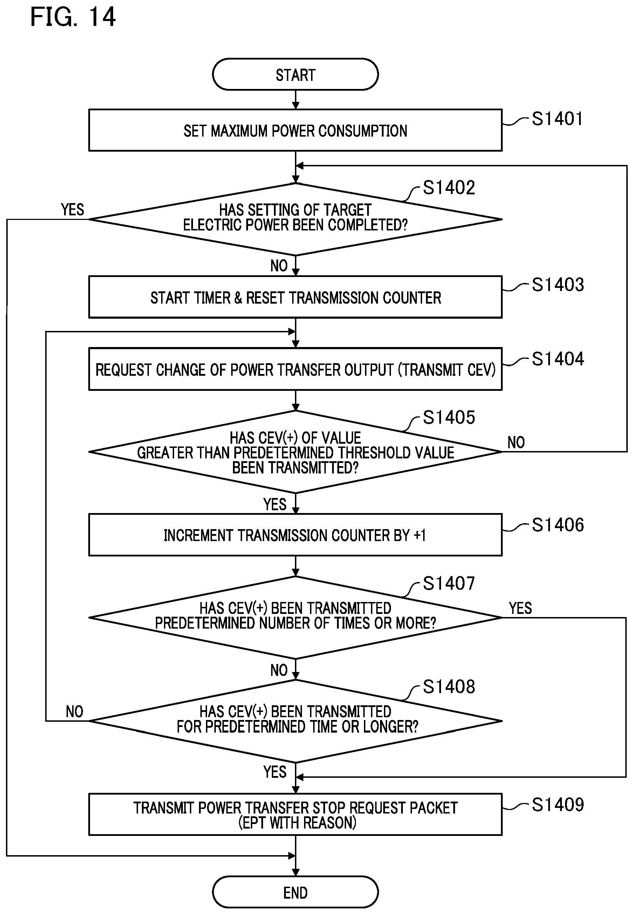

In F1304, the RX determines whether a CE including CEV(+) with a value greater than a predetermined threshold value has been transmitted to the TX for a predetermined time or longer or a predetermined number of times or more. The predetermined time is a time which is a determination threshold value, and the predetermined number of times is a number of times which is a determination threshold value. Details of the determination process will be described later with reference to FIG. 14.

In F1305, the RX transmits an power transfer output change request including CEV(+) to the TX again. In F1306, the TX performs change of transmitted power (an increase of electric power) in response to the power transfer output change request from the RX.

In F1307, the RX performs the determination process similarly to F1304. It is assumed that the same determination process in F1307 is performed after F1307 and determination conditions are satisfied. In F1308, the RX transmits an power transfer stop request to the TX.

For example, end power transfer (EPT) defined in the WPC standard is used as a command for ending power transfer. In F1309, the TX stops power transfer to the RX in response to the EPT from the RX.

Processes on the RX side in the basic operations and control between the RX and the TX according to the present embodiment will be described below with reference to FIG. 14. FIG. 14 is a flowchart illustrating a process of transmitting settings of maximum power consumption and an power transfer output change request including information on received power in the connected load state and a process of transmitting an power transfer stop request.

The RX sets maximum power consumption in S1401, and then the process flow proceeds to S1402. In S1402, the RX determines whether setting of target electric power has been completed. For example, when it is determined that the maximum power consumption which is set by the RX on the basis of information on a reception voltage (or a reception current or received power) at a current time point is not supplied (S1402: NO), the process flow proceeds to S1403.

When it is determined that the target maximum power consumption is supplied using the CE to the TX (S1402: YES), the RX determines that setting of the maximum power consumption has been completed, and the process flow ends.

In S1403, the RX performs an initialization process for transmitting the CE. Specifically, a process of starting a transmission timer at the time of transmission of CE from the RX to the TX and resetting a transmission counter for recording transmission of CE is performed.

Then, in S1404, the RX transmits an power transfer output change request to the TX. Specifically, the RX transmits CE including CEV(+) to the TX in order to increase the transmitted power from the TX up to 5 watts (FIG. 13: F1302).

When control for change of transmitted power starts, there is a largest difference in electric power between the RX and the TX. Accordingly, the value of CEV(+) included in CE at that time is stored as a first threshold value (referred to as threshold value 1) of CEV included in CE continuously transmitted to achieve the target maximum power consumption in the memory 208. The TX performs control for increasing the transmitted power in the power transmitting unit 103 on the basis of a positive designated value of CEV(+) included in CE from the RX (FIG. 13: F1303).

Then, in S1405, the RX determines whether CE including CEV(+) greater than threshold value 1 has been transmitted to the TX. When it is determined that CE including CEV(+) greater than threshold value 1 has been transmitted to the TX (S1405: YES), the process flow proceeds to S1406. When it is determined that CE including CEV(+) greater than threshold value 1 has not been transmitted to the TX (S1405: NO), the process flow proceeds to S1402.

In S1406, the RX performs count-up (+1) of the transmission counter. In S1407, the RX checks the number of times CE including CEV(+) greater than threshold value 1 has been transmitted to the TX. When the number of times of transmission is equal to or greater than a predetermined number (S1407: YES), the process flow proceeds to S1409. In this case, the RX determines that a system error has occurred.

This system error is a state in which the RX transmits CE including CEV(+)to the TX and the reception voltage or the like has not reached a desired value even if electric power is continuously transmitted. At this time, an abnormality in both devices is doubted such as a non-increase of a voltage or the like due to breakdown of the TX or occurrence of erroneous detection of a voltage or the like in the RX. On the other hand, when the number of times of transmission is less than the predetermined number (S1407: NO), the process flow proceeds to S1408.

In S1408, the RX determines whether CE including CEV(+) greater than threshold value 1 has been transmitted to the TX for a predetermined time or longer. When it is determined that the CE has been transmitted to the TX for a predetermined time or longer, the process flow proceeds to S1409. When it is determined that the CE has not been transmitted to the TX for a predetermined time or longer, the process flow proceeds to Step S1404.

In S1409, first power transfer control is performed. The first power transfer control is performed by causing the RX to request the TX to stop power transfer. For example, the RX transmits an power transfer stop request to the TX using an EPT defined in the WPC standard.

The EPT is an power transfer stop request packet with a reason including data indicating the reason for requesting the TX to stop power transfer. On the other hand, when the EPT is received from the RX, the TX stops supply of electric power from the power supply unit 102 to the power transmitting unit 103 and stops power transfer to the RX (FIG. 13: F1309).

In the example illustrated in FIG. 14, when CE including CEV(+) greater than threshold value 1 has been transmitted to the TX for a predetermined time or longer or a predetermined number of times or more, the first power transfer control is performed.

When the number of times of transmission of the CE has not reached a predetermined number, a time in which the CE is transmitted to the TX is compared with a threshold time. That is, by checking a clocked time of the transmission timer started in the initialization process for transmitting the CE, it is possible to determine whether CE including CEV(+) greater than threshold value 1 has been transmitted to the TX for a time equal to or longer than the threshold time.

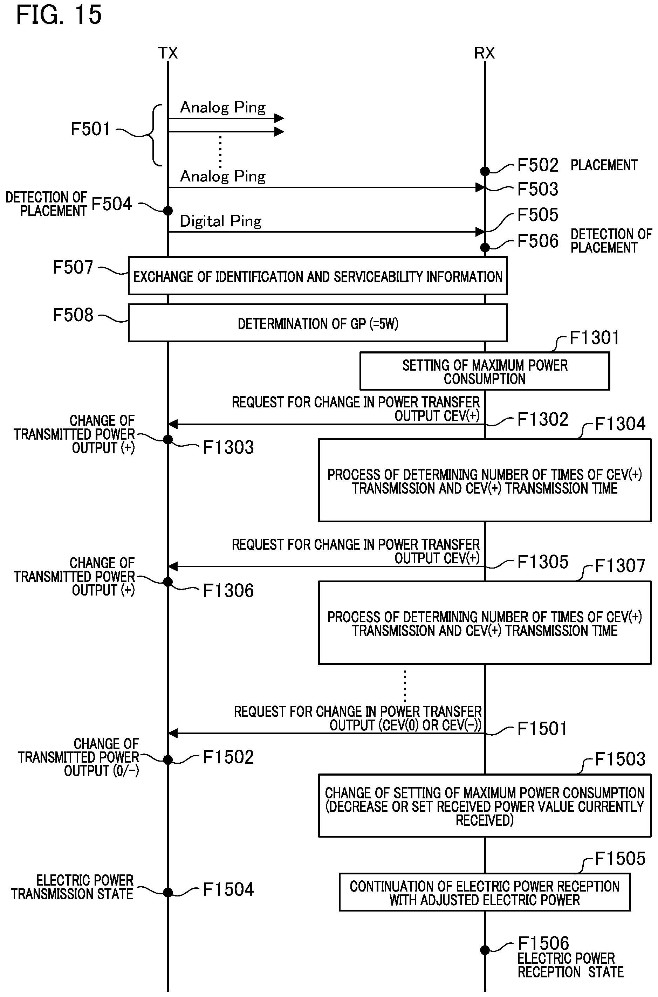

An example illustrated in FIG. 15 will be described below. In FIG. 15, description of F501 to F508 and F1301 to F1307 which are the same as illustrated in FIG. 13 will be omitted, and F1501 to F1506 which are differences will be described.

In F1501, the RX transmits an power transfer output change request including CEV(0) or CEV(-) to the TX. In F1502, the TX performs maintenance of transmitted power corresponding to CEV(0) or change of transmitted power (decrease of electric power) corresponding to CEV(-) in response to the power transfer output change request from the RX.

In F1503, the RX changes setting of maximum power consumption. The RX performs setting of decreasing maximum power consumption or setting of a received power value currently received from the TX. In F1504, the TX maintains the power transfer state based on the power transfer control in F1502 in association with the maximum power consumption of the RX. On the other hand, the RX continues to receive electric power from the TX with the adjusted electric power in F1505, and this electric power reception state is maintained in F1506.

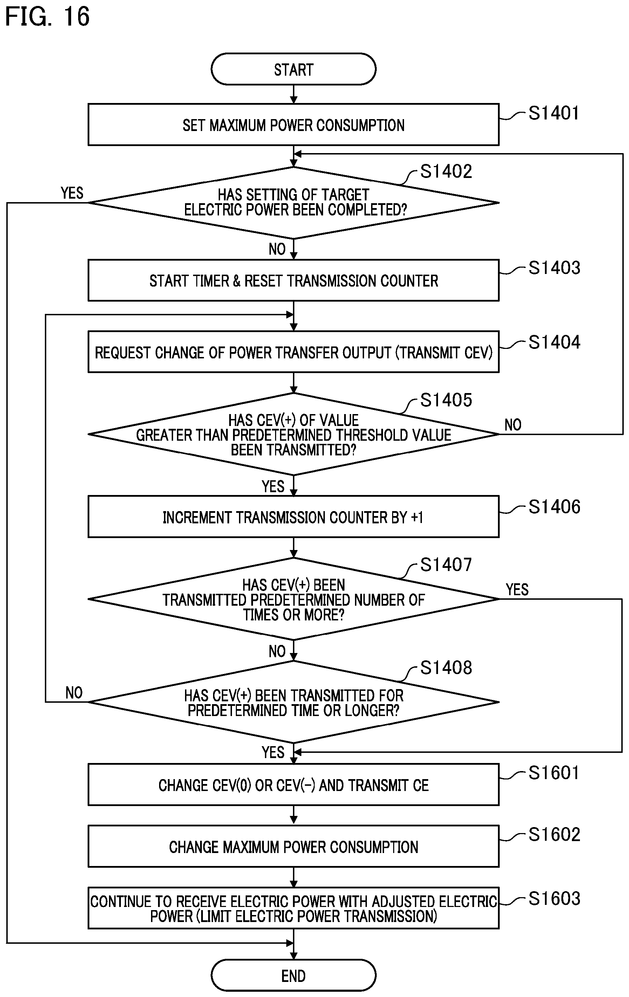

Processes on the RX side will be described below with reference to FIG. 16. In FIG. 16, description of F1401 to F1408 which are the same as illustrated in FIG. 14 will be omitted, and F1601 to F1603 which are differences will be described.

When the determination conditions in S1407 (CEV(+) has been transmitted a number of times equal to or greater than a threshold value) or the determination conditions in S1408 (CEV(+) has been transmitted for a time equal to or longer than a threshold value) are satisfied, the process flow proceeds to S1601, and second power transfer control is performed.

The second power transfer control is performed by causing the RX to request the TX to limit transmitted power, and includes two following methods.

In the first method, the RX request the TX to maintain a current electric power transmitting operation for the purpose of maintaining power consumption during reception of electric power. In this case, CE including CEV(0) is transmitted from the RX to the TX.

In the second method, the RX requests the TX to decrease transmitted power for the purpose of setting the maximum power consumption to be low. In this case, CE including CEV(3) is transmitted from the RX to the TX. The TX performs control for maintaining or changing (decreasing) transmitted power according to CEV(0) or CEV(-) included in CE from the RX (FIG. 15: F1502).

In S1602 subsequent to S1601, the RX changes settings of the maximum power consumption. The TX maintains the power transfer state based on the first or second method for the maximum power consumption of the RX (FIG. 15: F1504). In S1603, the RX continues to receive electric power with the adjusted electric power, and the transmitted power is limited.

The basic operation in the second power transfer control includes communication between the TX and the RX, setting an electric power value less than a threshold value through negotiation, and power transfer from the TX to the RX. For example, when a minimum electric power value is set as the GP value and the TX transmits electric power to the RX, transmitted power from the TX to the RX decreases.

Even if a foreign object is detected, an amount of heat generated from the foreign object can be decreased. The GP value may be changed according to the value of the coupling coefficient k or the Q-factor or the values of the coupling coefficient k and the Q-factor, and the TX may transmit electric power to the RX.

[Modified Example]

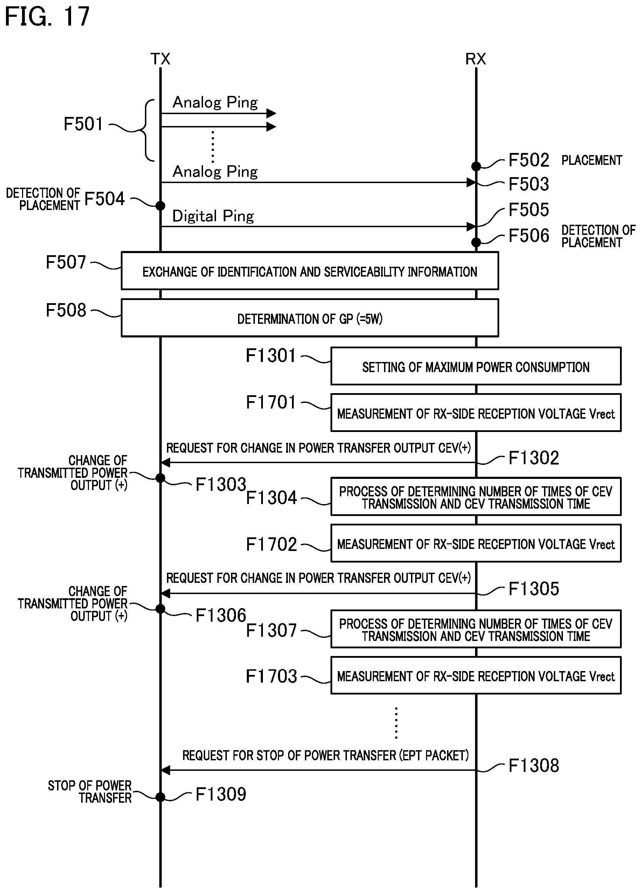

A modified example of the first embodiment will be described below with reference to FIGS. 17 to 20. An power reception device 200 according to the modified example determines CEV on the basis of a voltage value Vrect (see FIG. 3: 214) applied to the power receiving unit 203. The power reception device 200 determines whether to perform the first and second power transfer control on the basis of Vrect.

First, an example illustrated in FIG. 17 will be described. Description of F501 to F508 and F1301 to F1309 which are the same as illustrated in FIG. 13 will be omitted, and F1701, F1702, and F1703 which are differences will be described.

In F1701 subsequent to F1301, the RX measures Vrect of the power receiving unit 203. The RX determines CEV(+), CEV(0), or CEV(-) included in CE which is an power transfer output change request using the measurement result of Vrect. In F1702 subsequent to F1304 or F1703 subsequent to F1307, the same operation as in F1701 is performed.

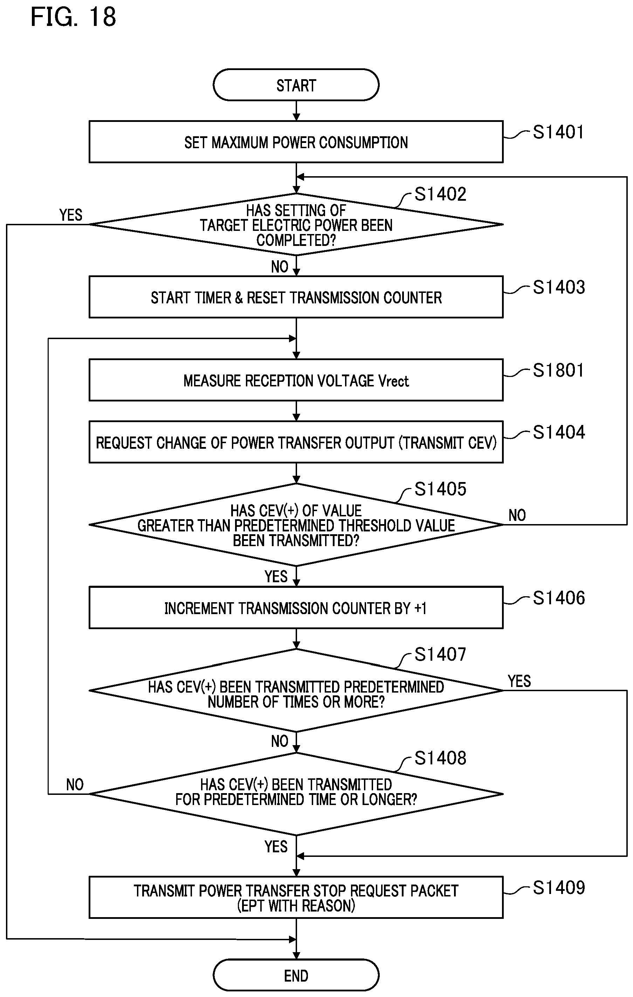

Processes on the RX side will be described below with reference to FIG. 18. Description of F1401 to F1409 which are the same as illustrated in FIG. 14 will be omitted, and F1801 which is a difference will be described.

In S1801 subsequent to S1403, the RX measures Vrect and determines CEV(+), CEV(0), or CEV(-) using the measurement result. After S1801, the process flow proceeds to S1404.

That is, when it is determined that CE including CEV(+) is transmitted to the TX as a result of measurement of the reception voltage Vrect less than a predetermined threshold value for a predetermined time or longer or a predetermined number of times or more, the RX transmits a request for change to first power transfer control to the TX.

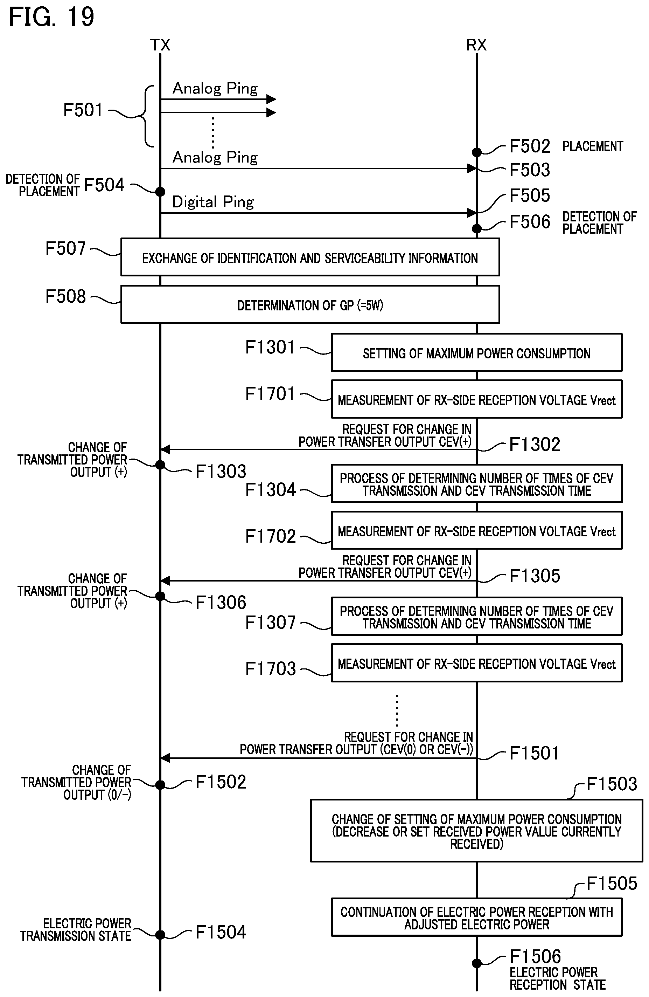

The example illustrated in FIG. 19 will be described below. Since F501 to F508 and F1301 to F1307 are the same as illustrated in FIG. 15 and F1701 to F1703 are the same as illustrated in FIG. 17, description thereof will be omitted. In FIG. 19, the operations of F1501 to F1506 in FIG. 15 are performed subsequently to F1703.

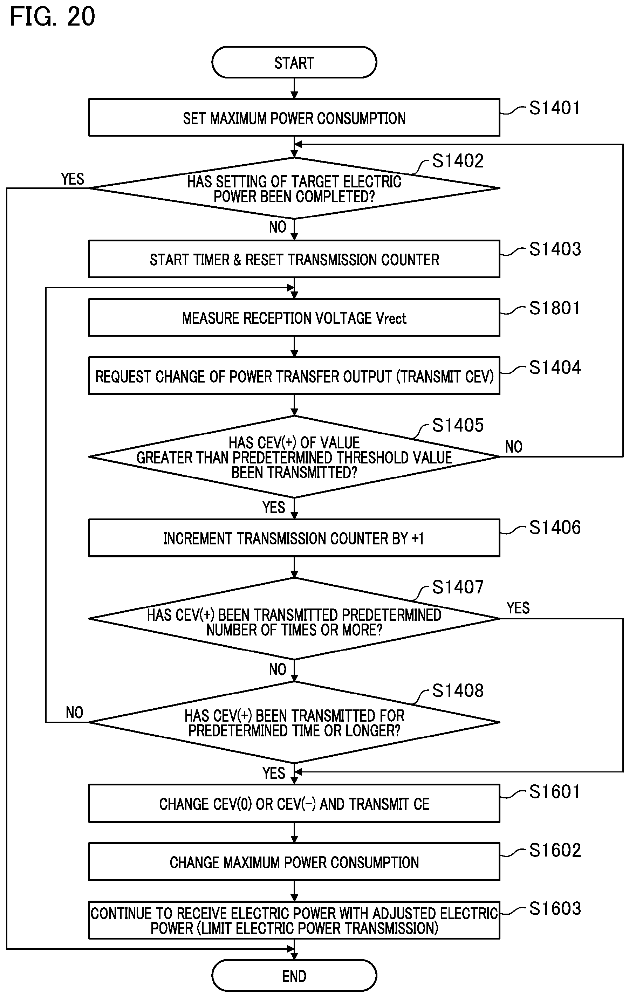

Processes on the RX side will be described below with reference to FIG. 20. Differences from FIG. 18 are as follows.

- The process of S1409 is deleted.
- The processes of S1601 to S1603 are performed when the determination conditions of S1407 or S1408 are satisfied.

The processes of S1601 to S1603 associated with the second power transfer control are the same as illustrated in FIG. 16, and thus description thereof will be omitted.

In FIG. 20, the RX sets maximum power consumption in S1401 and measures Vrect in S1801. The RX determines CEV(+), CEV(0), or CEV(-) on the basis of the result of measurement of Vrect.

The RX determines whether CE including CEV(+) has been transmitted to the TX as a result of measurement of the reception voltage Vrect less than a predetermined threshold value for a predetermined time or longer or a predetermined number of times or more. When this determination condition is satisfied, the RX transmits a request for change to the second power transfer control to the TX.

The RX may determine a system error from the result of measurement of Vrect. For example, it is assumed that a measured value equal to or greater than a predetermined threshold value is continuously measured as the result of measurement of Vrect. Whether there is a system error can be determined by determining whether the measured value satisfying the condition is continuously measured for a predetermined time or longer or a predetermined number of times or more.

In the modified example, the voltage value Vrect of the power receiving unit is used as electric power reception information. The present embodiment is not limited to this example, and CEV(+), CEV(0), or CEV(-) can be determined on the basis of value of a reception current or a received power of the power receiving unit.

In the present embodiment and the modified example, it is possible to perform appropriate power transfer control in a state in which there is a foreign object between the power transmission device and the power reception device and in a state in which there is a likelihood that the operation of the wireless power transfer system will fail and which is other than the state.

[Second embodiment]

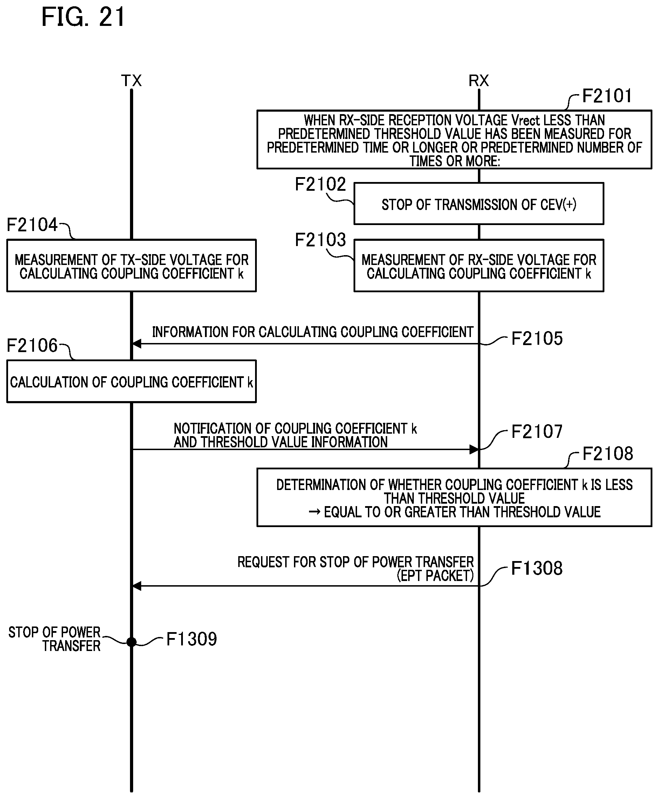

A second embodiment of the present disclosure will be described below with reference to FIGS. 21 to 32. In the present embodiment a method of detecting a state with higher accuracy using three methods will be described. The three methods include a power loss method, a waveform decay method, and a method of measuring a coupling state between a transmission antenna and a reception antenna. Features of the methods are as follows.

In the waveform decay method, a foreign object can be detected when the foreign object (such as a metal piece) is present between the TX and the RX, and the detection accuracy of misalignment between the transmission antenna and the reception antenna is low. The method of measuring a coupling state between a transmission antenna and a reception antenna and the power loss method, misalignment between the transmission antenna and the reception antenna can be detected, and a foreign object can also be detected when the foreign object (such as a metal piece) is present between the TX and the RX.

In the present embodiment, when it is difficult to determine presence of a foreign object, misalignment, or the like in addition to system breakdown of the wireless power transfer system in the first embodiment, following control is performed using results of measurement based on the three methods in addition to the aforementioned control in the first embodiment.

An example in which a coupling coefficient k is used as a coupling state index in order to specifically identify a system abnormality (such as breakdown, a foreign object, or a misalignment) will be described. The same details in the present embodiment as in the first embodiment will be referred to by the same numerals or signs or the like mentioned above, detailed description thereof will be omitted, and differences therefrom will be mainly described.

An example of basic operations and control between the RX and the TX in the present embodiment will be described below with reference to FIGS. 21 to 28. As the premise, it is assumed that threshold values for state determination in each method are set in a phase before power transfer starts (before the power transfer phase).

In the power transmission device or the power reception device constituting the wireless power transfer system, it is also assumed that a situation such as a foreign object or breakdown changes in real time. Accordingly, the process of setting threshold values in each method can be performed in the power transfer phase.

The example illustrated in FIG. 21 will be first described. In F2101, it is assumed that the RX measures Vrect less than a predetermined threshold value for a predetermined time or longer or a predetermined number of times or more. The operation of detecting a system abnormality using CEV(+) included in an power transfer output change request and the operation of the RX previous thereto are the same as the operations up to F1703 in FIG. 17, and thus description thereof will be omitted.

In F2102, the RX stops transmission of the power transfer output change request including CEV(+). In F2103, the RX measures voltages for calculating the coupling coefficient k on the basis of the first measurement method. When the second measurement method is used, measurement of a voltage on the RX side is not necessary. Specifically, the values of V2, V4, and V5 are acquired.

In F2104, the TX measures voltages for calculating the coupling coefficient k using the first or second measurement method. Specifically, the values of V1, V3, V6, and V7 are acquired. Measurement of these voltage values can be performed in each of the TX and the RX when the TX transmits an analog ping or a digital ping.

That is, measurement in F1301, F2104, and F2103 may be performed at the same timing. Accordingly, it is possible to perform measurement for a shorter time.

When the coupling coefficient k is calculated by the TX, the RX notifies the TX of information required for calculating the coupling coefficient k in F2105.

Alternatively when the coupling coefficient k is calculated by the RX, the TX notifies the RX of information required for calculating the coupling coefficient k. The information required for calculating the coupling coefficient is information such as the values of V1 to V7, the values of the self-inductance L1 and L2, and a constant which is calculated using electrical characteristics of the transmission antenna or the reception antenna.

In F2106, the TX calculates the coupling coefficient k and a threshold value therefor. Alternatively, the RX may calculate the coupling coefficient k. Regarding the threshold value for the coupling coefficient k, a value of the coupling state index, which is used to detect a state between the transmission antenna and the reception antenna, in a state in which there is no state abnormality is used using the first threshold value setting method described above with reference to FIG. 10.

In F2107, the TX notifies the RX of the calculated coupling coefficient k and the k threshold value information. In F2108, the RX determines whether the value of the coupling coefficient k is in a range based on the threshold value information. For example, it is assumed that the value of the coupling coefficient k is equal to or greater than the threshold value. In F1308, the RX transmits an power transfer stop request to the TX using an EPT packet.

In F1309, the TX stops power transfer in response to the power transfer stop request from the RX. The power transfer stop request and the operations subsequent thereto are the same as in the first embodiment, and thus detailed description thereof will be omitted.

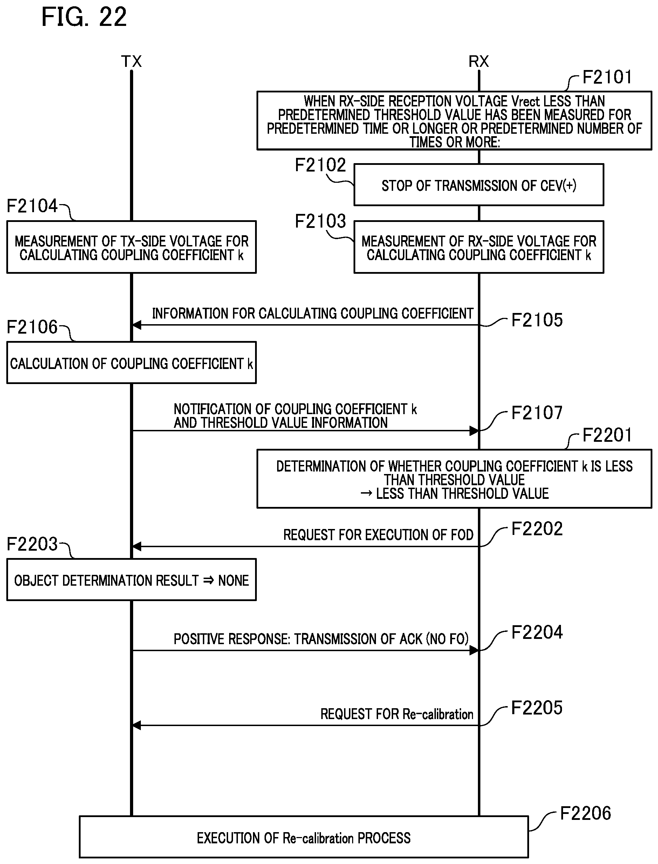

The example illustrated in FIG. 22 will be described below. Since F2101 to F2107 are the same as illustrated in FIG. 21, description thereof will be omitted, and only differences therefrom will be described. In F2201, the RX determines that the value of the coupling coefficient k is less than the threshold value on the basis of the coupling coefficient k and the k threshold value information. The following control is performed to detect a state with higher accuracy.

In F2202, the RX requests the TX to perform the power loss method associated with a first foreign object detecting function. When a first foreign object detection request is received from the RX, the TX detects a foreign object using the designated foreign object detecting method.

In F2203, the TX acquires a determination result indicating that a foreign object has not been detected. In F2204, the TX returns a positive response (ACK) to the RX. In F2205, the RX performs the following control when it is determined that "there is no foreign object" on the basis of the positive response (ACK) from the TX. The RX determines that there is a high likelihood that misalignment has occurred because the value of the coupling coefficient k is less than the threshold value and the result of first foreign object detection is "there is no foreign object."

In F2205, the RX requests the TX to perform the calibration process again (a re-calibration process). The RX checks preset operation mode information on whether to reset the transmitted power.

The operation mode information associated with the power transfer control of the RX is set to an initial value at the time of shipment of a product or the like or is set in accordance with a user's operation instruction after the product has been purchased. In F2206, the RX preforms the calibration process along with the TX again. In the third power transfer control, the re-calibration process is performed.

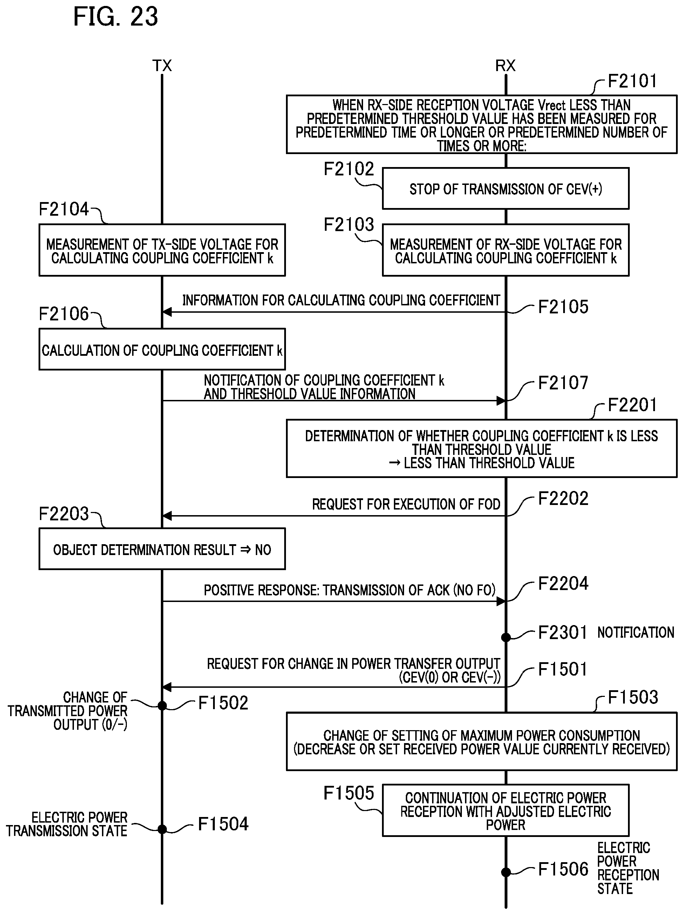

The example illustrated in FIG. 23 will be described below. Since F2101 to F2107 are the same as illustrated in FIG. 21 and F2201 to F2204 are the same as illustrated in FIG. 22, description thereof will be omitted, and only differences therefrom will be described.

In F2301 subsequent to F2204, the RX determines whether a user has to be notified of an alarm associated with misalignment. Settings of the alarm notification associated with misalignment of the RX from the TX are set to an initial value at the time of shipment of a product or the like or are set in accordance with a user's operation instruction after the product has been purchased.

When an alarm notification is set, the RX performs a notification process of prompting a user to realign the RX on the TX. This process can be realized, for example, by outputting various types of information to a user using the UI unit 202.

Outputting of various types of information includes operations such as screen display on a liquid crystal panel or the like, blinking or change in color of an LED, outputting of speech from a speaker, and body vibration of the RX using a vibration motor. When the RX is located at an optimal position on the TX through this alarm notification, the likelihood that electric power will be appropriately transmitted from the TX to the RX becomes higher.

An power transfer limiting process in F1501 to F1506 subsequent to F2301 are the same as the second power transfer control in the first embodiment, and thus detailed description thereof will be omitted.

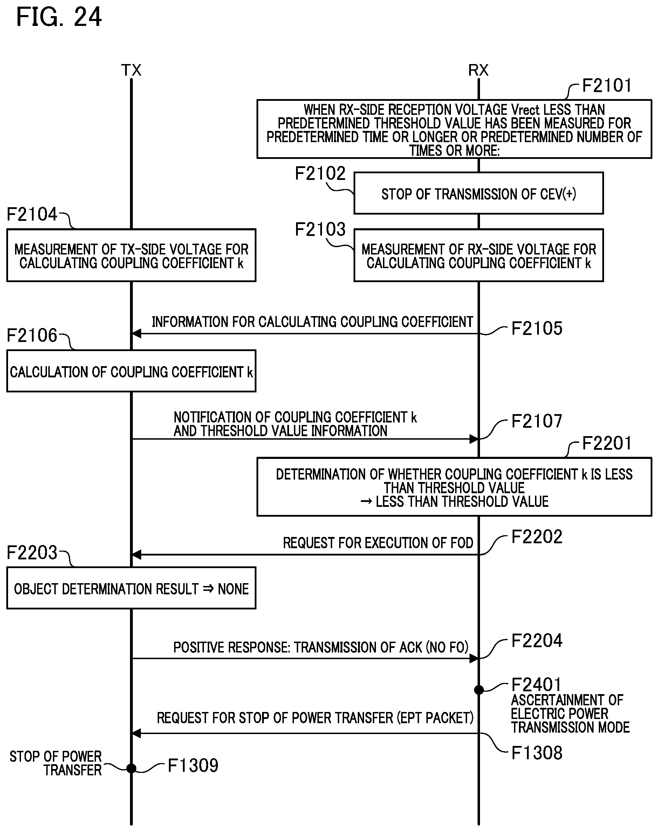

The example illustrated in FIG. 24 will be described below. Since F2101 to F2107 are the same as illustrated in FIG. 21 and F2201 to F2204 are the same as illustrated in FIG. 22, description thereof will be omitted, and only differences therefrom will be described.

In F2401, the RX determines whether to notify a user of an alarm associated with misalignment from the TX. When the alarm notification is not set, an power transfer control mode is checked.

In the power transfer control mode, the first power transfer control or the second power transfer control described above in the first embodiment is set. The power transfer control mode is set to an initial value at the time of shipment of a product or the like or is set in accordance with a user's operation instruction after the product has been purchased. When the first power transfer control is set in the power transfer control mode, the RX transmits an EPT which is an power transfer stop request to the TX in F1308. In F1309, the TX performs an power transfer stopping process.

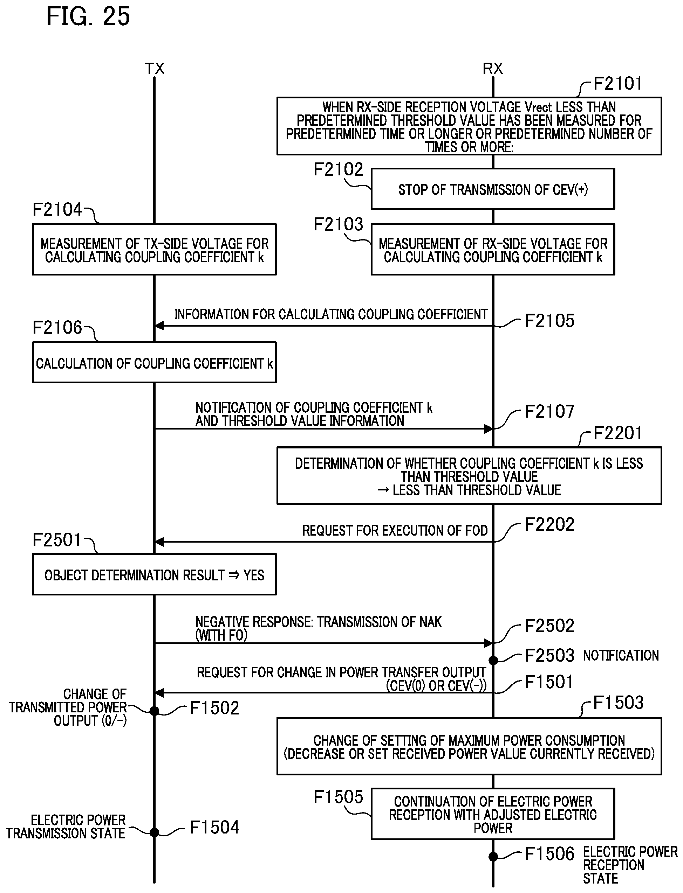

The example illustrated in FIG. 25 will be described below. Since F2101 to F2107 are the same as illustrated in FIG. 21 and F2201 to F2202 are the same as illustrated in FIG. 22, description thereof will be omitted, and only differences therefrom will be described.

Subsequently F2202, when the TX determines that a foreign object has been detected in F2501, the RX returns a negative response (NAK) to the RX in F2502. When the negative response (NAK) is received from the TX in F2502, the RX determines that "there is a foreign object."

The RX checks whether system settings have been set to perform the second foreign object detecting process. Settings indicating whether to perform the second foreign object detection are set to an initial value at the time of shipment of a product or the like or are set in accordance with a user's operation instruction after the product has been purchased.

When execution of the second foreign object detection is not set (not performed), the RX (or the TX) performs a process of notifying a user of the foreign object detection in F2503. This notification process is a notification process of prompting a user to remove a foreign object which is present between the transmission antenna and the reception antenna or on the transmission antenna.

This can be realized, for example, by outputting various types of information to a user using the UI unit 202 of the RX. Outputting of various types of information includes operations such as screen display on a liquid crystal panel, blinking or change in color of an LED, outputting of speech from a speaker, and body vibration of the RX using a vibration motor.

The outputting of various types of information in F2503 is set to be different from the outputting of various types of information in F2301, and control for enabling a user to distinguish both outputs is performed. Accordingly, the user can clearly ascertain whether there is a likelihood that misalignment between the transmission antenna and the reception antenna has occurred or whether there is a likelihood that a foreign object is present between the transmission antenna and the reception antenna.

When the foreign object is removed through notification of the user, the likelihood that electric power will be more appropriately transmitted from the TX to the RX becomes higher. Alternatively, the TX may have the same function as the UI unit 202 of the RX and notify a user to prompt removal of the foreign object on the TX. Then, F1501 to F1506 which are performed between the RX and the TX are the same as illustrated in FIG. 23, and thus detailed description thereof will be omitted.

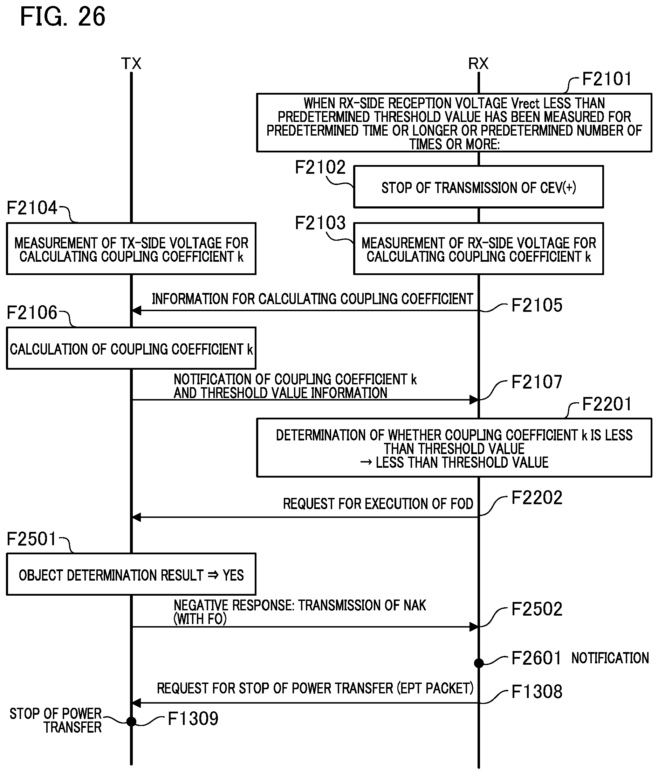

The example illustrated in FIG. 26 will be described below. Since F2101 to F2107 are the same as illustrated in FIG. 21 and F2201 and F2202 are the same as illustrated in FIG. 22, and F2501 and F2502 are the same as illustrated in FIG. 25, description thereof will be omitted, and only differences therefrom will be described.

When the first power transfer control is set in the power transfer control mode, the RX performs the notification process in F2601 similarly to F2503. F1308 and F1309 which are performed between the RX and the TX thereafter are the same as in the first power transfer control described above with reference to FIG. 21, and thus detailed description thereof will be omitted.

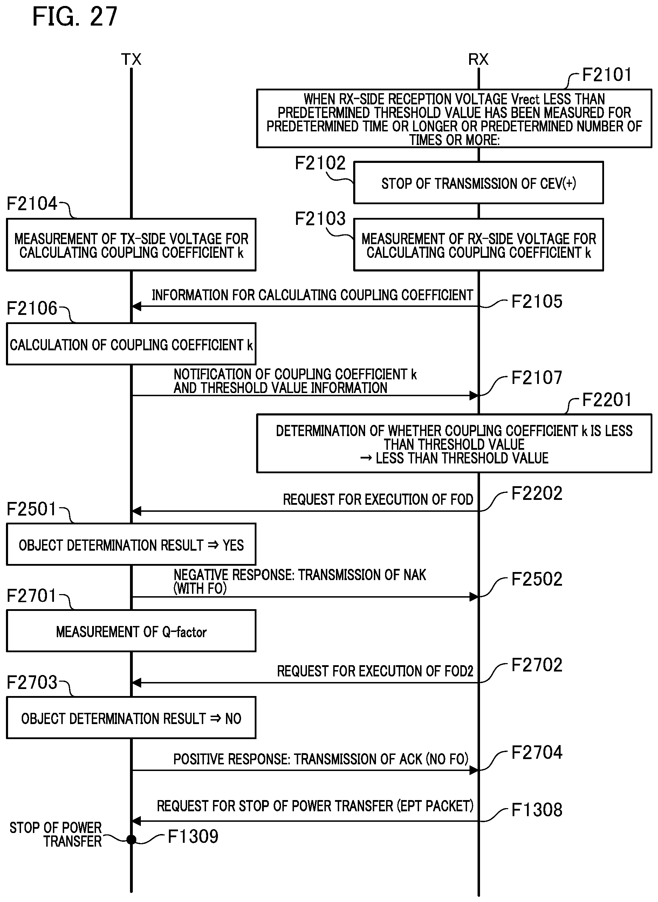

The example illustrated in FIG. 27 will be described below. Since F2101 to F2107, F2201, F2202, F2501, and F2502 are the same as illustrated in FIG. 26, description thereof will be omitted, and only differences therefrom will be described.

Subsequently to F2502, the TX prepares for measurement of a threshold value for performing the second foreign object detection in F2701. It is assumed that the second foreign object detection is, for example, foreign object detection based on the measurement result of the waveform decay index using the waveform decay method, and a Q-factor is used as the waveform decay index.

The second foreign object detection is performed subsequently to the first foreign object detection, but may be performed on time according to necessity such that the measurement is performed in advance at a timing immediately after power transfer is started. In the following description, measurement of the waveform decay index based on the waveform decay method which is performed for the second foreign object detection is referred to as "Q-factor measurement."

The TX measures a Q-factor in F2701, and the RX requests execution of the second foreign object detection in F2702. The TX acquires a determination result indicating that "there is no foreign object" in F2703, and the TX returns a positive response (ACK) to the RX in F2704.

When the positive response (ACK) is received from the TX, the RX determines that "there is no foreign object." In the example illustrated in FIG. 27, "there is a foreign object" which is the result of the first foreign object detection and "there is no foreign object" which is the result of the second foreign object detection conflict with each other.

Accordingly, it is determined that a system error has occurred between the RX and the TX, and the power transfer stopping process is performed in consideration of safety. In the following description, F1308 and F1309 which are performed between the RX and the TX are the same as in the first power transfer control described above with reference to FIG. 21, and thus detailed description thereof will be omitted.

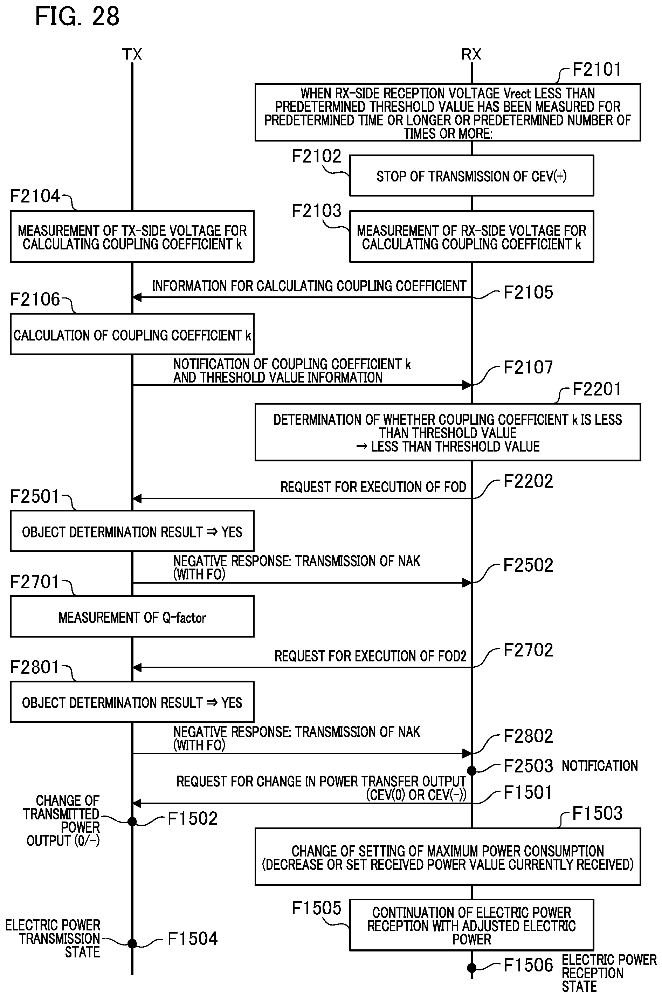

The example illustrated in FIG. 28 will be described below. Since F2101 to F2702 are the same as illustrated in FIG. 27, description thereof will be omitted, and only differences therefrom will be described. The TX acquire the determination result indicating "there is a foreign object" in the second foreign object detection in F2801 and returns a negative response (NAK) to the RX in F2802.

When the negative response (NAK) is received from the TX, the RX determines that "there is a foreign object," and the RX (or the TX) performs a process of notifying a user of the foreign object detection in F2503. In the example illustrated in FIG. 28, "there is a foreign object" which is the result of the first foreign object detection and "there is a foreign object" which is the result of the second foreign object detection do not conflict with each other.

The notification process is the same as described above in F2503 in FIG. 25. In the following description, F1501 to F1506 which are performed between the RX and the TX are the same as illustrated in FIG. 25, and thus detailed description thereof will be omitted.

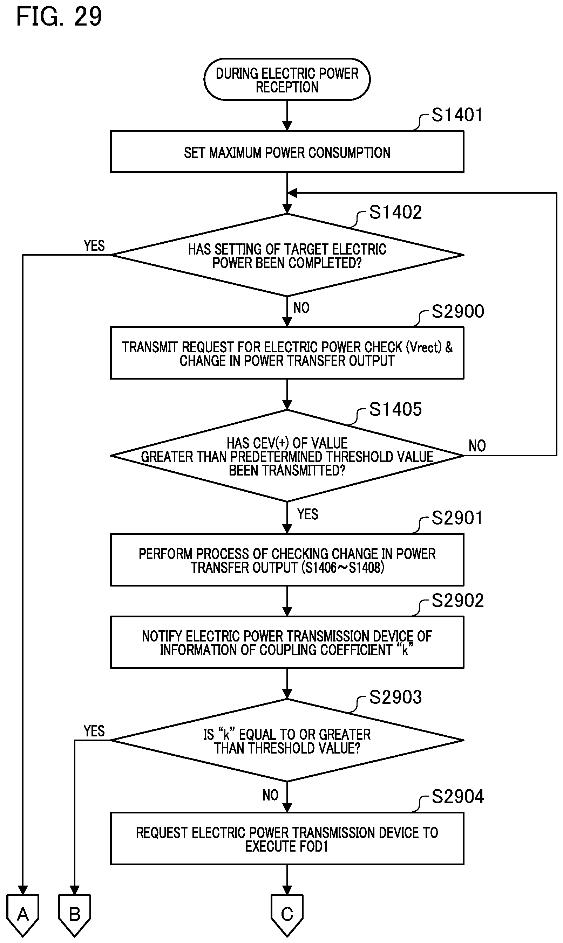

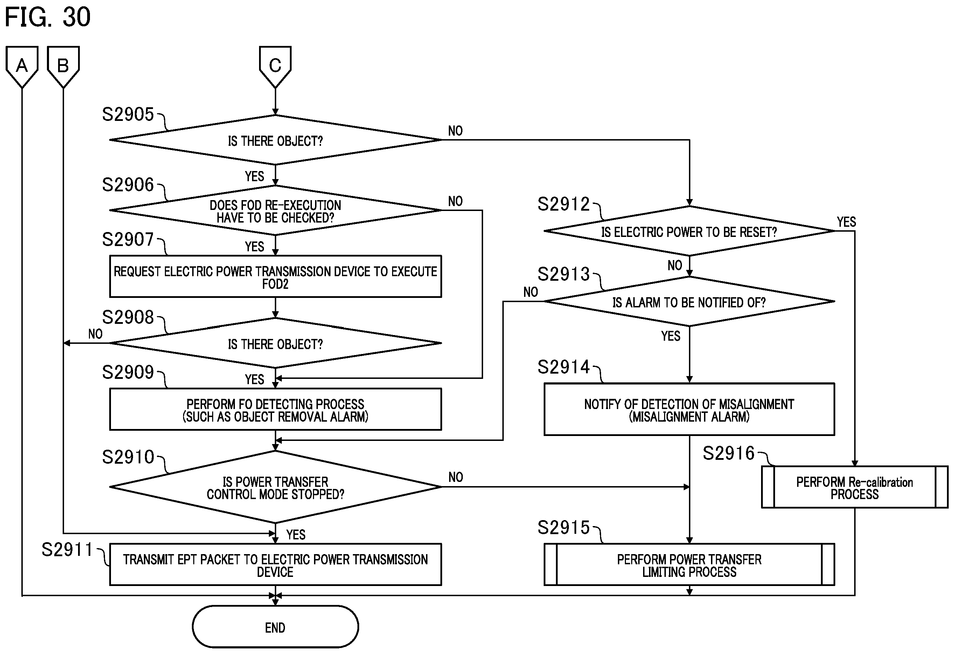

FIGS. 29 and 30 are flowcharts illustrating processes on the RX side in the basic operation and control between the RX and the TX according to the present embodiment. The processes of S1401, S1402, and S1405 in FIG. 29 are the same as illustrated in FIGS. 14 and 18, and thus detailed description thereof will be omitted.

When setting of target electric power has not been completed in S1402, the RX performs check of electric power based on the reception voltage Vrect and transmission of the power transfer output change request in S2900. The check of electric power based on Vrect is performed using a measured value of Vrect which is measured in the same way as in S1801 in FIG. 18. Transmission of the power transfer output change request is the same as described above in S1403 and S1404 in FIG. 14. After S2900, the process flow proceeds to S1405.

When the determination condition of S1405 is satisfied, the process flow proceeds to S2901. A process of checking change of the power transfer output is performed in S2901. This process is the same as described above in S1406 to 1408 in FIG. 14.

Then, in S2902, the RX notifies the TX calculating the coupling coefficient k of information (information such as the voltage value, the self-inductance value, and the constant calculated using electrical characteristics of the transmission antenna or the reception antenna) required for calculation of the coupling coefficient k. After S2902, the process flow proceeds to S2903.

In S2903, the RX compares the coupling coefficient k acquired from the TX with threshold value information therefor. When the value of the coupling coefficient k is equal to or greater than the threshold value (S2903: YES), the process flow proceeds to S2911 in FIG. 30. When the value of the coupling coefficient k is less than the threshold value (S2903: NO), the process flow proceeds to S2904 in order to detect a state with higher accuracy.

In S2904, the RX requests the TX to perform the power loss method which is the first foreign object detecting function (FODS1). In S2905 in FIG. 30, the RX determines whether "there is a foreign object." When a negative response (NAK) is received from the TX, the RX determines that "there is a foreign object" (S2905: YES), and the process flow proceeds to S2906. When the RX determines that "there is no foreign object" (S2905: NO), the process flow proceeds to S2912.

In S2906, the RX determines whether the system is set to perform a second foreign object detecting process (FOD2). When execution of the second foreign object detecting process is set (S2906: YES), the process flow proceeds to S2907. When execution of the second foreign object detecting is not set (S2906: NO), the process flow proceeds to S2909.

In S2907, the RX requests the TX to perform the second foreign object detecting (FOD2). The RX requests the TX to perform detection of a foreign object using the waveform decay method. Then, in S2908, the RX determines whether "there is a foreign object."

When the negative response (NAK) is received from the TX, the RX determines that "there is a foreign object" (S2908: YES), and the process flow proceeds to S2909. When the positive response (ACK) is received from the TX, the RX determines that "there is no foreign object" (S2908: NO), the process flow proceeds to S2911.

In S2909, the RX performs a notification process associated with detection of a foreign object on the basis of the result of foreign object detection. For example, the RX performs an alarm notification process of prompting a user to remove a foreign object which is present between the transmission antenna and the reception antenna or on the transmission antenna. After S2909, the process flow proceeds to S2910.

S2910, the RX determines whether first power transfer control is set in the power transfer control mode. The first power transfer control is control for stopping power transfer from the TX to the RX, and the process flow proceeds to S2911 when the first power transfer control is set. When the first power transfer control is not set (when the second power transfer control is set), the process flow proceeds to S2915.

In S2911, the RX performs an power transfer stopping process along with the TX. For example, the RX determines that there is a likelihood that a system error has occurred and transmits an EPT packet to the TX. Then, the process flow ends.

In S2912, the RX determines whether to reset electric power. When the result of foreign object detection in S2905 does not indicate that "there is a foreign object" and there is a high likelihood that misalignment has occurred, the RX determines whether to perform calibration again and to reset transmitted power on the basis of the operation mode information.

When the operation mode information indicates that electric power is to be reset (S2912: YES), the RX causes the process flow to proceed to S2916. When the operation mode information indicates that electric power is not to be reset (S2912: NO), the RX causes the process flow to S2913.

In S2913, the RX determines whether to perform alarm notification of the misalignment detection result. When the alarm notification is set (S2913: YES), the process flow proceeds to S2914. When the alarm notification is not set (S2913: NO), the process flow proceeds to S2910.

In S2914, the RX performs a notification process on the basis of the result of misalignment detection. A user is notified of an alarm for prompting a user to realign the RX on the TX.

In S2915 subsequent to S2914, the RX performs an power transfer limiting process with the TX. The power transfer limiting process is the same as the second power transfer control described above in the first embodiment. Then, the process flow ends.

In S2916, the RX performs a re-calibration process. The RX transmits a message for requesting execution of the re-calibration process to the TX. Then, the process flow ends.

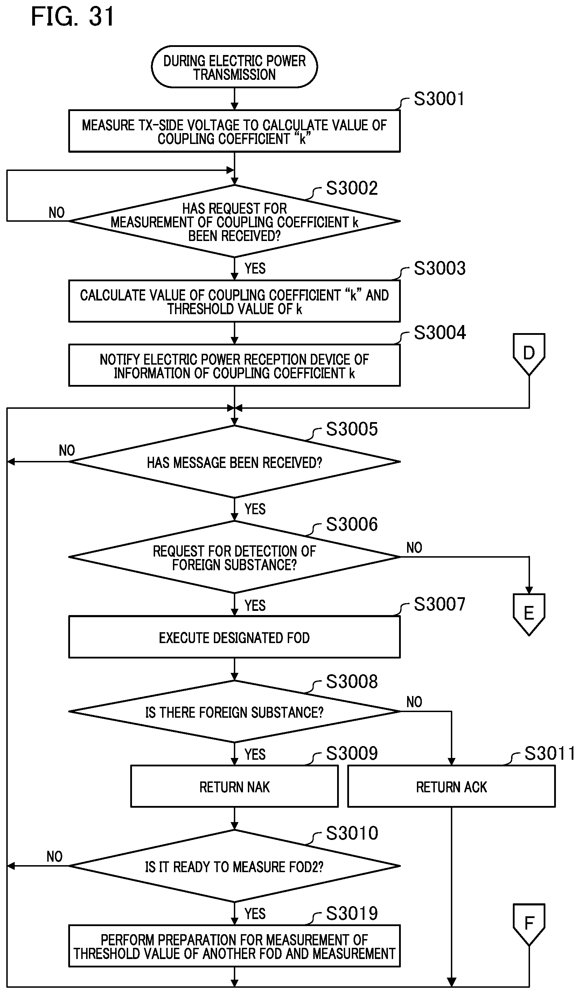

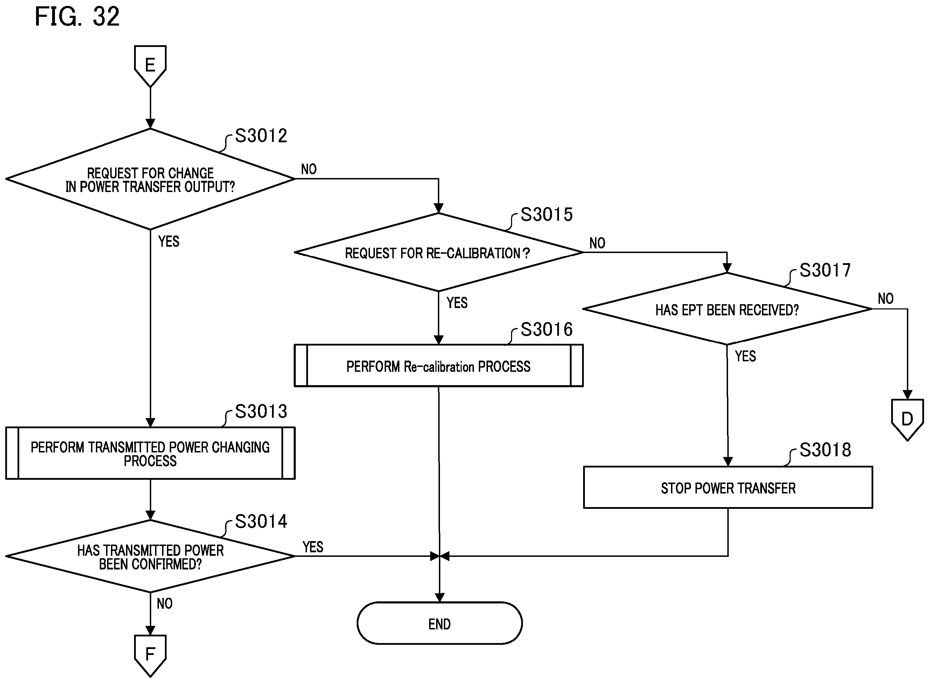

FIGS. 31 and 32 are flowcharts illustrating processes on the TX side associated with the basic operation and control between the RX and the TX in the present embodiment. In S3001, the TX measures voltages for calculating the coupling coefficient k on the basis of the first or second measurement method.

In S3002, the TX determines whether a request for measurement of the coupling coefficient k has been received from the RX. When a request for calculation the coupling coefficient k (or transmitting necessary information) has been received from the RX (S3002: YES), the TX causes the process flow to proceed to S3003. Alternatively, when it is determined that the request for measurement has not been received, the determination process of S3002 is repeatedly performed.

In S3003, the TX calculates the coupling coefficient k and the k threshold value. Then, in S3004, the TX notifies the RX of the coupling coefficient k and the k threshold value information calculated in S3003. Then, in S3005, the TX determines whether a message has been received from the RX.

When it is determined that a message has been received from the RX (S3005: YES), the process flow proceeds to S3006. When it is determined that a message has not been received from the RX, the determination process of S3005 is repeatedly performed.

In S3006, the TX determines whether a request for first foreign object detection has been received from the RX. The TX causes the process flow to proceed to S3007 when a request for first foreign object detection has been received (S3006: YES) and causes the process flow to proceed to S3012 in FIG. 32 when it is determined that a request for first foreign object detection has not been received (S3006: NO).

IN S3007, the TX detects a foreign object using the designated first foreign object detecting method. Then, in S3008, the TX determines whether a foreign object has been detected. When it is determined that a foreign object has been detected (S3008: YES), the TX causes the process flow to proceed to S3009. When it is determined that a foreign object has been detected (S3008: NO), the process flow proceeds to S3011.

In S3009, the TX returns a negative response (NAK) to the RX. Then, in S3010, the TX determines whether to prepare for measurement of second foreign object detection. When it is determined that measurement is to be prepared for (S3010: YES), the TX causes the process flow to proceed to S3019.

When it is determined that that measurement is not to be prepared for (S3010: NO), the process flow proceeds to S3005 for the purpose of continuous execution of other control associated with power transfer. The TX returns the positive response (ACK) to the RX in S3011 and then causes the process flow to proceed to S3005.

In S3019, the TX prepares for measurement a threshold for second foreign object detection and then performs measurement. Specifically, measurement of a Q-factor is performed. Subsequently to S3019, the process flow proceeds to S3005.

In S3012 in FIG. 32, the TX determines whether an power transfer output change request has been received from the RX. When it is determined that an power transfer output change request has been received (S3012: YES), the process flow proceeds to S3013. When it is determined that an power transfer output change request has not been received (S3012: NO), the process flow proceeds to S3015.

In S3013, the TX performs a transmitted power changing process in response to the power transfer output change request from the RX. Then, in S3014, the TX determines whether transmitted power has been confirmed. When it is determined that transmitted power has been confirmed (S3014: YES), the process flow of resetting the maximum power consumption ends. When it is determined that transmitted power has not been confirmed (S3014: NO), the process flow proceeds to S3005 in FIG. 31.

In S3015, the TX determines whether a request for the re-calibration process has been received from the RX. The process flow proceeds to S3016 when it is determined that a request for the re-calibration process has been received (S3015: YES), and the process flow proceeds to S3017 when it is determined that a request for the re-calibration process has not been received (S3015: NO).

In S3016, the TX performs the re-calibration process along with the RX and then ends the process flow. In S3017, the TX determines whether an EPT which is an power transfer stop request has been received from the RX.

The process flow proceeds to S3018 when it is determined that an EPT has been received (S3017: YES), and the process flow proceeds to S3005 in FIG. 31 when it is determined that an EPT has not been received (S3017: NO). In S3018, the TX stops power transfer to the RX by stopping supply of electric power from the power supply unit 102 to the power transmitting unit 103 and ends the process flow.

In the present embodiment, when it is not easy to identify which of a foreign object and device breakdown a system error during wireless power transfer is based on, it is possible to perform appropriate power transfer control (which includes stopping of power transfer, limiting of electric power, or resetting of electric power).

[Other embodiments]

The present disclosure can also be realized by a process in which a program for realizing one or more functions of the aforementioned embodiments is provided to a system or a device via a network or a storage medium and one or more processors in a computer of the system or the device reads and executes the program. The present disclosure can also be realized by a circuit (for example, an ASIC) for realizing one or more functions.

While the present invention has been described above in detail in conjunction with exemplary embodiments thereof, the present invention is not limited to the embodiments and can be modified in various forms on the basis of the gist of the present invention, which are not excluded from the scope of the present invention. The present invention includes combinations of the plurality of embodiments.

(Cross-reference to related application)

Priority is claimed on Japanese Patent Application No. 2022-132613, filed August 23, 2022. The content of this Japanese Patent Application is incorporated herein by reference.

**Claims**

1.  A power reception device comprising:

    power receiving means configured to wirelessly receive power from a power transmission device;
    communication means configured to communicate with the power transmission device; and
    control means configured to perform control for transmitting a first request for change or maintenance of a power transfer output for the power transmission device via the communication means,
    wherein the control means performs control for transmitting a second request for change in power transfer control to the power transmission device via the communication means in a case where the first request for increase of the power transfer output of the power transmission device has been transmitted to the power transmission device a predetermined number of times or more or continuously for a predetermined time or longer.

2.  The power reception device according to claim 1, wherein the first request is transmitted using a signal associated with change or maintenance of a reception voltage, a reception current, or a received power of the power receiving means, and the signal includes difference information indicating a difference between a current operating point and a target operating point of the power reception device.

3.  The power reception device according to claim 1, wherein the second request is a request for change to first power transfer control for stopping power transfer from the power transmission device, second power transfer control for limiting power transfer from the power transmission device, or third power transfer control for resetting electric power consumption in the power reception device.

4.  The power reception device according to claim 3, wherein a maximum electric power consumption in the power reception device is limited in the second power transfer control.

5.  The power reception device according to claim 3, wherein the second request includes information indicating a reason for the first power transfer control.

6.  The power reception device according to claim 2, wherein the control means continues to receive power by performing control for transmitting the first request in which the difference information is zero or a negative value to the power transmission device.

7.  The power reception device according to claim 2, wherein the control means determines the difference information based on received power information of the power receiving means.

8.  The power reception device according to claim 7, wherein the control means performs control for transmitting the first request for an increase in power transfer output of the power transmission device, which is determined in a case where a value of the received power information is less than a threshold value, using the communication means.

9. A power transmission device that is able to wirelessly transmit power to a power reception device including a power receiving means configured to wirelessly receive power from a power transmission device, communication means configured to communicate with the power transmission device, and control means configured to perform control for transmitting a first request for change or maintenance of a power transfer output for the power transmission device via the communication means, wherein the control means performs control for transmitting a second request for change in power transfer control to the power transmission device via the communication means in a case where the first request for increase of the power transfer output of the power transmission device has been transmitted to the power transmission device a predetermined number of times or more or continuously for a predetermined time or longer, the power transmission device comprising:

communication means configured to communicate with the power reception device; and
control means configured to perform change to power transfer control corresponding to the second request in a case where the second request is received from the power reception device by the communication means.

10. A wireless power transfer system comprising:

power reception device including power receiving means configured to wirelessly receive electric power from a power transmission device; communication means configured to communicate with the power transmission device; and control means configured to perform control for transmitting a first request for change or maintenance of an power transfer output for the power transmission device via the communication means, wherein the control means performs control for transmitting a second request for change in power transfer control to the power transmission device via the communication means in a case where the first request for increase of the power transfer output of the power transmission device has been transmitted to the power transmission device a predetermined number of times or more or continuously for a predetermined time or longer; and
a power transmission device including communication means configured to communicate with the power reception device and control means configured to perform change to power transfer control corresponding to the second request in a case where the second request is received from the power reception device by the communication means.

11. The wireless power transfer system according to claim 10, further comprising measurement means configured to measure a coupling state index indicating an electromagnetic coupling state between a transmission antenna of the power transmission device and a reception antenna of the power reception device,
wherein a process of changing power transfer control is performed in response to the second request based on a result of comparison between the coupling state index measured by the measurement means and a threshold value thereof.

12. The wireless power transfer system according to claim 11, wherein the power transmission device performs first power transfer control for stopping power transfer in response to the second request from the power reception device in a case where the measured value of the coupling state index is equal to or greater than the threshold value.

13. The wireless power transfer system according to claim 11, wherein the power transmission device performs second power transfer control for limiting power transfer from the power transmission device and continuing to transmit power in response to the second request from the power reception device in a case where a measured value of the coupling state index is less than the threshold value.

14. The wireless power transfer system according to claim 11, further comprising detection means configured to detect an object different from the power transmission device and the power reception device,

wherein the power reception device requests the power transmission device to detect an object by the detection means in a case where the measured value of the coupling state index is less than the threshold value, and
wherein the power reception device transmits the second request for change to third power transfer control for resetting an e power consumption to the power transmission device in a case where it is determined that an object has not been detected by the detection means.

15. The wireless power transfer system according to claim 11, further comprising detection means configured to detect an object different from the power transmission device and the power reception device,

wherein the power reception device requests the power transmission device to detect an object by the detection means in a case where the measured value of the coupling state index is less than the threshold value,

wherein the power reception device or the power transmission device performs a process of notifying of misalignment of the power reception device from the power transmission device when it is determined that an object has not been detected by the detection means, and

wherein the power reception device transmits the second request for change to second power transfer control for limiting power transfer from the power transmission device and continuing to transmit power to the power transmission device in a case where it is determined that an object has not been detected by the detection means.

16. The wireless power transfer system according to claim 11, further comprising detection means configured to detect an object different from the power transmission device and the power reception device,

wherein the power reception device requests the power transmission device to detect an object by the detection means in a case where the measured value of the coupling state index is less than the threshold value, and

wherein the power reception device transmits the second request for change to first power transfer control for stopping power transfer from the power transmission device to the power transmission device in a case where it is determined that an object has not been detected by the detection means.

17. The wireless power transfer system according to claim 11, further comprising detection means configured to detect an object different from the power transmission device and the power reception device,

wherein the power reception device requests the power transmission device to detect an object using the detection means in a case where the measured value of the coupling state index is less than the threshold value,

wherein the power reception device or the power transmission device performs a process of notifying of detection of an object in a case where it is determined that an object has been detected by the detection means, and

wherein the power reception device transmits the second request for change to second power transfer control for limiting power transfer from the power transmission device and continuing to transmit power to the power transmission device in a case where it is determined that an object has been detected by the detection means.

18. The wireless power transfer system according to claim 11, further comprising a detection means configured to detect an object different from the power transmission device and the power reception device,

wherein the power reception device requests the power transmission device to detect an object by the detection means in a case where the measured value of the coupling state index is less than the threshold value,

wherein the power reception device or the power transmission device performs a process of notifying of detection of an object in a case where it is determined that an object has been detected by the detection means, and

wherein the power reception device transmits the second request for change to first power transfer control for stopping power transfer from the power transmission device to the power transmission device in a case where it is determined that an object has been detected by the detection means.

19. The wireless power transfer system according to claim 11, further comprising:

first detection means configured to detect an object different from the power transmission device and the power reception device; and

second detection means configured to detect an object using a method different from that of the first detection means,

wherein the power reception device requests the power transmission device to detect an object by the first detection means in a case where the measured value of the coupling state index is less than the threshold value,

wherein the power reception device requests the power transmission device to detect an object by the second detection means in a case where an object has been detected by the first detection means, and

wherein the power reception device transmits the second request for change to first power transfer control for stopping power transfer from the power transmission device to the power transmission device in a case where it is determined that an object has not been detected by the second detection means.

20. The wireless power transfer system according to claim 11, further comprising:

first detection means configured to detect an object different from the power transmission device and the power reception device; and

second detection means configured to detect an object using a method different from that of the first detection means,

wherein the power reception device requests the power transmission device to detect an object by the first detection means in a case where the measured value of the coupling state index is less than the threshold value, wherein the power reception device requests the power transmission device to detect an object by the second detection means in a case where the object has been detected by the first detection means, wherein the power reception device or the power transmission device performs a process of notifying of detection of an object in a case where it is determined that an object has been detected by the second detection means, and wherein the power reception device transmits the second request for change to second power transfer control for limiting power transfer from the power transmission device and continuing to transmit electric power to the power transmission device in a case where it is determined that an object has been detected by the second detection means.

21. The wireless power transfer system according to claim 19, wherein the first detection means performs detection of an object based on a power loss between the power transmission device and the power reception device, and wherein the second detection means performs detection of an object through measurement associated with a quality factor of a transmission antenna of the power transmission device.

22. A communication method for a power reception device that is able to receive power from a power transmission device through wireless power transfer, the communication method comprising:

a step of transmitting a first request for change or maintenance of a power transfer output for the power transmission device; and
a step of transmitting a second request for change in power transfer control to the power transmission device in a case where the first request for increase of the power transfer output of the power transmission device has been transmitted to the power transmission device a predetermined number of times or more or continuously for a predetermined time or longer.

23. A wireless power transfer method of transmitting power from an power transmission device to a power reception device, the wireless power transfer method comprising:

a step of causing the power reception device to transmit a first request for change or maintenance of an power transfer output for the power transmission device;
a step of causing the power reception device to transmit a second request for change in power transfer control to the power transmission device in a case where the first request for increase of the power transfer output of the power transmission device has been transmitted from the power reception device to the power transmission device a predetermined number of times or more or continuously for a predetermined time or longer; and
a step of causing the power transmission device to perform change to power transfer control corresponding to the second request received from the power reception device.

24. A computer program causing a computer to perform:

a step of transmitting a first request for change or maintenance of a power transfer output for a power transmission device performing wireless power transfer; and
a step of transmitting a second request for change in power transfer control to the power transmission device in a case where the first request for increase of the power transfer output of the power transmission device has been transmitted to the power transmission device a predetermined number of times or more or continuously for a predetermined time or longer.

## FIG. 1

400

200 — ELECTRIC POWER RECEPTION DEVICE

300 — CHARGING CRADLE

POWER TRANSMISSION DEVICE — 100

FIG. 2

# FIG. 3

EP 4 580 001 A1

FIG. 4

FIG. 5

101

301
COMMUNICATION
CONTROL UNIT

303
MEASUREMENT UNIT

302
POWER TRANSFER
CONTROL UNIT

304
SETTING UNIT

305
STATE DETECTING UNIT

FIG. 6

201

701
COMMUNICATION
CONTROL UNIT

703
MEASUREMENT UNIT

702
ELECTRIC POWER
RECEPTION CONTROL
UNIT

704
SETTING UNIT

706
DETERMINATION UNIT

705
STATE DETECTING UNIT

FIG. 7

FIG. 8

FIG. 9

## FIG. 10A

## FIG. 10B

FIG. 11

FIG. 12A

FIG. 12B

## FIG. 13

TX                      RX

F501 — Analog Ping

Analog Ping

F502 PLACEMENT

F503

DETECTION OF PLACEMENT F504

F505

Digital Ping

F506 DETECTION OF PLACEMENT

F507 — EXCHANGE OF IDENTIFICATION AND SERVICEABILITY INFORMATION

F508 — DETERMINATION OF GP (=5W)

F1301 SETTING OF MAXIMUM POWER CONSUMPTION

REQUEST FOR CHANGE IN POWER TRANSFER OUTPUT CEV(+)

CHANGE OF TRANSMITTED POWER OUTPUT (+) — F1303

F1302

F1304 PROCESS OF DETERMINING NUMBER OF TIMES OF CEV(+) TRANSMISSION AND CEV(+) TRANSMISSION TIME

REQUEST FOR CHANGE IN POWER TRANSFER OUTPUT CEV(+)

CHANGE OF TRANSMITTED POWER OUTPUT (+) — F1306

F1305

F1307 PROCESS OF DETERMINING NUMBER OF TIMES OF CEV(+) TRANSMISSION AND CEV(+) TRANSMISSION TIME

REQUEST FOR STOP OF POWER TRANSFER (EPT PACKET)

F1308

STOP OF POWER TRANSFER — F1309

## FIG. 14

```
                    ( START )
                        │
                        ▼
        ┌───────────────────────────────────┐  ╭── S1401
        │   SET MAXIMUM POWER CONSUMPTION    │
        └───────────────────────────────────┘
                        │
                        ▼
            ╱─────────────────────╲            ╭── S1402
     YES   ╱    HAS SETTING OF TARGET    ╲
   ◄──────◄  ELECTRIC POWER BEEN COMPLETED? ╲
            ╲─────────────────────╱
                        │ NO
                        ▼
        ┌───────────────────────────────────┐  ╭── S1403
        │ START TIMER & RESET TRANSMISSION   │
        │            COUNTER                 │
        └───────────────────────────────────┘
                        │
                        ▼
        ┌───────────────────────────────────┐  ╭── S1404
        │ REQUEST CHANGE OF POWER TRANSFER   │
        │     OUTPUT (TRANSMIT CEV)          │
        └───────────────────────────────────┘
                        │
                        ▼
            ╱─────────────────────────╲        ╭── S1405
           ╱      HAS CEV(+) OF VALUE      ╲    NO
          ╱ GREATER THAN PREDETERMINED THRESHOLD VALUE ╲──►
           ╲       BEEN TRANSMITTED?      ╱
            ╲─────────────────────────╱
                        │ YES
                        ▼
        ┌───────────────────────────────────┐  ╭── S1406
        │  INCREMENT TRANSMISSION COUNTER BY +1 │
        └───────────────────────────────────┘
                        │
                        ▼
            ╱─────────────────────────╲        ╭── S1407
           ╱    HAS CEV(+) BEEN TRANSMITTED   ╲  YES
          ╱ PREDETERMINED NUMBER OF TIMES OR MORE? ╲──►
            ╲─────────────────────────╱
                        │ NO
                        ▼
            ╱─────────────────────────╲        ╭── S1408
     NO    ╱    HAS CEV(+) BEEN TRANSMITTED   ╲
   ◄──────◄  FOR PREDETERMINED TIME OR LONGER? ╲
            ╲─────────────────────────╱
                        │ YES
                        ▼
        ┌───────────────────────────────────┐  ╭── S1409
        │ TRANSMIT POWER TRANSFER STOP REQUEST PACKET │
        │        (EPT WITH REASON)           │
        └───────────────────────────────────┘
                        │
                        ▼
                    ( END )
```

# FIG. 15

TX          RX

F501 — Analog Ping
⋮
Analog Ping

F502 PLACEMENT
F503

DETECTION OF PLACEMENT F504 — Digital Ping

F505
F506 DETECTION OF PLACEMENT

F507 — | EXCHANGE OF IDENTIFICATION AND SERVICEABILITY INFORMATION |

F508 — | DETERMINATION OF GP (=5W) |

F1301 — | SETTING OF MAXIMUM POWER CONSUMPTION |

REQUEST FOR CHANGE IN POWER TRANSFER OUTPUT CEV(+)

CHANGE OF TRANSMITTED POWER OUTPUT (+) — F1303

F1302   F1304

| PROCESS OF DETERMINING NUMBER OF TIMES OF CEV(+) TRANSMISSION AND CEV(+) TRANSMISSION TIME |

REQUEST FOR CHANGE IN POWER TRANSFER OUTPUT CEV(+)

CHANGE OF TRANSMITTED POWER OUTPUT (+) — F1306

F1305   F1307

| PROCESS OF DETERMINING NUMBER OF TIMES OF CEV(+) TRANSMISSION AND CEV(+) TRANSMISSION TIME |

⋮

REQUEST FOR CHANGE IN POWER TRANSFER OUTPUT (CEV(0) OR CEV(−))

CHANGE OF TRANSMITTED POWER OUTPUT (0/−) — F1502

F1501

F1503 — | CHANGE OF SETTING OF MAXIMUM POWER CONSUMPTION (DECREASE OR SET RECEIVED POWER VALUE CURRENTLY RECEIVED) |

ELECTRIC POWER TRANSMISSION STATE — F1504

F1505 — | CONTINUATION OF ELECTRIC POWER RECEPTION WITH ADJUSTED ELECTRIC POWER |

F1506 ELECTRIC POWER RECEPTION STATE

FIG. 16

```
                    ┌─────────────┐
                    │    START    │
                    └──────┬──────┘
                           ▼
        ┌──────────────────────────────────────┐      S1401
        │     SET MAXIMUM POWER CONSUMPTION     │
        └──────────────────┬───────────────────┘
                           ▼                            S1402
              ╱─────────────────────────╲
    YES      ╱   HAS SETTING OF TARGET    ╲
   ◄────────◄  ELECTRIC POWER BEEN COMPLETED? ╲
              ╲                             ╱
               ╲───────────┬───────────────╱
                        NO │
                           ▼
        ┌──────────────────────────────────────┐      S1403
        │ START TIMER & RESET TRANSMISSION COUNTER │
        └──────────────────┬───────────────────┘
                           ▼
        ┌──────────────────────────────────────┐      S1404
        │ REQUEST CHANGE OF POWER TRANSFER OUTPUT (TRANSMIT CEV) │
        └──────────────────┬───────────────────┘
                           ▼                            S1405
              ╱─────────────────────────╲
             ╱    HAS CEV(+) OF VALUE      ╲       NO
             ╲ GREATER THAN PREDETERMINED THRESHOLD VALUE ╲────►
             ╲      BEEN TRANSMITTED?      ╱
               ╲───────────┬───────────────╱
                       YES │
                           ▼
        ┌──────────────────────────────────────┐      S1406
        │    INCREMENT TRANSMISSION COUNTER BY +1 │
        └──────────────────┬───────────────────┘
                           ▼                            S1407
              ╱─────────────────────────╲
             ╱      HAS CEV(+) BEEN        ╲      YES
             ╲ TRANSMITTED PREDETERMINED NUMBER OF ╲────►
             ╲      TIMES OR MORE?         ╱
               ╲───────────┬───────────────╱
                        NO │
                           ▼                            S1408
              ╱─────────────────────────╲
    NO       ╱  HAS CEV(+) BEEN TRANSMITTED FOR ╲
   ◄────────◄  PREDETERMINED TIME OR LONGER?     ╲
             ╲                             ╱
               ╲───────────┬───────────────╱
                       YES │
                           ▼
        ┌──────────────────────────────────────┐      S1601
        │  CHANGE CEV(0) OR CEV(-) AND TRANSMIT CE │
        └──────────────────┬───────────────────┘
                           ▼
        ┌──────────────────────────────────────┐      S1602
        │      CHANGE MAXIMUM POWER CONSUMPTION  │
        └──────────────────┬───────────────────┘
                           ▼
        ┌──────────────────────────────────────┐      S1603
        │ CONTINUE TO RECEIVE ELECTRIC POWER WITH ADJUSTED ELECTRIC │
        │    POWER (LIMIT ELECTRIC POWER TRANSMISSION) │
        └──────────────────┬───────────────────┘
                           ▼
                    ┌─────────────┐
                    │     END     │
                    └─────────────┘
```

## FIG. 17

TX          RX

F501 — Analog Ping →

Analog Ping →

Analog Ping →   — F502   PLACEMENT

— F503

DETECTION OF PLACEMENT   F504 — Digital Ping →   — F505

— F506   DETECTION OF PLACEMENT

F507 — | EXCHANGE OF IDENTIFICATION AND SERVICEABILITY INFORMATION |

F508 — | DETERMINATION OF GP (=5W) |

F1301 — | SETTING OF MAXIMUM POWER CONSUMPTION |

F1701 — | MEASUREMENT OF RX-SIDE RECEPTION VOLTAGE Vrect |

REQUEST FOR CHANGE IN POWER TRANSFER OUTPUT CEV(+) — F1302

CHANGE OF TRANSMITTED POWER OUTPUT (+) — F1303

F1304 — | PROCESS OF DETERMINING NUMBER OF TIMES OF CEV TRANSMISSION AND CEV TRANSMISSION TIME |

F1702 — | MEASUREMENT OF RX-SIDE RECEPTION VOLTAGE Vrect |

REQUEST FOR CHANGE IN POWER TRANSFER OUTPUT CEV(+) — F1305

CHANGE OF TRANSMITTED POWER OUTPUT (+) — F1306

F1307 — | PROCESS OF DETERMINING NUMBER OF TIMES OF CEV TRANSMISSION AND CEV TRANSMISSION TIME |

F1703 — | MEASUREMENT OF RX-SIDE RECEPTION VOLTAGE Vrect |

REQUEST FOR STOP OF POWER TRANSFER (EPT PACKET) — F1308

STOP OF POWER TRANSFER — F1309

## FIG. 18

```
                        START

                SET MAXIMUM POWER CONSUMPTION          S1401

        YES                                            S1402
    ┌──────────────  HAS SETTING OF
    │               TARGET ELECTRIC POWER BEEN
    │               COMPLETED?
    │                        │ NO
    │               START TIMER & RESET TRANSMISSION COUNTER   S1403
    │
    │         ┌──────────────────────┐
    │         ▼
    │               MEASURE RECEPTION VOLTAGE Vrect   S1801
    │
    │               REQUEST CHANGE OF POWER TRANSFER OUTPUT (TRANSMIT CEV)   S1404
    │
    │                                                  S1405
    │               HAS CEV(+) OF VALUE                          NO
    │         ◄─── GREATER THAN PREDETERMINED THRESHOLD VALUE ───┐
    │               BEEN TRANSMITTED?                            │
    │                        │ YES                               │
    │               INCREMENT TRANSMISSION COUNTER BY +1   S1406 │
    │                                                            │
    │                                                  S1407     │
    │               HAS CEV(+) BEEN TRANSMITTED PREDETERMINED  YES│
    │         ◄─── NUMBER OF TIMES OR MORE? ───┐                 │
    │                        │ NO              │                 │
    │         NO                               S1408             │
    │    ◄────── HAS CEV(+) BEEN TRANSMITTED                     │
    │           FOR PREDETERMINED TIME OR LONGER?               │
    │                        │ YES            ◄──────────────────┘
    │               TRANSMIT POWER TRANSFER STOP REQUEST PACKET   S1409
    │               (EPT WITH REASON)
    │                        │
    └────────────────────────┤
                             ▼
                           END
```

## FIG. 19

TX                                                                RX

F501 {
    Analog Ping →
    →
    ⋮
    Analog Ping →

F502 PLACEMENT

Analog Ping → F503

DETECTION OF PLACEMENT F504

Digital Ping → F505

F506 DETECTION OF PLACEMENT

| F507 | EXCHANGE OF IDENTIFICATION AND SERVICEABILITY INFORMATION |
|------|----------------------------------------------------------|

| F508 | DETERMINATION OF GP (=5W) |
|------|---------------------------|

| F1301 | SETTING OF MAXIMUM POWER CONSUMPTION |
|-------|--------------------------------------|

| F1701 | MEASUREMENT OF RX-SIDE RECEPTION VOLTAGE Vrect |
|-------|------------------------------------------------|

REQUEST FOR CHANGE IN POWER TRANSFER OUTPUT CEV(+) ← F1302

CHANGE OF TRANSMITTED POWER OUTPUT (+) F1303

| F1304 | PROCESS OF DETERMINING NUMBER OF TIMES OF CEV TRANSMISSION AND CEV TRANSMISSION TIME |
|-------|-------------------------------------------------------------------------------------|

| F1702 | MEASUREMENT OF RX-SIDE RECEPTION VOLTAGE Vrect |
|-------|------------------------------------------------|

REQUEST FOR CHANGE IN POWER TRANSFER OUTPUT CEV(+) ← F1305

CHANGE OF TRANSMITTED POWER OUTPUT (+) F1306

| F1307 | PROCESS OF DETERMINING NUMBER OF TIMES OF CEV TRANSMISSION AND CEV TRANSMISSION TIME |
|-------|-------------------------------------------------------------------------------------|

| F1703 | MEASUREMENT OF RX-SIDE RECEPTION VOLTAGE Vrect |
|-------|------------------------------------------------|

⋮

REQUEST FOR CHANGE IN POWER TRANSFER OUTPUT (CEV(0) OR CEV(-)) ← F1501

CHANGE OF TRANSMITTED POWER OUTPUT (0/-) F1502

| F1503 | CHANGE OF SETTING OF MAXIMUM POWER CONSUMPTION (DECREASE OR SET RECEIVED POWER VALUE CURRENTLY RECEIVED) |
|-------|--------------------------------------------------------------------------------------------------------|

| F1505 | CONTINUATION OF ELECTRIC POWER RECEPTION WITH ADJUSTED ELECTRIC POWER |
|-------|----------------------------------------------------------------------|

ELECTRIC POWER TRANSMISSION STATE F1504

F1506 ELECTRIC POWER RECEPTION STATE

# FIG. 20

```
                    ┌──────────┐
                    │  START   │
                    └────┬─────┘
                         │
        ┌────────────────▼────────────────┐
        │   SET MAXIMUM POWER CONSUMPTION  │──S1401
        └────────────────┬────────────────┘
                         ▼◄──────────────────────────┐
YES   ◄────◇ HAS SETTING OF TARGET ELECTRIC ◇──S1402  │
      │    ◇   POWER BEEN COMPLETED?        ◇         │
      │         │ NO                                  │
      │    ┌────▼─────────────────────────────┐       │
      │    │ START TIMER & RESET TRANSMISSION  │─S1403 │
      │    │          COUNTER                  │       │
      │    └────┬─────────────────────────────┘       │
      │         ▼◄──────────────┐                      │
      │    ┌────▼──────────────┐│                      │
      │    │ MEASURE RECEPTION ││──S1801               │
      │    │  VOLTAGE Vrect    ││                      │
      │    └────┬──────────────┘│                      │
      │    ┌────▼──────────────────────────────┐       │
      │    │ REQUEST CHANGE OF POWER TRANSFER   │─S1404 │
      │    │    OUTPUT (TRANSMIT CEV)           │       │
      │    └────┬──────────────────────────────┘       │
      │         ▼                                      │
      │    ◇ HAS CEV(+) OF VALUE              ◇──S1405  │
      │    ◇ GREATER THAN PREDETERMINED       ◇── NO ──┤
      │    ◇ THRESHOLD VALUE BEEN TRANSMITTED?◇         │
      │         │ YES                                  │
      │    ┌────▼──────────────────────────────┐       │
      │    │ INCREMENT TRANSMISSION COUNTER BY+1│─S1406 │
      │    └────┬──────────────────────────────┘       │
      │         ▼                                      │
      │    ◇ HAS CEV(+) BEEN TRANSMITTED      ◇─S1407   │
      │    ◇ PREDETERMINED NUMBER OF          ◇── YES   │
      │    ◇ TIMES OR MORE?                   ◇    │    │
      │         │ NO                               │    │
      │    ◇ HAS CEV(+) BEEN TRANSMITTED FOR  ◇─S1408   │
 NO ──┴────◇ PREDETERMINED TIME OR LONGER?    ◇    │    │
                │ YES ◄────────────────────────────┘    │
        ┌───────▼──────────────────────────┐            │
        │ CHANGE CEV(0) OR CEV(-) AND       │─S1601      │
        │        TRANSMIT CE                │            │
        └───────┬──────────────────────────┘            │
        ┌───────▼──────────────────────────┐            │
        │ CHANGE MAXIMUM POWER CONSUMPTION  │─S1602      │
        └───────┬──────────────────────────┘            │
        ┌───────▼──────────────────────────┐            │
        │ CONTINUE TO RECEIVE ELECTRIC      │─S1603      │
        │ POWER WITH ADJUSTED ELECTRIC      │────────────┘
        │ POWER (LIMIT ELECTRIC POWER       │
        │ TRANSMISSION)                     │
        └───────┬──────────────────────────┘
                ▼
          ┌──────────┐
          │   END    │
          └──────────┘
```

# FIG. 21

```
            TX                                    RX        F2101
             |                                     |      ┌─/
             |                                     | ┌─────────────────────────────────────┐
             |                                     | │ WHEN RX-SIDE RECEPTION VOLTAGE Vrect │
             |                                     | │ LESS THAN PREDETERMINED THRESHOLD    │
             |                                     | │ VALUE HAS BEEN MEASURED FOR          │
             |                                     | │ PREDETERMINED TIME OR LONGER OR      │
             |                                     | │ PREDETERMINED NUMBER OF TIMES OR     │
             |                                     | │ MORE:                                │
             |                                     | └─────────────────────────────────────┘
             |                              F2102  |
             |                            ┌─/       ┌──────────────────────────────────┐
             |                                     | │  STOP OF TRANSMISSION OF CEV(+)  │
             |                                     | └──────────────────────────────────┘
   F2104─┐                           F2103        |
  ┌────────────────────────────────┐┌─/            ┌──────────────────────────────────┐
  │ MEASUREMENT OF TX-SIDE VOLTAGE │ │ MEASUREMENT OF RX-SIDE VOLTAGE FOR │
  │ FOR CALCULATING COUPLING       │ │ CALCULATING COUPLING COEFFICIENT k │
  │ COEFFICIENT k                  │ └──────────────────────────────────┘
  └────────────────────────────────┘
```

## FIG. 22

TX                                                    RX

F2101

WHEN RX-SIDE RECEPTION VOLTAGE Vrect LESS THAN PREDETERMINED THRESHOLD VALUE HAS BEEN MEASURED FOR PREDETERMINED TIME OR LONGER OR PREDETERMINED NUMBER OF TIMES OR MORE:

F2102

STOP OF TRANSMISSION OF CEV(+)

F2104

MEASUREMENT OF TX-SIDE VOLTAGE FOR CALCULATING COUPLING COEFFICIENT k

F2103

MEASUREMENT OF RX-SIDE VOLTAGE FOR CALCULATING COUPLING COEFFICIENT k

INFORMATION FOR CALCULATING COUPLING COEFFICIENT        F2105

F2106

CALCULATION OF COUPLING COEFFICIENT k

NOTIFICATION OF COUPLING COEFFICIENT k AND THRESHOLD VALUE INFORMATION        F2107

F2201

DETERMINATION OF WHETHER COUPLING COEFFICIENT k IS LESS THAN THRESHOLD VALUE
→ LESS THAN THRESHOLD VALUE

REQUEST FOR EXECUTION OF FOD        F2202

F2203

OBJECT DETERMINATION RESULT ⇒ NONE

POSITIVE RESPONSE: TRANSMISSION OF ACK (NO FO)        F2204

REQUEST FOR Re-calibration        F2205

F2206

EXECUTION OF Re-calibration PROCESS

## FIG. 23

TX | RX

F2101

WHEN RX-SIDE RECEPTION VOLTAGE Vrect LESS THAN PREDETERMINED THRESHOLD VALUE HAS BEEN MEASURED FOR PREDETERMINED TIME OR LONGER OR PREDETERMINED NUMBER OF TIMES OR MORE:

F2102

STOP OF TRANSMISSION OF CEV(+)

F2104

MEASUREMENT OF TX-SIDE VOLTAGE FOR CALCULATING COUPLING COEFFICIENT k

F2103

MEASUREMENT OF RX-SIDE VOLTAGE FOR CALCULATING COUPLING COEFFICIENT k

INFORMATION FOR CALCULATING COUPLING COEFFICIENT — F2105

F2106

CALCULATION OF COUPLING COEFFICIENT k

NOTIFICATION OF COUPLING COEFFICIENT k AND THRESHOLD VALUE INFORMATION — F2107

F2201

DETERMINATION OF WHETHER COUPLING COEFFICIENT k IS LESS THAN THRESHOLD VALUE
→ LESS THAN THRESHOLD VALUE

REQUEST FOR EXECUTION OF FOD — F2202

F2203

OBJECT DETERMINATION RESULT ⇒ NO

POSITIVE RESPONSE: TRANSMISSION OF ACK (NO FO) — F2204

F2301 NOTIFICATION

REQUEST FOR CHANGE IN POWER TRANSFER OUTPUT (CEV(0) OR CEV(-)) — F1501

CHANGE OF TRANSMITTED POWER OUTPUT (0/-) — F1502

F1503

CHANGE OF SETTING OF MAXIMUM POWER CONSUMPTION (DECREASE OR SET RECEIVED POWER VALUE CURRENTLY RECEIVED)

F1505

CONTINUATION OF ELECTRIC POWER RECEPTION WITH ADJUSTED ELECTRIC POWER

ELECTRIC POWER TRANSMISSION STATE — F1504

F1506 ELECTRIC POWER RECEPTION STATE

# FIG. 24

TX                                                                    RX

F2101

WHEN RX-SIDE RECEPTION VOLTAGE Vrect LESS THAN
PREDETERMINED THRESHOLD VALUE HAS BEEN MEASURED FOR
PREDETERMINED TIME OR LONGER OR PREDETERMINED NUMBER OF
TIMES OR MORE:

F2102

STOP OF TRANSMISSION OF CEV(+)

F2104

MEASUREMENT OF TX-SIDE VOLTAGE FOR
CALCULATING COUPLING COEFFICIENT k

F2103

MEASUREMENT OF RX-SIDE VOLTAGE FOR
CALCULATING COUPLING COEFFICIENT k

INFORMATION FOR CALCULATING COUPLING COEFFICIENT       F2105

F2106

CALCULATION OF COUPLING COEFFICIENT k

NOTIFICATION OF COUPLING COEFFICIENT k
AND THRESHOLD VALUE INFORMATION                       F2107

F2201

DETERMINATION OF WHETHER COUPLING COEFFICIENT k IS LESS
THAN THRESHOLD VALUE
→ LESS THAN THRESHOLD VALUE

REQUEST FOR EXECUTION OF FOD                          F2202

F2203

OBJECT DETERMINATION RESULT ⇒ NONE

POSITIVE RESPONSE: TRANSMISSION OF ACK (NO FO)        F2204

F2401
ASCERTAINMENT OF
ELECTRIC POWER
TRANSMISSION MODE

REQUEST FOR STOP OF POWER TRANSFER (EPT PACKET)

F1308

STOP OF POWER
TRANSFER              F1309

# FIG. 25

TX                                                                                        RX

F2101 — WHEN RX-SIDE RECEPTION VOLTAGE Vrect LESS THAN PREDETERMINED THRESHOLD VALUE HAS BEEN MEASURED FOR PREDETERMINED TIME OR LONGER OR PREDETERMINED NUMBER OF TIMES OR MORE:

F2102 — STOP OF TRANSMISSION OF CEV(+)

F2104 — MEASUREMENT OF TX-SIDE VOLTAGE FOR CALCULATING COUPLING COEFFICIENT k

F2103 — MEASUREMENT OF RX-SIDE VOLTAGE FOR CALCULATING COUPLING COEFFICIENT k

INFORMATION FOR CALCULATING COUPLING COEFFICIENT — F2105

F2106 — CALCULATION OF COUPLING COEFFICIENT k

NOTIFICATION OF COUPLING COEFFICIENT k AND THRESHOLD VALUE INFORMATION — F2107

F2201 — DETERMINATION OF WHETHER COUPLING COEFFICIENT k IS LESS THAN THRESHOLD VALUE → LESS THAN THRESHOLD VALUE

REQUEST FOR EXECUTION OF FOD — F2202

F2501 — OBJECT DETERMINATION RESULT ⇒ YES

NEGATIVE RESPONSE: TRANSMISSION OF NAK (WITH FO) — F2502

F2503 NOTIFICATION

REQUEST FOR CHANGE IN POWER TRANSFER OUTPUT (CEV(0) OR CEV(-)) — F1501

CHANGE OF TRANSMITTED POWER OUTPUT (0/-) — F1502

F1503 — CHANGE OF SETTING OF MAXIMUM POWER CONSUMPTION (DECREASE OR SET RECEIVED POWER VALUE CURRENTLY RECEIVED)

F1505 — CONTINUATION OF ELECTRIC POWER RECEPTION WITH ADJUSTED ELECTRIC POWER

ELECTRIC POWER TRANSMISSION STATE — F1504

F1506 ELECTRIC POWER RECEPTION STATE

## FIG. 26

TX                RX

F2101

WHEN RX-SIDE RECEPTION VOLTAGE Vrect LESS THAN PREDETERMINED THRESHOLD VALUE HAS BEEN MEASURED FOR PREDETERMINED TIME OR LONGER OR PREDETERMINED NUMBER OF TIMES OR MORE:

F2102

STOP OF TRANSMISSION OF CEV(+)

F2104

MEASUREMENT OF TX-SIDE VOLTAGE FOR CALCULATING COUPLING COEFFICIENT k

F2103

MEASUREMENT OF RX-SIDE VOLTAGE FOR CALCULATING COUPLING COEFFICIENT k

INFORMATION FOR CALCULATING COUPLING COEFFICIENT — F2105

F2106

CALCULATION OF COUPLING COEFFICIENT k

NOTIFICATION OF COUPLING COEFFICIENT k AND THRESHOLD VALUE INFORMATION — F2107

F2201

DETERMINATION OF WHETHER COUPLING COEFFICIENT k IS LESS THAN THRESHOLD VALUE
→ LESS THAN THRESHOLD VALUE

REQUEST FOR EXECUTION OF FOD — F2202

F2501

OBJECT DETERMINATION RESULT ⇒ YES

NEGATIVE RESPONSE: TRANSMISSION OF NAK (WITH FO) — F2502

F2601 NOTIFICATION

REQUEST FOR STOP OF POWER TRANSFER (EPT PACKET) — F1308

STOP OF POWER TRANSFER — F1309

## FIG. 27

TX                                                    RX

F2101 — WHEN RX-SIDE RECEPTION VOLTAGE Vrect LESS THAN PREDETERMINED THRESHOLD VALUE HAS BEEN MEASURED FOR PREDETERMINED TIME OR LONGER OR PREDETERMINED NUMBER OF TIMES OR MORE:

F2102 — STOP OF TRANSMISSION OF CEV(+)

F2104 — MEASUREMENT OF TX-SIDE VOLTAGE FOR CALCULATING COUPLING COEFFICIENT k

F2103 — MEASUREMENT OF RX-SIDE VOLTAGE FOR CALCULATING COUPLING COEFFICIENT k

INFORMATION FOR CALCULATING COUPLING COEFFICIENT   F2105

F2106 — CALCULATION OF COUPLING COEFFICIENT k

NOTIFICATION OF COUPLING COEFFICIENT k AND THRESHOLD VALUE INFORMATION   F2107

F2201 — DETERMINATION OF WHETHER COUPLING COEFFICIENT k IS LESS THAN THRESHOLD VALUE → LESS THAN THRESHOLD VALUE

REQUEST FOR EXECUTION OF FOD   F2202

F2501 — OBJECT DETERMINATION RESULT ⇒ YES

NEGATIVE RESPONSE: TRANSMISSION OF NAK (WITH FO)   F2502

F2701 — MEASUREMENT OF Q-factor

REQUEST FOR EXECUTION OF FOD2   F2702

F2703 — OBJECT DETERMINATION RESULT ⇒ NO

POSITIVE RESPONSE: TRANSMISSION OF ACK (NO FO)   F2704

REQUEST FOR STOP OF POWER TRANSFER (EPT PACKET)   F1308

STOP OF POWER TRANSFER ● F1309

## FIG. 28

TX               RX

F2101

WHEN RX-SIDE RECEPTION VOLTAGE Vrect LESS THAN PREDETERMINED THRESHOLD VALUE HAS BEEN MEASURED FOR PREDETERMINED TIME OR LONGER OR PREDETERMINED NUMBER OF TIMES OR MORE:

F2102

STOP OF TRANSMISSION OF CEV(+)

F2104

MEASUREMENT OF TX-SIDE VOLTAGE FOR CALCULATING COUPLING COEFFICIENT k

F2103

MEASUREMENT OF RX-SIDE VOLTAGE FOR CALCULATING COUPLING COEFFICIENT k

INFORMATION FOR CALCULATING COUPLING COEFFICIENT    F2105

F2106

CALCULATION OF COUPLING COEFFICIENT k

NOTIFICATION OF COUPLING COEFFICIENT k AND THRESHOLD VALUE INFORMATION    F2107

F2201

DETERMINATION OF WHETHER COUPLING COEFFICIENT k IS LESS THAN THRESHOLD VALUE
→ LESS THAN THRESHOLD VALUE

REQUEST FOR EXECUTION OF FOD    F2202

F2501

OBJECT DETERMINATION RESULT ⇒ YES

NEGATIVE RESPONSE: TRANSMISSION OF NAK (WITH FO)    F2502

F2701

MEASUREMENT OF Q-factor

REQUEST FOR EXECUTION OF FOD2    F2702

F2801

OBJECT DETERMINATION RESULT ⇒ YES

NEGATIVE RESPONSE: TRANSMISSION OF NAK (WITH FO)    F2802

F2503 NOTIFICATION

REQUEST FOR CHANGE IN POWER TRANSFER OUTPUT (CEV(0) OR CEV(-))    F1501

CHANGE OF TRANSMITTED POWER OUTPUT (0/-)    F1502

F1503

CHANGE OF SETTING OF MAXIMUM POWER CONSUMPTION (DECREASE OR SET RECEIVED POWER VALUE CURRENTLY RECEIVED)

ELECTRIC POWER TRANSMISSION STATE    F1504

F1505

CONTINUATION OF ELECTRIC POWER RECEPTION WITH ADJUSTED ELECTRIC POWER

F1506 ELECTRIC POWER RECEPTION STATE

# FIG. 29

```
        ┌─────────────────────┐
        │ DURING ELECTRIC POWER │
        │     RECEPTION         │
        └──────────┬──────────┘
                   │
                   ▼              ┌─ S1401
        ┌──────────────────────────────┐
        │  SET MAXIMUM POWER CONSUMPTION │
        └──────────┬───────────────────┘
                   │ ◄───────────────────────────────┐
                   ▼              ┌─ S1402             │
              ╱─────────────────────────╲             │
   YES  ◄────╱  HAS SETTING OF TARGET ELECTRIC ╲       │
            ╲   POWER BEEN COMPLETED?      ╱            │
              ╲─────────────────────────╱              │
                   │ NO                                │
                   ▼              ┌─ S2900             │
        ┌──────────────────────────────────────────┐  │
        │ TRANSMIT REQUEST FOR ELECTRIC POWER CHECK │  │
        │ (Vrect) & CHANGE IN POWER TRANSFER OUTPUT │  │
        └──────────┬───────────────────────────────┘  │
                   │              ┌─ S1405             │
                   ▼                                   │
              ╱──────────────────────────╲             │
             ╱   HAS CEV(+) OF VALUE        ╲  NO       │
            ╱ GREATER THAN PREDETERMINED THRESHOLD ─────┘
            ╲ VALUE BEEN TRANSMITTED?     ╱
              ╲──────────────────────────╱
                   │ YES          ┌─ S2901
                   ▼
        ┌──────────────────────────────────────┐
        │ PERFORM PROCESS OF CHECKING CHANGE IN │
        │  POWER TRANSFER OUTPUT (S1406~S1408)  │
        └──────────┬───────────────────────────┘
                   │              ┌─ S2902
                   ▼
        ┌──────────────────────────────────────┐
        │ NOTIFY ELECTRIC POWER TRANSMISSION    │
        │ DEVICE OF INFORMATION OF COUPLING     │
        │ COEFFICIENT "k"                       │
        └──────────┬───────────────────────────┘
                   │              ┌─ S2903
                   ▼
              ╱──────────────────────────╲
   YES  ◄────╱   IS "k" EQUAL TO OR GREATER ╲
            ╲   THAN THRESHOLD VALUE?      ╱
              ╲──────────────────────────╱
                   │ NO           ┌─ S2904
                   ▼
        ┌──────────────────────────────────────┐
        │ REQUEST ELECTRIC POWER TRANSMISSION   │
        │ DEVICE TO EXECUTE FOD1                │
        └──────────┬───────────────────────────┘
                   │
         (A)      (B)            (C)
```

FIG. 30

## FIG. 31

DURING ELECTRIC POWER
TRANSMISSION

S3001
MEASURE TX-SIDE VOLTAGE TO CALCULATE VALUE OF
COUPLING COEFFICIENT "k"

S3002
HAS REQUEST FOR
MEASUREMENT OF COUPLING COEFFICIENT k
BEEN RECEIVED? — NO

YES

S3003
CALCULATE VALUE OF COUPLING COEFFICIENT "k" AND
THRESHOLD VALUE OF k

S3004
NOTIFY ELECTRIC POWER RECEPTION DEVICE OF
INFORMATION OF COUPLING COEFFICIENT k

D

S3005
HAS MESSAGE BEEN RECEIVED? — NO

YES

S3006
REQUEST FOR DETECTION OF
FOREIGN SUBSTANCE? — NO

E

YES

S3007
EXECUTE DESIGNATED FOD

S3008
IS THERE FOREIGN SUBSTANCE? — NO

YES

S3009
RETURN NAK

S3011
RETURN ACK

S3010
IS IT READY TO MEASURE FOD2? — NO

F

YES

S3019
PERFORM PREPARATION FOR MEASUREMENT OF
THRESHOLD VALUE OF ANOTHER FOD AND MEASUREMENT

FIG. 32

## INTERNATIONAL SEARCH REPORT

International application No.

**PCT/JP2023/028744**

| A. | CLASSIFICATION OF SUBJECT MATTER |
|---|---|

***H02J 50/80***(2016.01)i; ***H02J 7/00***(2006.01)i; ***H02J 50/12***(2016.01)i; ***H02J 50/60***(2016.01)i
FI: H02J50/80; H02J7/00 301D; H02J50/12; H02J50/60

According to International Patent Classification (IPC) or to both national classification and IPC

| B. | FIELDS SEARCHED |
|---|---|

Minimum documentation searched (classification system followed by classification symbols)

H02J50/80; H02J7/00; H02J50/12; H02J50/60

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2014-217116 A (PANASONIC INTELLECTUAL PROPERTY CORPORATION OF AMERICA) 17 November 2014 (2014-11-17) paragraphs [0015]-[0042], fig. 1-4 | 1-3, 6-10, 22-24 |
| Y | | 4-5 |
| A | | 11-21 |
| Y | JP 2020-182355 A (CANON KK) 05 November 2020 (2020-11-05) paragraph [0041] | 4 |
| A | | 11-21 |
| Y | JP 2020-188634 A (CANON KK) 19 November 2020 (2020-11-19) paragraphs [0048]-[0050], fig. 7 | 5 |
| A | | 11-21 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **19 September 2023** | **03 October 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT
### Information on patent family members

International application No.

**PCT/JP2023/028744**

| Patent document cited in search report | | | Publication date (day/month/year) | Patent family member(s) | Publication date (day/month/year) |
|---|---|---|---|---|---|
| JP | 2014-217116 | A | 17 November 2014 | (Family: none) | |
| JP | 2020-182355 | A | 05 November 2020 | US 2022/0045553 A1 paragraph [0058] EP 3961858 A1 KR 10-2021-0151966 A CN 113785469 A | |
| JP | 2020-188634 | A | 19 November 2020 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2022132613 A